(19) Europäisches Patentamt
European Patent Office
Office européen des brevets

(11) **EP 4 407 897 B1**

(12) **FASCICULE DE BREVET EUROPEEN**

(45) Date de publication et mention
de la délivrance du brevet:
**29.10.2025   Bulletin 2025/44**

(21) Numéro de dépôt: **24154028.5**

(22) Date de dépôt: **25.01.2024**

(51) Classification Internationale des Brevets (IPC):
***H04B 10/70*** *(2013.01)*

(52) Classification Coopérative des Brevets (CPC):
**H04B 10/70**

(54) **TRANSMISSION D'UN MESSAGE PAR COMMUNICATION QUANTIQUE AVEC DÉTECTION D'ÉCOUTE**

ÜBERTRAGUNG EINER NACHRICHT DURCH QUANTENKOMMUNIKATION MIT ABHÖRERKENNUNG

QUANTUM COMMUNICATION MESSAGE TRANSMISSION WITH HEARING DETECTION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **26.01.2023   FR 2300741**

(43) Date de publication de la demande:
**31.07.2024   Bulletin 2024/31**

(73) Titulaire: **Marbeuf Conseil et Recherche
75009 Paris (FR)**

(72) Inventeur: **SANGLE-FERRIERE, Bruno
75016 paris (FR)**

(74) Mandataire: **Ipsilon
Le Centralis
63, avenue du Général Leclerc
92340 Bourg-la-Reine (FR)**

(56) Documents cités:
• HAO QIN NATIONAL UNIVERSITY OF SINGAPORE SINGAPORE: "Draft D2.3 Technical Report on quantum key distribution network (QKDN) protocols part 1: Quantum layer (output of 9th FG-QIT4N meeting);QIT4N-O-102", vol. qit4n, 17 August 2021 (2021-08-17), pages 1 - 42, XP044318935, Retrieved from the Internet <URL:https://extranet.itu.int/sites/itu-t/focusgroups/qit4n/output/QIT4N-O-102.docx> [retrieved on 20210817]

## Description

### Domaine technique

La présente invention concerne des procédés de transmission d'un message par communication quantique avec détection d'écoute, et plus particulièrement des procédés de transmission d'un message par communication quantique utilisant des photons intriqués avec détection d'écoute par cryptographie.

### Technique antérieure

### <u>Cryptographie</u>

Les ordinateurs et appareils électroniques sont souvent connectés à un réseau, physiquement, sans fil, par RFID, ou par tout autre moyen sécurisé ou non, et doivent parfois pouvoir connaître l'identité de l'appareil qui leur a envoyé certaines données, par exemple pour s'assurer que ces données n'ont pas été transmises par un autre appareil, qui les a interceptées et modifiées avant de les renvoyer au destinataire légitime, ou tout simplement pour identifier sans l'ombre d'un doute l'identité de l'expéditeur des données, qui est par exemple une automobile sur un réseau routier ou une étiquette RFID portée par un concurrent lors d'un événement sportif, ou une liste de bits générés aléatoirement par un Dispositif générateur de Clés Quantiques (QKD), ou pour toute autre raison pour laquelle l'identité de l'expéditeur des données est importante pour le destinataire.

Les dispositifs générateurs de Clés Quantiques utilisent souvent des signatures électroniques échangées entre deux parties distantes recevant une clé générée aléatoirement pour s'assurer que la clé reçue est la même pour chaque partie. Toutefois, les progrès de l'informatique quantique et/ou de la cryptographie peuvent rendre possible la récupération des clés utilisées pour la signature électronique de clés reçues, cela permettant de partager la clé supposée secrète entre un dispositif légitime et un dispositif non légitime sans que le dispositif légitime s'en aperçoive.

Les données transmises peuvent être envoyées entièrement cryptées à l'aide d'une clé affectée à l'expéditeur. Cependant, le cryptage de la totalité des données rend difficile l'utilisation de clés à usage unique (clés bloc une fois). Plus précisément, le cryptage de la totalité des données est un procédé qui utilise des clés aussi longues que les données qu'elles cryptent, et ces clés doivent être renouvelées après utilisation.

Il est donc nécessaire que les ordinateurs ou autres dispositifs électroniques entrant en communication, par exemple par échange de texte, d'identifiants, de nombres, de programmes informatiques, d'images ou de codes vidéo ou audio, vérifient l'identité du dispositif émetteur en utilisant le cryptage d'une quantité de données inférieure à la quantité de données envoyées. C'est pour cette raison que l'on utilise une signature électronique consistant à crypter un hachage (hash) des données. Le terme de "hachage" est utilisé pour désigner le résultat d'une fonction de hachage qui, sur la base d'une donnée initiale fournie en entrée, calcule une empreinte digitale servant à identifier rapidement, bien que de manière incomplète, la donnée initiale. Il est courant d'envoyer, avec les données, un hachage crypté qui sera ensuite décrypté par le destinataire, puis comparé au hachage des données reçues. MD5, SHA1 et SHA256 sont des algorithmes classiquement utilisés pour ces opérations de hachage. Cependant, les hachages de données sont généralement de taille beaucoup plus petite que les données initiales, et il peut être possible de créer d'autres données, semblables mais légèrement différentes des données initiales, dont le hachage est égal au hachage des données initiales. Ces données pourraient donc être substituées aux données initiales, sans qu'elles soient rejetées par la procédure de vérification du hachage. Il est possible de substituer des données de type quelconque, mais la détectabilité par l'utilisateur de la substitution diminue à mesure que la complexité des données augmente (un long texte, un fichier audio, une photo ou une vidéo). Pour effectuer la substitution, il n'est même pas nécessaire de décrypter le hachage crypté. Il suffit de calculer le hachage des données initiales. En outre, des fonctions de hachage telles que MD5 et SHA1 sont des fonctions de hachage qui sont actuellement relativement faciles à contourner.

Les ordinateurs quantiques en cours de développement devraient bientôt être capables de contourner la sécurité assurée par les fonctions de hachage, puisqu'ils sont capables d'optimiser les fichiers de départ de telle façon qu'ils aient un hachage prédéfini.

Des procédés permettant d'améliorer la sécurité de systèmes utilisant des techniques de hachage sont connues de l'art antérieur.

La demande de brevet CN101547184 utilise une pluralité de valeurs d'authentification auxiliaires qui sont échangées entre un serveur et des utilisateurs.

Dans le procédé proposé dans la demande de brevet US2011/0246433, un hachage des données à envoyer est généré et concaténé avec le fragment de données à envoyer et une étiquette numérotée aléatoirement.

La demande de brevet EP 1 421 548 décrit un procédé de transmission d'informations, dans lequel un message à envoyer est concaténé avec un nombre aléatoire puis haché. Le résultat du hachage est envoyé non crypté à l'autre partie. Le message est parfois transmis tel quel ou crypté. Le nombre aléatoire est toujours transmis signé, et facultativement crypté, à l'autre partie. Le fait de ne pas crypter le hachage lorsque le message n'est lui-même pas crypté rend la transmission vulnérable à des ordinateurs très puissants ou quantiques capables de calculer des nombres aléatoires compatibles avec le message non crypté et le résultat du hachage. De plus, le cryptage de l'ensemble du message présente l'inconvénient, si ce cryptage utilise des clés bloc une fois, censées être inviolables, d'exiger que les deux parties qui correspondent aient accès à ces clés partagées.

## Communication quantique

La transmission d'informations se fait actuellement essentiellement grâce à des ondes électromagnétiques, que celles-ci aient de petites longueurs d'onde, comme la lumière, ou de grandes longueurs d'onde comme les ondes VHF.

Les ondes transmises peuvent être guidées par des câbles en métal, par des fibres optiques, ou encore transmises à travers l'espace.

Ces méthodes utilisent la propagation des ondes pour transmettre de l'énergie et donc des particules physiques qui, recueillies par un récepteur, permettent de déduire des informations, lesquelles sont codées, par exemple par leur longueur d'onde ou par modulation de la durée des trains d'ondes.

Récemment, des méthodes de communication dite "quantiques" se sont développées.

On peut par exemple utiliser l'état physique d'un photon, tel que sa polarisation, pour transmettre de l'information, par exemple par une fibre optique. La valeur d'un bit est affectée arbitrairement à une direction, ou à un mode de polarisation du photon. Des suites de photons polarisés peuvent alors être envoyées pour transmettre des suites binaires composant un message.

Dans le cadre de la cryptographie quantique, il est notamment connu d'utiliser une paire de photons intriqués pour transmettre une information de manière sécurisée. Des photons intriqués sont des photons dont les états quantiques, par exemple leur polarisation, dépendent l'un de l'autre, quelle que soit la distance les séparant.

Ce phénomène d'intrication quantique a été observé et mis en évidence expérimentalement à plusieurs reprises, comme par exemple dans l'article de Shasi Prabkhar et al. "Two-photon quantum interference and entanglement at 2.1 $\mu$m" (Sci Adv, 2020).

Le brevet KR101003886B1 décrit un système de transmission d'information cryptée dans lequel des photons intriqués sont émis simultanément et chacun envoyés vers deux cibles positionnées à des endroits différents et souhaitant communiquer entre elles. Les photons reçus par les deux cibles forment des suites aléatoires intriquées de bits conjugués, ces suites étant utilisées comme clés de chiffrement cryptographiques. Ce système permet la réception presque instantanée en deux endroits différents d'une même suite de nombres aléatoires mais ne permet pas la transmission d'information.

L'article de Wang "Superluminal telecommunication: an observable contradiction between quantum entanglement and relativistic causality" divulgue un système de communication quantique permettant une transmission d'informations superluminale grâce à une paire de photons intriqués envoyés vers deux récepteurs souhaitant communiquer entre eux. Les photons sont intriqués, et une polarisation linéaire est mesurée pour le photon arrivant au premier récepteur selon différentes directions à 45° les unes des autres. Au deuxième récepteur, le deuxième photon est démultiplié et la polarisation moyenne du flux démultiplié est mesurée afin de déterminer selon quelle direction le premier photon a été mesuré.

La polarisation d'un photon n'est cependant pas nécessairement binaire comme l'est celle d'un spin ou même quaternaire. Elle peut notamment être représentée sur la sphère de Jones qui caractérise l'orientation et l'ellipse de la polarisation : une polarisation peut en effet être linéaire, le champ électrique étant toujours parallèle à un axe perpendiculaire à la direction de propagation du photon, ou circulaire, le champ électrique tournant autour de cet axe, ou entre les deux : le champ électrique parcourant une ellipse atour de l'axe de propagation.

Dans le cas où la polarisation n'est pas circulaire, l'orientation mesure la direction de cet axe, et l'excentricité mesure l'aplatissement de l'ellipse.

Les dispositifs précités ne permettent pas d'exploiter toutes les configurations de la polarisation et sont de fait limités dans le nombre et le type des informations qu'il est possible de transmettre.

Le document de ITU Telecommunication standardization sector "Draft D2.3 Technical Report on quantum key distribution network (QKDN) protocols part 1: Quantum layer (output of 9th FG-QIT4N meeting" (17 août 2021) divulgue un procédé de transmission d'un message par communication quantique d'un premier récepteur à un deuxième récepteur avec détection d'écoute.

## Exposé de l'invention

Il existe un besoin pour perfectionner encore les systèmes et procédés de communication quantique, afin de tirer parti des photons intriqués et d'empêcher et de détecter les écoutes lors d'une communication par photons intriqués.

## Résumé de l'invention

L'invention vise à répondre à ce besoin et y parvient, selon un premier de ses aspects, grâce à un procédé de transmission d'un message M par communication quantique d'un premier récepteur à un deuxième récepteur avec détection d'écoute, le procédé de transmission et de détection comportant les étapes consistant à :

(A) générer une série de $N_p$ paires de photons intriqués à partir d'un émetteur, le premier photon de chaque paire étant émis vers le premier récepteur sur un premier chemin de propagation et le deuxième photon de la paire étant émis simultanément vers le deuxième récepteur sur un deuxième chemin de propagation, les premier et deuxième photons étant intriqués, le deuxième récepteur étant situé sur le chemin de propagation du deuxième photon plus loin de l'émetteur que le premier récepteur, de telle sorte que le deuxième photon arrive au deuxième récepteur après un temps de parcours supplémentaire $t_{tra}$,

(B) convertir le message M en une série de $N_i$ informations I à transmettre dans une première base de numération prédéterminée,

(C) au premier récepteur, pour chaque information I :

> (a) pour chaque photon intriqué, modifier l'état de polarisation du premier photon lorsqu'il atteint le premier récepteur en un état de polarisation dépendant de l'information I à transmettre, l'état de polarisation étant sélectionné parmi au moins deux paires différentes de polarisations d'absorption complémentaires, et
> (b) à l'aide d'un instrument d'absorption, absorber le premier photon dans l'une des deux polarisations complémentaires de la paire sélectionnée,

(D) au deuxième récepteur :

> (a) dupliquer chaque photon reçu en un flux de photons démultipliés grâce à un dispositif d'amplification, la lumière qui est créée ayant conservé l'état de polarisation du photon,
> (b) mesurer, pour chaque photon dupliqué, l'état de polarisation moyen du flux lumineux, et
> (c) déterminer selon cette mesure l'état de polarisation du premier photon intriqué reçu par le premier récepteur, afin d'en déduire l'information I ayant pu être transmise par le premier récepteur,
> (d) ajouter un élément comportant le temps de réception du deuxième photon intriqué et l'état de polarisation déterminé du premier photon intriqué qui peut avoir transmis l'information I, à une liste de déduction, la liste de déduction étant une liste comportant les temps de réception des deuxièmes photons intriqués et les états de polarisation déterminés des premiers photons intriqués qui peuvent avoir transmis l'information I,

(E) mettre en œuvre un procédé de détection d'écoute,

(F) déduire de la liste de déduction le message M transmis,

le procédé de détection d'écoute mis en œuvre à l'étape (E) comportant un procédé de génération de clé quantique partagée comportant les étapes suivantes :

(G) le premier récepteur établit une première liste comportant les dates de réception au premier récepteur et une deuxième liste comportant ces dates de réception et les états de polarisation relatifs des photons absorbés par le premier récepteur, et le deuxième récepteur établit une troisième liste comportant les dates de réception au deuxième récepteur et une quatrième liste comportant ces dates de réception et les états de polarisation relatifs des photons reçus par le deuxième récepteur,

(H) la première liste et/ou la troisième liste étant échangées entre le premier récepteur et le deuxième récepteur,

(I) à réception de la troisième liste et/ou de la première liste, respectivement, le premier récepteur et/ou le deuxième récepteur établissent une cinquième liste comportant les dates auxquelles les premiers photons ont été reçus au premier récepteur, pour les paires pour lesquelles les deux photons intriqués ont été reçus aux deux récepteurs, étant donné que certains photons peuvent avoir été perdus lors de la transmission entre l'émetteur et l'un des deux récepteurs ou les deux,

(J) si un seul des deux récepteurs établit la cinquième liste, ladite cinquième liste étant transmise, de préférence signée électroniquement, à l'autre récepteur, alors le premier récepteur et le deuxième récepteur établissent respectivement une sixième liste et une septième liste d'états de polarisation relatifs des photons tels que reçus par le premier récepteur, la sixième liste étant dérivée de la deuxième liste et de la cinquième liste, la septième liste étant dérivée de la quatrième liste et de la cinquième liste, chaque état de polarisation relatif, sur la sixième liste, d'un photon reçu au premier récepteur à un temps marqué sur la cinquième liste étant le même état de polarisation relatif que celui du photon correspondant reçu en même temps et marqué sur la deuxième liste, chaque état de polarisation relatif, sur la septième liste, d'un photon intriqué à un photon reçu au deuxième récepteur à un temps marqué sur la cinquième liste étant l'état de polarisation relatif complémentaire de l'état de polarisation du photon correspondant reçu au deuxième récepteur après le temps de parcours supplémentaire $t_{tra}$ et marqué sur la quatrième liste,

(K) les signatures respectives de la sixième liste et de la septième liste étant échangées entre les premier et deuxième récepteurs pour être comparées selon un procédé de comparaison,

(L) si les signatures de la sixième liste et de la septième liste sont identiques, la liste de déduction de l'information I est considérée comme étant non écoutée.

La polarisation relative d'un photon peut être la polarisation du photon. De préférence, la polarisation relative d'un photon est un bit affecté à toutes les polarisations possibles que peut prendre le deuxième photon intriqué après que le premier photon a atteint le premier récepteur, où 1 est ledit bit affecté d'un photon intriqué à un photon auquel un 0 a été affecté.

Le procédé de comparaison à l'étape (K) peut comporter les étapes consistant à :

> i. mélanger, au premier récepteur, un premier nombre secret, partagé ou à partager avec le deuxième récepteur, appelé nombre mélangeur, avec la sixième liste, à l'aide d'une fonction de mélange, afin d'obtenir une première donnée mélangée,
>
> ii. hacher, au premier récepteur, la première donnée mélangée à l'aide d'une fonction de hachage,
>
> iii. crypter, au premier récepteur, le hachage de la première donnée mélangée avec un deuxième nombre secret partagé ou à partager avec le deuxième récepteur,
>
> iv. envoyer, au premier récepteur, au deuxième récepteur, le hachage crypté de la première donnée mélangée avec le deuxième nombre secret,
>
> v. recevoir, au deuxième récepteur, les données envoyées par le premier récepteur à l'étape iv,
>
> vi. décrypter, au deuxième récepteur, les données reçues,
>
> vii. mélanger, au moyen du deuxième récepteur, le premier nombre secret à la septième liste, à l'aide d'une fonction de mélange, afin d'obtenir une deuxième donnée mélangée,
>
> viii. hacher, au deuxième récepteur, la deuxième donnée mélangée à l'aide d'une fonction de hachage,
>
> ix. comparer, au deuxième récepteur, le hachage de la deuxième donnée mélangée aux données reçues décryptées.

Le premier nombre secret peut être tenu secret et utilisé à nouveau. Le premier nombre secret peut de préférence être changé périodiquement, par exemple à chaque fois ou chaque jour.

Le deuxième nombre secret peut être tenu secret et réutilisé ou, de préférence, peut être changé périodiquement, par exemple à chaque fois ou chaque jour.

Le premier nombre secret peut être une première clé renouvelable, par exemple renouvelée après chaque utilisation et/ou le deuxième nombre secret peut être une deuxième clé renouvelable, par exemple renouvelée après chaque utilisation.

De préférence, le premier nombre secret est tenu secret et réutilisé, et le deuxième nombre secret est une clé à usage unique renouvelée après chaque utilisation.

Le procédé de transmission et de détection n'est de préférence pas mis en œuvre si la première ou la deuxième clé n'est plus secrète.

Les récepteurs peuvent partager les nombres secrets entre eux avant que l'étape (K) ait lieu. Alternativement, les nombres secrets peuvent être échangés entre les deux récepteurs après l'étape (K). Les récepteurs peuvent partager le nombre secret en se l'envoyant l'un à l'autre crypté au moyen d'une clé à usage unique.

Un identifiant de nombre mélangeur peut être échangé entre les premier et deuxième récepteurs, qui sont chacun capables de retrouver le nombre mélangeur correspondant dans une liste mémorisée de nombres mélangeurs.

La fonction de mélange peut être une fonction logique XOR, ou une fonction de suffixe, consistant à ajouter le nombre mélangeur à la fin de la sixième liste, ou une fonction de cryptage utilisant le nombre mélangeur comme clé de cryptage pour crypter la sixième liste.

La fonction de mélange peut alternativement être une combinaison d'une fonction XOR, d'une fonction de suffixe consistant à ajouter le nombre mélangeur à la fin du premier jeu de données et d'une fonction de cryptage utilisant le nombre mélangeur comme clé de cryptage pour crypter le premier jeu de données.

La fonction de cryptage peut être une fonction XOR.

Un message signé peut être échangé après l'étape ix. entre les deux récepteurs avant que les sixième et septième listes ne soient utilisées comme clés à usage unique.

La liste de déduction de l'information I peut être considérée comme n'ayant pas été écoutée si les deux données comparées à l'étape ix. sont égales.

Les listes établies à l'étape (G) peuvent être établies pour la transmission d'une seule information I. Alternativement, les listes établies à l'étape (G) peuvent être établies en utilisant des photons transmis pour la transmission d'une série d'informations I multiples.

Le deuxième chemin de propagation est de préférence protégé physiquement contre l'écoute, au moins pour une portion du deuxième chemin de propagation se terminant au deuxième récepteur, où les photons se propagent depuis l'émetteur après que leur photon intriqué a été reçu par le premier récepteur. Cela permet d'éviter qu'un dispositif de piratage placé dans cette portion non protégée du chemin de propagation puisse effectuer une écoute et retransmettre les photons qui s'y propagent alors qu'ils ne sont plus intriqués. Cette portion est de préférence suffisamment longue pour que la différence entre le temps de parcours d'un photon dans ladite portion et le temps de parcours du photon à l'état non intriqué vers le deuxième récepteur puisse être détectée par le deuxième récepteur et que cette détection permette au deuxième récepteur de marquer tout message entrant comme étant potentiellement écouté par un tiers.

Deux rotateurs de polarisation sont de préférence placés devant les deux récepteurs de photons, respectivement, les deux rotateurs de photons modifiant la direction de polarisation des photons de manière synchrone et aléatoire, par exemple de 45° ou de 0°, par exemple chaque photon ou un photon sur deux, afin qu'un émetteur de photons espion ne puisse pas connaître les directions de polarisation mesurées par les récepteurs. Les deux récepteurs peuvent partager une liste de bits aléatoires, où 0 représente une rotation de 0° et 1 une rotation de 45°.

Cela permet d'éviter qu'un nombre secret connu soit généré par un pirate informatique qui remplacerait l'émetteur de photons intriqués par un émetteur de photons envoyant des paires de photons non intriqués représentant un message qui est également amené à être envoyé par le premier récepteur.

La sixième liste et la septième liste peuvent être constituées de bits, et peuvent potentiellement être utilisées en tant que liste partagée de bits aléatoires.

Le message M transmis peut être utilisé comme clé de cryptage si la liste de déduction a été considérée comme n'ayant pas été écoutée.

Les clés de cryptage générées au cours du procédé de transmission et de détection et/ou constituées du message M, peuvent être utilisées si la liste de déduction a été considérée comme n'ayant pas été écoutée, en tant que premier et/ou deuxième nombres secrets.

Le premier récepteur peut coder la même information I sur de nombreux photons entrants successifs, étant donné que certains de leurs photons intriqués peuvent être perdus avant d'atteindre le deuxième récepteur.

Le premier récepteur peut réserver une information $I_0$ à utiliser pour séparer l'envoi de deux autres informations quelconques, notamment si ces deux autres informations sont identiques, représentant par exemple une même lettre.

L'étape (F), consistant à déduire de la liste de déduction le message M transmis, peut être réalisée par le premier récepteur ayant codé une lettre de séparation entre deux lettres successives égales quelconques du message M, en tenant compte du temps de parcours $t_{tra}$ et de la cinquième liste, en retirant de la liste de déduction les polarisations de photons pour lesquels le premier photon intriqué n'a jamais atteint le premier récepteur, afin de créer une liste de déduction approuvée, et le deuxième récepteur déduisant de la liste de déduction approuvée le message M ayant été transmis.

Alternativement, le deuxième récepteur peut compter en tant qu'information reçue toute information successivement enregistrée sur la liste de déduction plus d'un nombre prédéfini de fois au sein d'un nombre prédéfini d'informations I reçues successivement. Par exemple, s'il y a 450 paires d'états de polarisation différentes qui peuvent être codées sur les photons et si les chemins de propagation perdent 90% des photons entre l'émetteur et les récepteurs, le deuxième récepteur peut compter comme étant une information reçue toute information apparaissant au moins 6 fois parmi les 200 photons reçus, ou toute information apparaissant au moins 6 fois parmi les 200 enregistrements successifs de la liste de déduction.

On peut considérer que le message M n'a pas été écouté si la liste de déduction a été considérée comme n'ayant pas été écoutée.

La paire de polarisations d'absorption complémentaires peut être choisie parmi au moins trois paires différentes de polarisations d'absorption complémentaires.

La paire de polarisations d'absorption complémentaires peut être sélectionnée parmi au moins 210 paires distinctes de polarisations d'absorption complémentaires.

Une pluralité de paires de photons intriqués peuvent être générées successivement par l'émetteur, chaque paire de photons permettant de transmettre une information du premier récepteur au deuxième récepteur.

**Premier système de communication quantique**

Selon un autre de ses aspects, l'invention concerne un premier système de communication quantique mettant en œuvre le procédé décrit ci-dessus, comportant :

- un émetteur de photons intriqués, comportant une source configurée pour générer au moins une paire de photons intriqués comportant un premier photon émis sur un premier chemin de propagation, et simultanément un deuxième photon émis sur un deuxième chemin de propagation différent du premier chemin de propagation,
- un premier récepteur disposé sur le premier chemin de propagation, comportant un absorbeur complexe configuré pour absorber le photon dans un état de polarisation sélectionné parmi les états d'au moins deux paires différentes d'états de polarisation complémentaires,
- un deuxième récepteur disposé sur le deuxième chemin de propagation de façon à être atteint par le deuxième photon après que le premier photon a atteint le premier récepteur, ledit deuxième récepteur comportant :

    ◦ un amplificateur optique permettant de démultiplier le deuxième photon tout en conservant sa polarisation, et
    ◦ disposé en aval de l'amplificateur, un instrument de mesure permettant de mesurer la polarisation moyenne des photons démultipliés.

L'absorbeur complexe peut être configuré pour absorber le photon dans un état de polarisation prédéterminé sélectionné parmi les états d'au moins trois paires différentes de polarisations complémentaires.

L'absorbeur complexe peut comporter :

- au moins un instrument permettant d'absorber le photon dans l'un ou l'autre de deux états de polarisation complémentaires,

- un modificateur de polarisation qui est disposé en amont dudit instrument et est configuré pour convertir la polarisation du premier photon en la polarisation sélectionnée selon laquelle ledit instrument absorbe les photons.

Le modificateur de polarisation peut comporter un modificateur de direction de polarisation disposé en amont d'un modificateur de phase de polarisation.

Le modificateur de direction de polarisation peut comporter deux lames quart d'onde disposées l'une après l'autre sur le chemin de propagation du premier photon, l'orientation de l'une au moins des deux lames étant variable.

Le modificateur de direction de polarisation peut comporter une lame ou un prisme en matériau chiral ou rotatif induisant une rotation de la polarisation d'un angle dépendant de l'endroit par lequel l'onde pénètre dans ledit matériau chiral ou rotatif.

Le modificateur de phase de polarisation peut comporter une première lame ou un premier prisme biréfringent divisant le faisceau en deux ondes électromagnétiques de polarisation linéaire, l'une selon un premier axe et l'autre selon un deuxième axe, et une lame à retard d'indice de réfraction variable disposée sur le deuxième axe.

Ledit au moins un instrument peut comporter au moins un filtre permettant d'envoyer le premier photon vers l'un ou l'autre de deux détecteurs de photons selon l'état de polarisation du premier photon.

L'instrument de mesure du deuxième récepteur peut comporter au moins un détecteur de photons agencé pour mesurer la polarisation de la lumière issue de la démultiplication du deuxième photon.

L'instrument de mesure du deuxième récepteur peut comporter une succession de lames semi-réfléchissantes disposées en aval de l'amplificateur optique, lesdites lames dirigeant le flux de photons démultipliés avec une égale intensité vers un premier instrument de mesure de phase, celui-ci étant un instrument de mesure de polarisation agencé pour mesurer l'intensité du flux selon deux axes perpendiculaires, un deuxième instrument de mesure de phase mesurant le déphasage de la lumière entre ces deux mêmes axes, et un troisième instrument de mesure de phase mesurant le déphasage de la lumière entre la bissectrice des mêmes axes et un axe perpendiculaire à cette bissectrice.

La première lame semi-réfléchissante peut dévier un tiers du flux lumineux vers le premier instrument de mesure de phase, et la deuxième lame semi-réfléchissante peut dévier la moitié de son flux lumineux entrant vers le deuxième instrument de mesure de phase et la moitié restante de son flux lumineux entrant vers le troisième instrument de mesure de phase.

L'amplificateur optique peut être un amplificateur à fibre dopée.

L'émetteur peut être configuré pour générer successivement une pluralité de paires de photons intriqués.

L'émetteur et chacun des récepteurs peuvent comporter une horloge, les horloges de l'émetteur et des récepteurs étant synchronisées entre elles.

Le deuxième récepteur peut comporter un commutateur disposé devant l'amplificateur optique et configuré pour absorber ou réfléchir le ou les photons subséquents à un premier photon atteignant ledit deuxième récepteur dans un intervalle de temps prédéterminé.

Le premier système de communication quantique peut comporter un deuxième émetteur capable de générer une ou plusieurs paires de photons intriqués, le deuxième émetteur étant situé plus près du deuxième récepteur que du premier récepteur.

## Deuxième système de communication quantique

L'invention concerne également une deuxième variante d'un système de communication quantique selon l'invention, comportant :

- un émetteur de photons intriqués, comportant une source configurée pour générer au moins une paire de photons intriqués comportant un premier photon émis sur un premier chemin de propagation, et simultanément un deuxième photon émis sur un deuxième chemin de propagation différent du premier chemin de propagation ;

- un premier récepteur disposé sur le premier chemin de propagation, comportant un absorbeur complexe configuré pour absorber le photon dans un état de polarisation sélectionné parmi les états d'au moins deux paires différentes d'états de polarisation complémentaires, à l'exception d'exactement deux paires de polarisations linéaires perpendiculaires, les polarisations de l'une des paires étant à 45° des directions de polarisation de l'autre paire ;

- un deuxième récepteur disposé sur le deuxième chemin de propagation de façon à être atteint par le deuxième photon après que le premier photon a atteint le premier récepteur, ledit deuxième récepteur comportant :

  - un amplificateur optique permettant de démultiplier le deuxième photon en conservant sa polarisation et,
  - disposé en aval de l'amplificateur, un instrument de mesure permettant de mesurer la polarisation moyenne des photons démultipliés.

La deuxième variante du système selon l'invention est agencée pour retransmettre de façon quasi instantanée une série de valeurs, continues ou discrètes, entre deux lieux.

Les premier et deuxième photons étant intriqués, l'absorption du premier photon au premier récepteur détermine instantanément la polarisation du deuxième photon, notamment avant que celui-ci n'atteigne le deuxième récepteur.

La mesure de la polarisation moyenne des photons démultipliés au deuxième récepteur permet alors de détecter dans quel état de polarisation le premier photon a été absorbé et d'en déduire l'information transmise.

Cette deuxième variante du système permet par conséquent de transmettre des informations sans temps de latence, indépendamment de la distance entre les deux endroits souhaitant communiquer, et en utilisant uniquement des photons, ce qui ne nécessite que peu d'énergie.

La deuxième variante du système est par exemple utilisée pour des réseaux de communication et des réseaux informatiques sur Terre, dans le ciel et/ou dans l'espace, notamment pour communiquer avec des systèmes éloignés de la Terre, tels que des satellites ou des vaisseaux spatiaux.

## Polarisations de Jones

Par "états de polarisation complémentaires", aussi désignés dans la suite par "états de polarisation d'absorption complémentaires", on entend deux états de polarisation d'une lumière pour lesquels la modification de la polarisation de ladite lumière par des éléments optique linéaires, notamment des miroirs, des lames et/ou prismes biréfringents, dont des lames quart d'onde, permet pour l'une son absorption par un premier filtre polarisant, et pour l'autre son absorption par un deuxième filtre polarisant selon une polarisation orthogonale à celle selon laquelle le premier filtre polarisant peut absorber.

Dans la suite, on utilise indifféremment les termes "état de polarisation" et "polarisation".

Le premier récepteur est avantageusement agencé pour que son utilisateur puisse sélectionner l'état de polarisation dans lequel le photon est absorbé parmi l'une quelconque des polarisations possibles telles que définies par le formalisme de Jones, notamment parmi un ensemble de polarisations elliptiques (aussi dites "ellipsoïdales") caractérisées par l'orientation et l'ellipse de la polarisation.

On peut ainsi faire varier la polarisation selon laquelle les photons sont absorbés par le premier récepteur afin de transmettre une série d'informations au deuxième récepteur.

En sélectionnant par exemple 10 directions de polarisation différentes, par exemple espacées de 9° les unes des autres, et 21 déphasages différents, espacés de 9° aussi les uns des autres, on peut définir 210 états de polarisation différents et ainsi transmettre 210 signaux différents.

On peut par exemple transmettre les lettres de l'alphabet en majuscules, en minuscules, les chiffres et un certain nombre d'autres caractères spéciaux, pour chacune des paires de photons intriqués atteignant les récepteurs.

## Absorbeur complexe

On qualifie d'"absorbeur complexe" un ensemble atteint par le premier photon permettant de déterminer une paire de polarisations complémentaires parmi un certain nombre de paires de polarisations complémentaires, et d'absorber le premier photon dans l'un des deux états de polarisation de la paire prédéterminée.

De préférence, l'absorbeur complexe du premier récepteur est configuré pour absorber le photon dans un état d'une paire prédéterminée de polarisations complémentaires, sélectionné parmi les états d'au moins trois paires différentes de polarisations complémentaires, et de préférence parmi un nombre de paires différentes de polarisations complémentaires sélectionnées selon le nombre de valeurs différentes à transmettre, comme décrit plus haut.

De préférence, l'absorbeur complexe comporte :

- au moins un instrument d'absorption permettant d'absorber le photon dans l'un ou l'autre de deux états d'une paire de polarisations complémentaires, par exemple deux polarisations linéaires orthogonales ;
- un modificateur de polarisation disposé en amont dudit instrument d'absorption et configuré pour transformer la polarisation du premier photon en la polarisation sélectionnée selon laquelle ledit instrument d'absorption absorbe les photons.

Par "polarisation sélectionnée", on entend une paire de polarisations complémentaires prédéterminée selon l'information à transmettre.

## Modificateur de polarisation

La polarisation linéaire d'un photon peut être convertie en polarisation ellipsoïdale telle que représentée par le formalisme de Jones en modifiant dans un premier temps l'orientation de la polarisation d'un photon de polarisation linéaire et de direction connue, répartissant ainsi de façon prédéterminée le champ électrique selon un axe x et un axe y perpendiculaire à l'axe x puis, dans un deuxième temps, en modifiant la phase du champ électrique selon l'une de deux directions perpendiculaires, par exemple l'axe y.

Le modificateur de polarisation comporte de préférence un modificateur de direction de polarisation disposé en amont d'un modificateur de phase de polarisation.

Par exemple, si $\theta$ est l'angle de rotation de la

polarisation linéaire et $\phi$ le déphasage selon l'axe y, $\omega$ étant la pulsation de l'onde, les composantes $E_x$ et $E_y$ de champ électrique après la rotation sont :

$$E_x = E \, Cos\,(\theta)\, Cos\,(\omega t)$$

$$E_y = E \, Sin\,(\theta)\, Cos\,(\omega t)$$

Et après le déphasage:

$$E_x = E \, Cos\,(\theta)\, Cos\,(\omega t)$$

$$E_y = E \, Sin\,(\theta)\, Cos\,(\omega t + \phi)$$

Modificateur de la direction de polarisation

On peut modifier une direction de polarisation linéaire de différentes façons, par exemple par une lame demi-onde ou alternativement par une double lame quart d'onde.

Le modificateur de direction de polarisation peut comporter deux lames quart d'onde disposées l'une après l'autre sur le chemin de propagation du premier photon, l'orientation de l'une au moins des deux lames étant variable.

La première lame quart-d'onde modifie par exemple la polarisation linéaire en polarisation circulaire et la deuxième lame quart-d'onde convertit par exemple la polarisation circulaire en une polarisation linéaire dont la direction est orientée selon un axe dépendant de la direction de l'axe de la deuxième lame quart d'onde.

Une rotation de l'axe de cette deuxième lame permet donc de modifier la direction de la polarisation linéaire du photon. Si la lame est une lame demi-onde, la rotation de cette dite lame demi-onde permet de modifier la direction de la polarisation linéaire du photon.

Alternativement, on peut modifier l'orientation de la première lame quart d'onde, celle de la deuxième étant fixe, ou bien on peut modifier les orientations des deux lames quart d'onde.

La rotation d'une lame quart d'onde ou d'une lame demi-onde est obtenue par exemple par asservissement mécanique à un capteur ou à un dispositif commandé électriquement permettant sa rotation, par exemple en frottant sur un arbre mis en mouvement par un matériau piézo-électrique ou par un dispositif à moteur électrique, par exemple à courant continu.

Alternativement, une pluralité de dispositifs de rotation de la polarisation linéaire peuvent être utilisés, chacun permettant des angles de rotation différents, par exemple fixes, mais pouvant tout aussi bien être modifiables, des sélecteurs permettant d'envoyer les photons vers l'un de ces dispositifs de rotation et, en sortie dudit dispositif de rotation, de conduire ledit photon vers un guide d'ondes commun ou un axe de transmission commun.

Ces sélecteurs peuvent comporter un miroir dont la direction de l'axe est commandée par exemple par un dispositif électrique, ou alternativement constitués d'un prisme ou d'une lame constituée d'un matériau dont l'indice de réfraction dépend d'un champ électrique : une cellule de Pockels, ou un matériau transparent d'indice de réfraction non linéaire, un autre flux lumineux, par exemple transversal et de préférence de longueur d'onde différente de celle du photon et ne pouvant pas générer de photons ayant la même longueur d'onde que celle du photon, faisant varier l'indice de réfraction dudit matériau non linéaire et commandant ainsi l'emplacement et facultativement la direction de sortie du photon dudit matériau. L'inertie de rotation d'une lame quart d'onde pouvant être importante, les photons peuvent être envoyés successivement vers différentes lames quart d'onde dont la direction aura été ajustée préalablement par exemple par l'un des dispositifs de rotation mécaniques décrits précédemment, laissant ainsi le temps de modifier la direction de chacune de ces lames quart d'onde entre deux passages de photons.

En variante, on peut utiliser des matériaux chiraux ou rotatifs pour modifier une direction de polarisation linéaire.

Le modificateur de direction de polarisation peut comporter une lame ou un prisme en matériau chiral ou rotatif induisant une rotation de la polarisation d'un angle dépendant de l'endroit par lequel l'onde pénètre dans ledit matériau chiral ou rotatif. Le matériau peut notamment être disposé entre deux cellules de Pockels.

Le premier photon peut être projeté sur une première lame ou un premier prisme formant une cellule de Pockels dont l'indice de réfraction est commandé par un champ électrique pour en ressortir en des endroits différents, notamment sur une lame ou un prisme intermédiaire en matériau au moins en partie chiral ou rotatif faisant tourner l'axe de polarisation électrique du photon d'un angle dépendant de l'endroit par lequel l'onde pénètre dans ladite lame ou ledit prisme intermédiaire, avant de pénétrer dans une deuxième lame ou un deuxième prisme formant une cellule de Pockels dont l'indice de réfraction est ajusté symétriquement par rapport à celui de la première lame ou du premier prisme pour faire ressortir le photon selon la même direction que si les indices de réfraction de la première lame ou prisme et de la deuxième lame ou prisme avaient tous deux une valeur fixe. Une troisième lame dont l'indice de réfraction peut être ajusté, par exemple électriquement, est avantageusement placée après la deuxième lame ou prisme pour permettre de rendre l'endroit de la sortie du photon de l'ensemble de lames et prismes indépendant de l'indice de réfraction sélectionné pour la première lame ou prisme.

La lame ou prisme en matériau intermédiaire est par exemple composé de deux prismes symétriques accolés de même indice de réfraction mais ayant des pouvoirs chiraux ou rotatifs différents, le premier des deux prismes ayant par exemple un pouvoir chiral ou rotatif et le deuxième n'en ayant pas ou bien faisant tourner le champ électrique dans le sens contraire de la rotation imposée par le premier prisme.

L'un des deux prismes intermédiaires peut comporter un matériau chiral, par exemple des nanoparticules de séléniure de cadmium (CdSe) ayant un diamètre d'environ 1,4 à 2,4 nm tel que décrit dans l'article de Visheratina, Anastasia, and Nicholas A. Kotov. "Inorganic nanostructures with strong chiroptical activity." (*CCS Chemistry* 2.3 (2020): 583-604.) ; l'autre prisme intermédiaire n'étant de préférence pas chiral ou alternativement étant de chiralité inverse à celle dudit premier prisme intermédiaire. La rotation du champ électrique des ondes traversant un matériau chiral étant proportionnelle à l'épaisseur traversant ledit matériau chiral, la rotation du champ électrique traversant la lame intermédiaire dépend de l'emplacement par lequel elle est pénétrée par la lumière qui la traverse.

L'un des deux prismes intermédiaires peut encore comporter un matériau "rotatif", tel qu'une superposition d'un nombre pair de lames quart d'ondes empilées les unes sur les autres dans des directions incrémentées à chaque couche d'un angle prédéterminé, de telle sorte qu'une onde polarisée linéairement selon l'axe de la première tranche du matériau ressorte de l'empilement avec une polarisation tournée d'un angle proportionnel à l'épaisseur de l'empilement.

## Modificateur de phase de polarisation

Un deuxième dispositif, dit "modificateur de phase de polarisation", peut être disposé en aval du modificateur de direction de polarisation, afin de déphaser d'un angle prédéterminé la composante du champ électrique du photon selon l'un de deux axes fixes.

De préférence, le modificateur de phase de polarisation comporte une première lame ou prisme biréfringent agencé pour diviser le faisceau en deux ondes électromagnétiques de polarisation linéaire, l'une selon un premier axe, l'autre selon un deuxième axe, et une lame à retard ayant un indice de réfraction variable disposée sur le deuxième axe.

Par "faisceau", il faut comprendre l'onde lumineuse qu'est le premier photon au sens de la dualité de la lumière.

La lame à retard fait acquérir à l'onde orientée selon le deuxième axe un déphasage prédéterminé par rapport à l'onde orientée selon le premier axe, avant de lui être de nouveau mélangée par un nouvelle lame ou un nouveau prisme biréfringent permettant de réunir selon un même axe les deux ondes dont les champs de polarisation sont perpendiculaires.

La lame à retard peut comporter une cellule de Pockels ou un matériau non linéaire. L'indice de réfraction variable permet de sélectionner le déphasage imposé à l'onde orientée selon le deuxième axe.

Dans un premier exemple de mise en œuvre, comme décrit plus haut, le modificateur de phase fait tourner une polarisation linéaire d'angles espacés de 9° variant entre -45° et +36° et fait varier la phase d'angles espacés de 9° entre -90° et +90°, définissant ainsi 210 états de polarisation possibles. Comme décrit plus bas, 209 des 210 polarisations possibles sont par exemple utilisées pour coder des données et la 210^{ème} polarisation linéaire est utilisée pour absorber tout photon intriqué reçu dans un temps prédéterminé après la réception d'un photon ayant servi au codage d'une donnée.

Dans un deuxième exemple de mise en œuvre, le modificateur de phase fait tourner l'axe de polarisation de 45° avant que le photon soit absorbé pour transmettre par exemple un 0, et transforme la polarisation du photon en polarisation circulaire pour transmettre par exemple un 1.

## Réflexion du premier photon

L'invention a encore pour objet une troisième variante du système de communication quantique selon l'invention, comportant :

- un émetteur de photons intriqués comportant une source configurée pour générer au moins une paire de photons intriqués comportant un premier photon émis sur un premier chemin de propagation, et simultanément un deuxième photon émis sur un deuxième chemin de propagation différent du premier chemin de propagation;

- un premier récepteur disposé sur le premier chemin de propagation, comportant :

   - au moins un premier instrument d'absorption, agencé pour absorber le premier photon dans l'un de deux états d'une paire de polarisations complémentaires, la polarisation étant indéterminée dans la base observable selon laquelle le premier instrument absorbe les photons,
   - un sélecteur optique disposé en amont dudit au moins un premier instrument et configuré pour soit laisser passer le premier photon vers ledit au moins un premier instrument de mesure, soit l'empêcher d'être mesuré ;

- un deuxième récepteur disposé sur le deuxième chemin de propagation de façon à être atteint par le deuxième photon après que le premier photon a atteint le sélecteur optique et/ou après qu'il a pu atteindre l'instrument de mesure du premier récepteur, ledit deuxième récepteur comportant un amplificateur optique permettant de démultiplier le deuxième photon en conservant sa polarisation et, disposé en aval de l'amplificateur, un instrument de mesure permettant de mesurer l'état quantique moyen des photons démultipliés .

Par "base observable", on désigne une base de deux polarisations complémentaires, par exemple deux polarisations linéaires orthogonales.

Par "polarisation indéterminée dans une base observable", on désigne un photon dont la polarisation telle qu'observée dans l'une des deux polarisations prédéterminées d'une base observable n'est pas définie, c'est-à-dire est aléatoire, par exemple de façon équiprobable.

Les premier et deuxième photons étant intriqués, l'absorption du premier photon au premier récepteur détermine instantanément la polarisation du deuxième photon, notamment avant que celui-ci n'atteigne le deuxième récepteur.

La mesure de la polarisation des photons démultipliés au deuxième récepteur permet alors de détecter si le premier photon a, ou non, été absorbé, et d'en déduire quelle information a été transmise. L'information transmise par cette troisième variante du système est par exemple de type binaire.

Le premier récepteur peut comporter au moins un deuxième instrument d'absorption, le sélecteur optique étant disposé en amont des premier et deuxième instruments et configuré pour soit laisser passer le premier photon en le dirigeant vers l'un ou l'autre des instruments, soit l'empêcher d'être absorbé.

L'utilisation de deux instruments permet de transmettre trois informations différentes, par exemple les valeurs 0, 1 et 2, la valeur 0 étant par exemple affectée à la réflexion, la valeur 1 au premier instrument, et la valeur 2 au deuxième instrument.

## Sélecteur optique

Le sélecteur optique du premier récepteur peut être de type varié. Il est avantageusement placé en amont de l'instrument de mesure afin de pouvoir empêcher le photon incident d'atteindre l'instrument de mesure, si cela est souhaité.

Pour ce faire, le sélecteur comporte de préférence un réflecteur, notamment un miroir commandé, permettant par exemple de réfléchir le premier photon sur un chemin de propagation différent de son chemin de propagation incident, notamment sur un chemin de propagation ne comportant pas l'instrument de mesure.

Par "miroir commandé", on désigne un dispositif dont certaines propriétés, par exemple les propriétés de réfraction ou la direction de réflexion, sont commandées par un dispositif annexe relié au miroir, notamment un dispositif électronique, par exemple générant un champ électrique.

Le sélecteur optique comporte de préférence un dispositif dont l'indice de réfraction et/ou la direction de réflexion sont commandés, notamment commandés grâce à un champ électrique à ou un flux lumineux.

Alternativement, le sélecteur optique comporte par exemple un miroir de Bragg, notamment un miroir de Bragg dont la direction de réflexion est commandée par un matériau piézo-électrique, lui-même commandé par un champ électrique.

En variante, le sélecteur optique comporte un prisme, notamment comportant des cellules de Pockels dont l'indice de réfraction est commandé par un champ électrique, l'application d'un champ électrique pouvant diriger le photon vers le ou l'un des instruments de mesure ou vers un miroir de Bragg avantageusement incliné par rapport à la direction d'incidence des ondes électromagnétiques l'atteignant, de telle sorte que lesdites ondes soient réfléchies vers un endroit de préférence différent de celui dont elles proviennent à l'entrée du prisme.

Dans une autre variante, le sélecteur optique comporte un ou une succession de filtres de Bragg dont certaines couches sont des cellules de Pockels dont l'indice de réfraction est commandé par un champ électrique, ledit filtre de Bragg réfléchissant ou laissant passer l'onde lumineuse selon l'application ou non du champ électrique.

Alternativement, les cellules de Pockels utilisées ci-dessus sont remplacées par des cristaux non linéaires éclairés par une lumière puissante pouvant faire varier l'indice de réfraction du milieu traversé par le photon, la longueur d'onde de la lumière puissante étant de préférence différente de la longueur d'onde du photon.

Le sélecteur optique permet notamment d'orienter les photons dans trois directions différentes, une direction permettant par exemple aux photons de ne pas être détectés, une deuxième permettant de mesurer une polarisation linéaire des photons et une troisième permettant de mesurer une polarisation circulaire.

## Dispositif de protection

De préférence, le système de communication quantique selon l'invention comporte de plus un dispositif de protection de l'état quantique d'au moins un photon, notamment un dispositif qui empêche la mesure ou l'absorption d'au moins un photon, disposé à proximité du premier récepteur de façon à permettre de protéger l'état quantique du premier photon après sa réflexion, l'empêchant d'être absorbé ou mesuré par un ou des instruments de mesure, ledit état quantique du premier photon étant protégé au moins jusqu'à ce que le deuxième photon ait été démultiplié au deuxième récepteur.

Le dispositif de protection de l'état quantique est placé près du premier récepteur de façon à protéger l'état quantique du premier photon lorsque celui-ci est réfléchi et/ou dévié de son chemin de propagation incident par le sélecteur optique pour ne pas y être observé, c'est-à-dire lorsqu'on ne souhaite pas qu'il soit absorbé par l'instrument de mesure du premier récepteur.

De préférence, le dispositif de protection de l'état quantique comporte un espace transparent, notamment un espace transparent et au moins un miroir. L'espace transparent peut être vide ou rempli de gaz ou de liquide.

De préférence, il comporte une pluralité de miroirs de Bragg, agencés par rapport à l'espace transparent de façon à piéger le photon qu'il reçoit sur un chemin de longueur appropriée, comme décrit plus haut, c'est-à-dire correspondant au temps qu'il faut pour que le deuxième photon ayant atteint le deuxième récepteur y soit amplifié.

En variante, le dispositif de protection comporte une fibre optique de longueur permettant au premier photon d'y circuler en attendant que le deuxième photon ayant atteint le deuxième récepteur y soit amplifié.

Dans une autre variante, le dispositif peut être une portion d'espace ou d'atmosphère vide ou remplie de gaz dont on s'assure qu'elle n'est pas traversée par un objet réfléchissant ou absorbant la lumière.

### Instrument d'absorption du premier photon

Au premier récepteur, le premier photon peut être absorbé par au moins un instrument d'absorption dans l'un de deux états d'une paire de polarisations complémentaires.

De préférence, l'instrument d'absorption comporte au moins un filtre permettant d'envoyer le premier photon vers au moins un détecteur de photons, notamment vers l'un ou l'autre de deux détecteurs de photons selon l'état de polarisation du premier photon, le filtre étant de préférence un prisme ou une lame en matériau biréfringent.

L'instrument d'absorption peut encore comporter un filtre polarisant et un détecteur de photons situé à la suite dudit filtre polarisant.

L'instrument d'absorption peut encore comporter un miroir semi-transparent réfléchissant les photons polarisés circulairement vers un premier détecteur de photons et laissant passer les autres vers un deuxième détecteur de photons, comme décrit dans l'article de mai, Wending, et al. "Broadband transparent chiral mirrors: Design methodology and bandwidth analysis." (*AIP Advances* 9.4 (2019): 045305).

### Emission des photons

#### Emetteur de paires de photons

De préférence, l'émetteur génère des paires de photons intriqués par abaissement de fréquence paramétrique spontané (SPDC), c'est-à-dire suivant un procédé dans lequel un photon initial, aussi appelé photon "pompe", est dédoublé et sa fréquence divisée par deux par un phénomène de mélange à quatre ondes, dans un milieu optique d'indice de réfraction non linéaire, comme cela est décrit dans l'article d'Amanti et. al, "Les sources intégrées de photons intriqués au cœur des technologies quantiques" (Photoniques, numéro 91, 2018).

Ce type d'émetteur de paires de photons permet de produire des photons dont l'intrication est relativement robuste, mais présente le désavantage de parfois produire plus d'une paire de photons à la fois, ce qui n'est pas désirable car non contrôlé. Des dispositifs annexes peuvent être mis en place pour traiter ces paires multiples "parasites", comme cela est décrit dans la suite.

En variante, on peut utiliser un émetteur comportant une boîte quantique pour générer des paires de photons intriqués, comme décrit dans l'article précité, ce qui permet d'obtenir des paires de manière plus régulière. Les propriétés d'intrication des photons obtenus par une telle méthode peuvent néanmoins parfois être instables.

On peut aussi utiliser des fibres optiques en cristal biréfringent, comme décrit dans l'article de Smith et. al "Photon pair generation in birefringent optical fibers" (Optics Express, Vol. 17, Issue 26, 2009).

De préférence, l'émetteur est configuré pour générer successivement une pluralité de paires de photons intriqués.

On peut envoyer les photons intriqués à la sortie de l'émetteur sur les premier et deuxième chemins de propagation de diverses façons.

#### Emission selon une polarisation prédéterminée

Les photons sont de préférence émis selon une polarisation prédéterminée. Par "polarisation prédéterminée", on entend dans l'un des deux états d'une paire prédéterminée de polarisations complémentaires, par exemple une polarisation linéaire d'une certaine direction. Une lame biréfringente peut par exemple séparer les deux photons intriqués selon leur polarisation linéaire verticale ou horizontale.

Une polarisation prédéterminée des photons intriqués envoyés à chacun des récepteurs permet notamment de connaître la probabilité d'un état selon une polarisation ou sa polarisation complémentaire pour toute paire sélectionnée de polarisations complémentaires.

On peut ainsi générer des séries de bits aléatoires à la réception desdits photons par les récepteurs, lesdites séries étant complémentaires aux deux récepteurs, la polarisation d'un photon reçu au deuxième récepteur étant la polarisation complémentaire de la polarisation observée au premier récepteur.

Une polarisation prédéterminée est aussi nécessaire lorsque l'on utilise des lames quart d'onde au premier récepteur pour faire tourner la direction de polarisation du premier photon.

Pour émettre des photons selon une polarisation linéaire prédéterminée, on dispose par exemple à la sortie de l'émetteur une lame ou un prisme comportant un matériau optiquement transparent biréfringent, par exemple du niobate de lithium ou du rutile ($TiO_2$), dont les indices optiques dépendent de l'axe de polarisation de la lumière par lequel transite au moins l'un des deux photons.

Ce photon sort alors du prisme à l'un des deux endroits différents, selon sa polarisation linéaire.

Si la source de photons intriqués émet les deux photons dans la même direction et selon un axe perpendiculaire à l'axe ordinaire du matériau optiquement transparent biréfringent, on collecte à la sortie du prisme, à l'endroit par lequel sortent les ondes électromagnétiques dont le champ électrique est parallèle à l'axe ordinaire du matériau optiquement transparent biréfringent, le premier photon pour l'envoyer vers le premier récepteur.

De la même manière, on collecte le deuxième photon sortant par l'endroit où sortent les ondes électromagnétiques dont le champ est perpendiculaire à l'axe ordinaire afin de l'envoyer vers le deuxième récepteur.

Dans le cas où les deux photons intriqués sont générés depuis l'émetteur à des endroits et/ou dans des directions différentes, on peut projeter chacun des deux photons sur des prismes biréfringents dans une direction perpendiculaire à l'axe ordinaire de chacun des prismes et rediriger chaque photon vers le récepteur qui lui est destiné, les photons sortant par des endroits différents des prismes étant alors de préférence perdus ou détruits par projection sur une surface absorbante.

On peut par exemple utiliser pour le premier photon intriqué celui sortant d'une première lame biréfringente ou d'un premier cristal biréfringent avec une polarisation linéaire parallèle au premier axe, et comme deuxième photon intriqué celui sortant avec une polarisation linéaire parallèle à un premier axe du cristal utilisé pour la deuxième lame ou le deuxième prisme qui aura été ajusté pour permettre la sortie des photons selon une polarisation prédéterminée correspondant à la polarisation des photons intriqués aux photons sortant de la première lame ou du premier prisme biréfringent selon une direction parallèle au premier axe.

Pour faciliter le transport desdits photons vers les récepteurs, on place, de préférence, à la sortie des endroits d'où les photons sortent des prismes, des lames à retard biréfringentes convertissant les polarisations linéaires desdits photons en polarisation circulaire.

On dispose alors de préférence une autre lame à retard biréfringente à l'entrée de chacun des récepteurs pour convertir les polarisations circulaires des photons en polarisation linéaire, cette conversion en polarisation linéaire permettant d'ajuster précisément l'axe de polarisation.

**Transmission des photons**

Les photons peuvent être transmis des émetteurs vers les récepteurs à travers l'espace, dans l'atmosphère, une fibre optique ou une combinaison de ces moyens.

On peut utiliser des lentilles pour la transmission des photons, notamment pour la transmission à travers l'espace ou l'atmosphère. Le cas échéant, on dispose de préférence des couches antireflets sur lesdites lentilles. La taille des lentilles utilisées est de préférence adaptée à la longueur de la transmission spatiale ou atmosphérique des photons.

On peut utiliser pour ajuster la direction d'émission des photons conjugués pour la transmission spatiale ou atmosphérique, des miroirs conjugués qui réfléchissent la lumière émise à l'émetteur. Un émetteur de lumière laser peut par exemple explorer un espace afin d'y détecter le récepteur, le récepteur lui réfléchissant la lumière émise et la direction des photons conjugués étant alors ajustée pour être parallèle ou confondue avec la direction de la lumière réfléchie par les miroirs conjugués.

La lumière émise par l'émetteur de lumière laser peut être de longueur d'onde proche de la longueur d'onde des photons intriqués et être introduite par un prisme dichroïque dans l'objectif utilisé par les photons.

En variante, si la longueur d'onde est la même que celle des photons intriqués, la lumière peut être introduite par un prisme biréfringent lorsque lesdits photons sont de polarisation linéaire, la polarisation de la lumière servant au guidage étant alors perpendiculaire à la polarisation des photons intriqués dirigés vers le même récepteur. Une cellule de Pockels en amont des récepteurs peut servir à guider la lumière vers les miroirs conjugués lors de l'arrivée de la lumière de guidage.

Dans une autre variante, les ondes lumineuses servant à la visée peuvent être émises parallèlement aux photons intriqués mais éloignées par exemple d'une distance de quelques centimètres pour être réfléchies par les miroirs conjugués.

Dans une autre variante, on peut ne pas utiliser de miroir conjugué mais viser néanmoins les récepteurs ou des cibles proches de ceux-ci, l'information suivant laquelle les cibles sont reçues étant communiquée par un autre moyen de communication, notamment par signal hertzien ou par transmission quantique.

La zone à explorer peut être identifiée par reconnaissance cartographique de la zone dans laquelle lesdits récepteurs sont susceptibles de se trouver.

On peut par ailleurs utiliser le modificateur de phase précité lorsque les récepteurs sont en rotation relative par rapport à l'émetteur, notamment à cause de la rotation de la Terre ou des satellites, pour permette aux photons émis dans une direction fixe par rapport à l'émetteur de pénétrer dans chacun des récepteurs avec une direction fixe et déterminée par rapport à celui-ci.

**Procédés d'étalonnage**

Les divers milieux traversés par les photons depuis leur lieu d'émission jusqu'aux deux récepteurs peuvent donner lieu à des modifications de leur phase non nécessairement souhaitées ou prévues.

De plus, ces modifications peuvent être différentes selon que les photons sont dirigés vers le premier ou le deuxième récepteur. Enfin, ces modifications peuvent varier au cours du temps en fonction notamment de la météo ou de la température des matériaux lors de leur utilisation.

On peut étalonner périodiquement le système selon l'invention en faisant absorber les photons par le premier récepteur dans des polarisations appartenant à des paires prédéterminées de polarisations complémentaires et en observant pour chacune de ces paires l'une des deux polarisations possibles dans lesquelles le photon intriqué est détecté par le deuxième récepteur.

Ainsi, l'invention a encore pour objet un procédé d'étalonnage d'un système tel que défini plus haut permettant de déterminer l'état de polarisation d'un photon atteignant le deuxième récepteur en fonction de l'état de polarisation dans lequel son photon intriqué a été absorbé au premier récepteur, procédé comportant les étapes consistant à :

- générer des paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

- absorber les premiers photons au premier récepteur dans une paire de polarisations prédéterminée, stocker celle des deux polarisations possibles dans laquelle chaque photon a été absorbé et arrêter d'envoyer des photons par l'émetteur dès qu'un nombre prédéterminé de chacune des polarisations différentes ont été observées,

- au deuxième récepteur, dupliquer les deuxièmes photons en des flux de photons démultipliés grâce à un dispositif d'amplification, chaque photon démultiplié ayant conservé l'état de polarisation du deuxième photon,

- mesurer les états de polarisation, c'est-à-dire les directions de polarisation et déphasages de chaque flux de photons démultipliés, et stocker ces mesures ainsi que leurs temps de réception,

- transmettre la liste des polarisations et temps de réception des photons stockés du premier récepteur au deuxième récepteur,

- supprimer de la liste des photons reçus au deuxième récepteur les photons ne correspondant pas à des photons reçus au premier récepteur et, de même, supprimer de la liste des photons reçus au premier détecteur les photons dont le photon correspondant n'a pas été reçu au deuxième récepteur, et

- calculer à l'aide d'une part : de la connaissance de l'état de polarisation de deux photons détectés dans des polarisation complémentaires au premier récepteur et dont les photons intriqués ont atteint le deuxième récepteur, et d'autre part de la connaissance de l'état de polarisation des photons intriqués correspondants reçus au deuxième récepteur, la matrice de Jones permettant de déduire de la polarisation des photons reçus au premier récepteur la polarisation des photons reçus au deuxième récepteur.

Le stockage des états de même que le calcul de la matrice de Jones s'effectuent par tout dispositif électronique adapté, par exemple un microcontrôleur.

La matrice de Jones ainsi calculée permet de calculer la polarisation du deuxième photon intriqué reçu au deuxième récepteur en fonction de la polarisation d'absorption du premier photon par l'absorbeur complexe situé au premier récepteur.

Un deuxième étalonnage peut être fait, consistant à déterminer la probabilité pour tout photon arrivant au deuxième récepteur, dont le photon intriqué a été absorbé au cours de son transit vers le premier détecteur, d'appartenir à chaque gamme de paires de polarisations complémentaires détectable ou identifiable par le deuxième récepteur ; la gamme d'une polarisation P étant définie comme l'ensemble des polarisations assimilées par l'instrument de mesure de polarisation comme étant de polarisation P.

Ainsi, l'invention a encore pour objet un procédé d'étalonnage d'un système tel que défini plus haut permettant de déterminer la probabilité de perdre un photon lors de son transit de l'émetteur au premier récepteur, consistant à :

- configurer l'absorbeur complexe du premier récepteur pour absorber les photons reçus au premier récepteur dans l'une de deux polarisations complémentaires d'une paire de polarisations d'absorption,

- générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

- compter le nombre de photons reçus au deuxième récepteur dans chacune des gammes de polarisations détectables par le deuxième récepteur autres que l'une des deux gammes de polarisations des photons intriqués des photons absorbés par le premier détecteur.

On peut ainsi détecter des gammes de polarisations dans lesquelles les photons intriqués de photons perdus en cours de transmission lors de leur transit vers le premier détecteur arrivent en priorité, ou de façon la plus probable, et ainsi de préférence éviter d'utiliser les polarisations d'absorption correspondantes pour transmettre des données du premier au deuxième récepteur.

On peut aussi, en prenant le quotient entre les nombres des photons reçus au deuxième récepteur selon l'une des polarisations correspondant à l'une de deux polarisations d'absorption au premier récepteur, calculer un rapport de transmission des photons entre l'émetteur et le deuxième récepteur.

## Instrument de mesure du deuxième récepteur

L'instrument de mesure du deuxième récepteur comporte de préférence au moins un détecteur de photons agencé pour mesurer la polarisation de la lumière issue de la démultiplication du deuxième photon.

L'instrument de mesure du deuxième récepteur comporte par exemple une succession de lames semi-réfléchissantes disposées en aval de l'amplificateur optique, lesdites lames dirigeant le flux de photons démultipliés, c'est-à-dire le flux lumineux, avec une égale intensité vers des instruments de mesure de polarisation agencés par exemple pour mesurer l'intensité du flux selon deux axes perpendiculaires et/ou le déphasage de la lumière entre ces deux mêmes axes.

La lumière peut aussi être dirigée vers divers filtres polarisants après être passée à travers une ou une succession de lentilles qui agrandissent la section du faisceau lumineux, permettant ainsi à une pluralité de miroirs ou de lentilles de diriger des portions de ce faisceau lumineux vers les divers instruments de mesure de polarisation.

Les divers instruments de mesure de polarisation permettent de préférence de :

- mesurer l'intensité de la composante du champ électrique de la lumière selon un premier axe x,
- mesurer l'intensité de la composante du champ électrique de la lumière selon un deuxième axe y perpendiculaire au premier axe x,
- mesurer le déphasage entre la lumière selon son axe x et la lumière selon son axe y,
- et, de préférence, mesurer le déphasage entre la lumière selon son axe x', bissectrice de x et y, et la lumière selon son axe y'.

La mesure de l'intensité de la lumière selon deux axes perpendiculaires se fait par exemple par la séparation de la lumière selon deux axes perpendiculaires par une lame ou un prisme biréfringent suivi de deux capteurs d'intensité lumineuse placés aux sorties de ladite lame ou dudit prisme. La mesure du déphasage entre deux composantes perpendiculaires se fait par exemple par la séparation de la lumière selon deux axes perpendiculaires par une lame ou un prisme biréfringent suivi, pour l'onde polarisée selon l'un des deux axes, d'une rotation de cet axe de polarisation de 90°, par exemple grâce à un matériau rotatif ou chiral ou par la succession de deux lames quart d'onde, puis une projection conjointe à travers des fentes de Young de ces deux ondes, dont l'une a subi la rotation de son champ électrique, sur un écran, les interférence des deux sources de lumière dessinant des franges dont les positions dépendent dudit déphasage.

## Amplificateur optique

On désigne par "amplificateur optique" un dispositif permettant de dupliquer un photon qui y est introduit, notamment, le deuxième photon d'une paire de photons intriqués, en conservant son état de polarisation.

De préférence, l'amplificateur optique est un amplificateur à fibre dopée.

On peut par exemple utiliser un amplificateur à erbium (EDFA), par exemple de 4 m de long, dans lequel le photon à amplifier est introduit en même temps qu'une onde amplificatrice de longueur d'onde plus courte, ce qui permet d'amplifier l'onde correspondant au photon introduit, avec des gains pouvant être de l'ordre de 37db/m.

On peut aussi utiliser un amplificateur à fibre dopée (DFA) utilisant un dopant différent de l'erbium.

En variante, l'amplificateur optique est par exemple un amplificateur à cavité verticale (VCSOA), ou encore un amplificateur du type à semi-conducteur (SOA).

## Couches antireflets

Pour éviter la perte de photons, on dispose de préférence des couches antireflets aux interfaces entre les milieux transparents adjacents d'indice différent traversés par les photons, ainsi qu'aux interfaces des prismes et lames biréfringentes traversées par des photons, la couche antireflet étant adaptée de préférence à l'indice ou aux indices du matériau et à l'angle ou aux angles d'incidence et aux directions de polarisation ainsi qu'à la longueur d'onde du photon qui doit la traverser.

## Filtres dichroïques

Le premier et/ou le deuxième récepteur comportent de préférence un ou plusieurs filtres dichroïques permettant de ne laisser passer que les photons d'une longueur d'onde donnée, notamment un prisme constitué d'un matériau transparent dispersif, le ou les filtres étant de préférence disposés devant l'instrument ou les instruments de mesure, ou devant le sélecteur optique pour le premier récepteur, et ce notamment si les indices de réfraction des matériaux non linéaires sont modifiés par application de flux lumineux puissants.

## Affectation des photons à l'information avec horloges synchronisées

Lorsque les photons arrivent au deuxième récepteur, il est utile de pouvoir différencier s'ils doivent être affectés à l'information transmise, s'il s'agit d'une information transmise plusieurs fois ou encore s'il s'agit d'une information qui n'aurait pas été codée sur une paire de photons intriqués.

En effet, les émissions de photons sont parfois irrégulières, et un émetteur de type SPDS tel que mentionné plus haut peut par exemple émettre une double paire de photons sans que cela ne soit souhaité.

L'émetteur et chacun des récepteurs comportent de préférence une horloge, les horloges de l'émetteur et des récepteurs étant synchronisées entre elles.

Cela permet, lorsque combiné avec la connaissance du temps de vol des photons entre l'émetteur et chacun des récepteurs, de déterminer des périodes de codage et de réception, de préférence répétitives, pendant lesquelles un photon peut être codé au premier récepteur pour les périodes de codage et son photon intriqué arriver au deuxième récepteur pendant les périodes de réception.

Si une pluralité de photons sont reçus pendant une période de réception, le premier récepteur conserve un état inchangé jusqu'à un moment compris, par exemple, entre un quart du temps de non-émission après la fin la période de réception et la moitié du temps de non-émission δt' avant la prochaine période de réception.

Le deuxième récepteur enregistre de préférence les bits reçus pour chaque période de réception. Il transmet alors avantageusement au premier récepteur de temps en temps, notamment si le dispositif utilise la réflexion pour transmettre un bit ou un trit, par exemple tous les 3000 intervalles de réception, ou tous les 100 intervalles de réception sans photon, une liste des périodes de réception pour lesquelles il n'a pas reçu de photon, le photon transmis ayant pu être perdu ou aucun photon n'ayant été émis par l'émetteur pendant cette période, sans que le premier émetteur ne sache s'il a réfléchi de photons durant ces mêmes périodes, notamment si le dispositif ne dispose pas de détecteur de photons.

La transmission de cette liste peut se faire par communication instantanée à l'aide du procédé selon l'invention décrit plus bas, ou par un moyen de communication classique. A la réception de cette liste, le premier récepteur transmet alors les bits correspondant à ces périodes de transmission, pour lesquelles aucun photon n'a atteint le deuxième récepteur.

En variante, le premier récepteur n'utilise pour transmettre l'information que les deux instruments de mesure différents, l'un détectant les polarisations linéaires, l'autre les polarisations circulaires.

Le premier récepteur retransmet alors chaque bit tout en sélectionnant l'instrument de mesure approprié au bit qu'il veut transmettre pour cette période de transmission, et conserve de préférence le sélecteur dans le même état jusqu'à la fin de la période de transmission pour laquelle il reçoit un photon, cela lui permettant de sélectionner l'instrument de mesure à utiliser pour la transmission du bit suivant.

Le deuxième récepteur, en recevant les photons pendant les périodes de transmission, et s'il en reçoit, mesure pour chaque période de transmission leur état de polarisation et en déduit le bit qu'il doit ajouter à la liste des bits reçus.

Si la ligne de transmission entre l'émetteur et le premier récepteur a une certaine opacité et peut absorber une certaine proportion des photons qui y transitent, certains photons peuvent arriver au deuxième récepteur pendant les périodes de réception avec des polarisations aléatoires.

Le deuxième récepteur peut alors être configuré pour reconnaître au moins certains des photons arrivant dans un état de polarisation qui ne peut être celui d'un photon intriqué absorbé ou réfléchi au premier récepteur.

Décalage des horloges

De préférence, les horloges des composants du système, à savoir de l'émetteur et des deux récepteurs, sont configurées pour tenir compte du phénomène d'écoulement différent du temps en différents endroits, notamment des différentes altitudes de chacun des composants.

Synchronisation des périodes de transmission entre récepteurs

On peut mettre en œuvre un procédé permettant aux premier et deuxième récepteurs de synchroniser leurs horloges.

Par exemple, lors de la mesure d'un premier photon, le premier récepteur note en utilisant sa propre horloge le temps lors duquel ledit photon a heurté l'instrument de mesure.

Le temps noté est par la suite transmis au deuxième récepteur ainsi que, de préférence, les références de l'intervalle de transmission, notamment le temps de et facultativement la durée durant laquelle le photon a été attendu.

Le deuxième récepteur note le temps de réception du deuxième photon afin d'ajuster sa propre horloge pour que le décalage entre le début de la période de transmission et le temps lors duquel le premier photon a heurté l'instrument de mesure du premier récepteur soit le même que le décalage entre le début de la période de réception du deuxième photon au deuxième récepteur et le temps donné par l'horloge pour la réception du deuxième photon.

Si les lignes de transmission entre l'émetteur et l'un ou l'autre des récepteurs absorbent certains photons, l'émetteur peut envoyer des photons en nombre prédéterminé, ou pendant une durée prédéterminée, et chacun des deux récepteurs peut noter le temps de réception moyen de chacun des photons puis l'un des récepteurs peut communiquer à l'autre récepteur ce dit temps moyen.

Le temps moyen peut être calculé en déterminant la moyenne des temps de réception de chacun des photons ou seulement du premier et du dernier photon reçu. Le nombre prédéterminé de photons envoyés ou la durée de leurs envois sont de préférence ajustés notamment en fonction du rapport de transmission / perte de photons sur chacun des deux trajets entre l'émetteur et les récepteurs, et la fréquence moyenne d'envoi des photons.

Les durées de transit des photons entre l'émetteur et chacun des récepteurs étant différentes, la synchronisation des horloges entre chacun des récepteurs peut être différente suivant qu'il s'agisse de transmission des informations dans un sens ou dans l'autre. Chacun des récepteurs peut alors avoir un registre de synchronisation servant à incrémenter ou au contraire soustraire au temps de l'horloge dudit récepteur un laps de temps ajusté lors de la synchronisation, pour en déduire le temps d'une horloge synchronisée pour la réception d'informations en provenance de l'autre récepteur.

Transmission entre émetteur et récepteur

On peut mettre en œuvre un procédé permettant de synchroniser les périodes d'envoi des photons aux récepteurs et les périodes de réception aux récepteurs, ces périodes étant des intervalles de temps pendant lesquels des photons peuvent quitter l'émetteur ou atteindre le récepteur.

A cette fin, l'émetteur peut émettre un premier signal lumineux bref suivi ou précédé d'autres signaux lumineux composant un message, de préférence signés par une signature numérique indiquant le temps précis, sur son horloge, de l'envoi du signal.

A réception dudit premier signal lumineux, le récepteur note le temps de réception puis lit le temps d'envoi du signal, détermine la différence entre le temps d'envoi du signal et le temps du début de la période de transmission des photons, pendant laquelle le signal a été envoyé, ou si celui-ci a été envoyé en dehors d'une période de transmission, le début de la période de transmission précédente, et fait de même avec le temps de réception du signal et le temps du début de la période de réception.

Si la différence entre la date d'émission du signal et le début de la période de transmission est plus grande que la différence entre la date de réception et le début de la période de réception, le récepteur peut avancer le début de la période de transmission, ou l'inverse dans le cas contraire.

L'étalonnage est avantageusement répété plusieurs fois et les résultats sont moyennés, cela permettant d'ajuster les horloges avec une précision supérieure à l'imprécision des temps d'envoi et de réception desdits signaux lumineux.

La longueur d'onde utilisée pour le signal lumineux est de préférence la même que la longueur d'onde des photons intriqués, de façon à ce que celui-ci puisse être transmis à la même vitesse que les photons intriqués.

**Affectation des photons à l'information sans horloge synchronisée**

En variante aux horloges synchronisées, le premier récepteur peut comporter des détecteurs-transmetteurs et un élément d'attente, par exemple un réflecteur agencé pour réfléchir le premier photon avec une polarisation prédéterminée différente des polarisations détectables par les détecteurs-transmetteurs, ou encore un élément agencé pour absorber le premier photon dans une polarisation prédéterminée différente des polarisations des détecteurs-transmetteurs.

Les polarisations des détecteurs-transmetteurs sont de préférence complémentaires, de telle sorte que tout photon dirigé vers un élément d'attente absorbant est absorbé.

Les détecteurs-transmetteurs sont de préférence agencés pour détecter la polarisation des photons dans au moins quatre polarisations différentes, ces polarisations étant groupées en paires complémentaires de telle sorte que tout photon dirigé vers un détecteur-transmetteur soit ainsi détecté et absorbé quelle que soit sa polarisation initiale.

Le ou les détecteurs-transmetteurs du premier récepteur sont utilisés pour envoyer les informations par sélection de la paire de détecteurs utilisée.

Chaque photon reçu par le premier récepteur pendant une période prédéterminée, aussi désignée comme "période de repos", après la réception d'un photon ayant servi à un envoi d'information, est envoyé vers l'élément d'attente, la durée de cette période prédéterminée étant de préférence fixée et de préférence supérieure à deux fois l'imprécision de l'horloge des récepteurs, et le commencement de cette période de repos étant déterminé par le capteur ou l'un des deux capteurs absorbant le photon ayant été utilisé pour envoyer l'information.

Le deuxième récepteur est de préférence agencé pour, d'une part,

- ignorer les photons appairés à des photons envoyés vers l'élément d'attente, d'autre part,
- interpréter deux photons successifs non appairés à des photons envoyés vers l'élément d'attente comme des bits successifs si ceux-ci sont séparés d'au moins la période de repos, à laquelle est soustraite l'imprécision de l'horloge des récepteurs, et enfin,
- interpréter deux photons reçus successivement en un temps par exemple inférieur ou égal à trois quart de la période de repos comme représentant un même bit.

Le deuxième récepteur peut ainsi détecter une erreur dans la transmission de l'information si : deux photons consécutifs de polarisations différentes non appairés à des photons envoyés vers l'élément d'attente sont reçus en un temps inferieur à la période de repos moins l'imprécision de l'horloge des récepteurs.

Ce procédé présente l'avantage de ne pas nécessiter de placer un commutateur à l'émetteur pour restreindre les émissions de photons intriqués, ni de synchronisation d'horloge.

Le ou les détecteurs-transmetteurs des premiers récepteurs peuvent aussi servir en même temps d'élément d'attente, notamment si la polarisation dans laquelle ils détectent les photons est ajustable et peut donc être ajustée sur la polarisation utilisée par l'élément d'attente pour absorber les photons.

Dispositif anti-bruit

Les amplificateurs optiques ont tendance à émettre des photons en sens inverse du signal de propagation, soit lors de l'amplification du signal, soit en absence de signal, après que des molécules ou des atomes du milieu amplificateur aient été excités par un signal pompe.

Le deuxième récepteur comporte par exemple un commutateur disposé devant l'amplificateur optique, afin de limiter le nombre de photons émis par l'amplificateur vers la source de photons intriqués du dispositif.

Le commutateur du deuxième récepteur est par exemple configuré pour absorber ou réfléchir le ou les photons subséquents à un premier photon atteignant ledit deuxième récepteur dans un intervalle de temps prédéterminé.

Le commutateur du deuxième récepteur peut être relié à l'instrument de mesure du deuxième récepteur, afin de ne plus laisser passer de lumière dans un sens ou dans l'autre dès l'arrivée d'un premier photon et jusqu'à ce que le photon suivant soit attendu ou un temps prédéterminé avant ce moment, par exemple la moitié de la période de repos définie plus haut.

Alternativement, le commutateur du deuxième récepteur peut ne laisser passer les photons que lors des périodes où ils sont attendus, notamment pendant les intervalles de temps de traitement des photons précités.

Affectation des photons à l'information sans horloge synchronisée utilisant des moyens de transmission optiques de faible transparence

Les fibres optiques, quoique transparentes, ne transmettent pas tous les photons présentés à leur entrée. Une perte de 0.20 dB par kilomètre est courante, faisant par exemple perdre 10 dB en 50 km soit 90% des photons.

L'effet des photons perdus en transit entre l'émetteur et le premier récepteur est cependant différent de l'effet de la perte des photons perdus lors de leur transit vers le deuxième récepteur ; les photons intriqués des photons perdus entre l'émetteur et le premier récepteur pouvant arriver au deuxième récepteur avec une polarisation quelconque correspondant à la polarisation du photon intriqué absorbé dans la ligne allant vers le premier récepteur, alors que la perte d'un photon dans la ligne conduisant au deuxième récepteur provoque nécessairement la disparition d'un photon potentiellement porteur d'information, c'est-à-dire dont le photon intriqué a atteint le premier récepteur.

De plus, les polarisations des photons arrivant au deuxième récepteur après que leurs photons intriqués ont été absorbés en transit vers le premier récepteur ne sont pas nécessairement équiréparties parmi toutes polarisations possibles observables.

On utilise donc de préférence pour la transmission d'information, des paires de polarisations complémentaires pour lesquelles des polarisations correspondantes observées au deuxième récepteur sont les moins nombreuses lorsque le photon intriqué du photon détecté au deuxième récepteur a été absorbé pendant son transit vers le premier récepteur.

L'invention a encore pour objet un procédé d'étalonnage d'un système tel que défini plus haut, permettant de déterminer deux matrices de Jones dont l'une permet de calculer la polarisation d'un photon arrivant au deuxième récepteur en fonction de la polarisation d'un photon absorbé au premier récepteur, dans lequel, de préférence, la quantité de polarisations différentes observables au deuxième récepteur est supérieure au double de l'inverse du rapport de transmission de photons entre l'émetteur et le premier récepteur, le procédé consistant à :

- configurer l'absorbeur complexe du premier récepteur pour absorber les photons reçus au premier récepteur dans l'une de deux polarisations complémentaires d'une paire de polarisations d'absorption,

- générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

- compter pour chaque polarisation dans laquelle un photon est reçu au deuxième récepteur le nombre de photons ayant atteint ledit deuxième récepteur avec cette même polarisation,

- arrêter d'envoyer les photons quand un nombre prédéterminé de photons a été reçu au deuxième récepteur,

- déterminer les deux polarisations dans lesquelles les photons ont été reçus le plus souvent au deuxième récepteur, ces polarisations étant considérées comme correspondant aux polarisations d'absorption des photons au premier récepteur,

- calculer les deux matrices de Jones possibles de transformation des polarisations permettant de déduire la polarisation d'un photon reçu au deuxième récepteur de la polarisation d'un photon reçu au premier récepteur.

L'enregistrement de la polarisation d'au moins un photon reçu au premier récepteur et de celle de son photon intriqué reçu au deuxième récepteur, la correspondance étant faite par exemple grâce à leurs temps de réception respectifs, permet par ailleurs de pouvoir sélectionner, parmi les deux matrices de Jones calculées, celle qui permet de calculer la polarisation des photons reçus au deuxième récepteur en fonction de la polarisation de leurs photons intriqués éventuellement reçu au premier récepteur.

On peut encore utiliser le procédé suivant pour transmettre des informations du premier au deuxième récepteur, procédé comportant les étapes consistant à :

- générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués relativement à leur état de polarisation,

- pour chaque information devant être transmise, configurer l'absorbeur complexe du premier récepteur pour absorber un nombre NPT de photons de transmission dans une paire de polarisations complémentaires prédéterminée appelée "paire de polarisation d'absorption" correspondant à l'information à transmettre, puis, si l'information suivante à transmettre n'est pas déjà connue ou est identique à l'information venant d'être transmise, configurer l'absorbeur dans une paire de polarisations appelée "paire de polarisations d'attente" et, si ladite information est identique à l'information qui vient d'être transmise, compter au moins NPT photons absorbés dans cette "paire de polarisations d'attente".

- au deuxième récepteur, compter, pour chaque paire de polarisations complémentaires, le nombre de photons reçus dans l'une des deux polarisations desdites paires de polarisation depuis l'éventuelle dernière réception d'un signal. Dès que ce compteur dépasse pour l'une des paires un nombre seuil NSP prédéterminé et que la paire de polarisations complémentaires est différente de celle du dernier signal reçu, considérer l'information correspondant à cette paire de polarisations comme étant un nouveau signal, et si cette dernière information ne correspond pas à la paire de polarisations d'attente, ajouter cette information à la liste des informations reçues.

Alternativement, au premier récepteur, l'absorbeur de polarisation est systématiquement configuré pour absorber au moins NPT photons dans l'une des deux polarisations d'attente après l'envoi de toute information.

Par exemple, pour transmettre une information, on utilisera :

- des lignes de transmission entre l'émetteur et chacun des récepteurs présentant une atténuation de 10 dB, soit une perte de 90% des photons,
- des lignes de transmission entre les absorbeurs complexes, configurées pour absorber les photons dans 450 paires de polarisations complémentaires, ces paires représentant 80% des photons reçus au deuxième récepteur lors d'une absorption de leurs photons intriqués dans leurs transits vers le premier récepteur,
- on peut choisir 200 photons pour NPT et 6 pour NSP, ce qui permet d'obtenir, selon les calculs de l'inventeur, un taux d'erreur de transmission qui serait alors inférieur à 1 pour 10 000.

Dans un autre exemple, avec un taux d'erreur de 97% correspondant à une atténuation du signal de 15 dB, en utilisant 450 paires de polarisations complémentaires, chaque polarisation et déphasage étant écarté l'un de l'autre d'environ 5°, le codage de 1200 photons au premier récepteur (donc NPT=1200), le nombre seuil NSP étant fixé à 14, permet d'obtenir, selon les calculs de l'inventeur, un taux d'erreur inférieur à 1 pour 150 000 si les photons qui en résultent au deuxième récepteur de photons absorbés pendant leurs transits vers le premier récepteur sont équirépartis sur toutes les polarisations observables.

### Traitement de paires de photons envoyées simultanément

L'émetteur peut parfois envoyer des paires de photons intriqués très proches les unes des autres. Les détecteurs de photons situés au premier récepteur comptent donc, de préférence, le nombre de photons absorbés et non seulement le nombre d'impacts de photons sur ledit premier récepteur. Ce comptage peut par exemple tenir compte de l'intensité de l'onde électromagnétique incidente sur les détecteurs de photons.

Des groupes de photons peuvent ainsi arriver presque simultanément au deuxième récepteur, celui-ci étant incapable de discriminer les polarisations des photons les unes des autres. Le détecteur de polarisation pouvant détecter une polarisation moyenne de tous les photons détectés "simultanément", la polarisation des groupes de photons arrivant simultanément au deuxième récepteur, c'est-à-dire dont l'intensité lumineuse générée est par exemple supérieure de 50% à l'intensité généré par un seul photon, ne donne avantageusement pas lieu à une incrémentation des compteurs de photons reçus dans diverses polarisations. Il se peut cependant parfois qu'une pluralité de photons atteignent le premier récepteur mais qu'un seul de leurs photons intriqués atteigne le deuxième récepteur, celui-ci étant alors compté.

**Performances du dispositif**

L'utilisation de lignes sans perte ou avec peu de pertes entre l'émetteur et le premier récepteur, laissant par exemple transiter les photons dans le vide, permet de réduire ou d'éviter les photons reçus au deuxième récepteur avec une polarisation aléatoire.

De même, l'utilisation au deuxième récepteur d'instruments de mesure précis permettant soit d'augmenter le nombre de paires de polarisations complémentaires, soit d'ignorer un grand nombre de photons aux polarisations aléatoires peut permettre :

• d'augmenter la distance de transmission des photons,

• d'augmenter le débit binaire en diminuant le nombre de photons de transmission NPT.

Une vitesse de commutation accrue de la polarisation de l'absorbeur complexe du premier récepteur permet d'augmenter la fréquence d'envoi des photons intriqués envoyés par l'émetteur.

Une précision temporelle accrue des détecteurs de polarisation du deuxième récepteur, qui permet de discerner le parasitisme de divers photons reçus très rapprochés dans le temps les uns des autres, permet aussi l'utilisation d'un flux plus grand de photons intriqués, mais aussi de diminuer le nombre de réceptions de photons reçus "simultanément", comme décrit plus haut.

Ce procédé présente l'avantage de ne pas nécessiter de mise en place d'un commutateur à l'émetteur pour restreindre les émissions de photons intriqués, ni de synchronisation d'horloge.

**Traitement du retour des photons vers l'émetteur**

Des photons sont parfois réfléchis vers l'émetteur depuis les récepteurs. Pour éviter qu'ils soient à nouveau réfléchis par l'émetteur vers l'un des récepteurs, la cavité ou le matériau dans lequel sont produits les photons intriqués par mélange d'ondes, dont l'indice de réfraction est non linéaire, est de préférence entouré ou recouvert d'un matériau absorbant une lumière ayant une longueur d'onde égale à celle des photons intriqués.

**Procédés de communication quantique**

L'invention a encore pour objet un procédé de communication quantique utilisant le système défini plus haut, comportant les étapes consistant à :

- générer une paire de photons intriqués à partir d'un émetteur, le premier photon de la paire étant émis vers un premier récepteur et le deuxième photon de la paire étant émis simultanément vers un deuxième récepteur, les premier et deuxième photons étant intriqués, le deuxième récepteur étant situé sur le chemin de propagation du deuxième photon plus loin de l'émetteur que le premier récepteur, de telle sorte qu'il y arrive après,

- modifier, grâce à un modificateur de polarisation, l'état de polarisation du premier photon lorsqu'il atteint le premier récepteur en un état de polarisation dépendant de l'information à transmettre, l'état étant sélectionné parmi au moins deux paires différentes de polarisations d'absorption complémentaires, à l'exception d'exactement deux paires de polarisations linéaires perpendiculaires dont les directions de polarisation de l'une des paires sont à 45° des directions de polarisation de l'autre paire,

- absorber, grâce à un instrument d'absorption, le premier photon dans l'une des deux polarisations complémentaires de la paire sélectionnée,

- au deuxième récepteur, dupliquer le deuxième photon en un flux de photons démultipliés grâce à un dispositif d'amplification, la lumière ainsi créée ayant conservé l'état de polarisation du deuxième photon,

- mesurer l'état de polarisation moyen du flux de lumière et déterminer selon cette mesure l'état de polarisation du premier photon, afin d'en déduire l'information transmise par le premier récepteur.

La paire de photons complémentaires est de préférence sélectionnée parmi au moins trois paires différentes de polarisations complémentaires.

La paire de polarisations complémentaires est par exemple sélectionnée parmi 210 paires distinctes de polarisations d'absorption, notamment parmi des polarisations espacées de 9° dans leur direction de polarisation et déphasées de 9°.

L'invention a encore pour objet un procédé de communication quantique utilisant le système défini plus haut, comportant les étapes consistant à :

• générer une paire de photons intriqués à partir d'un émetteur, le premier photon de la paire étant émis vers un premier récepteur et le deuxième photon de la paire étant émis simultanément vers un deuxième récepteur, les premier et deuxième photons étant intriqués, le deuxième récepteur étant situé sur le chemin de propagation du deuxième photon plus loin de l'émetteur que le premier récepteur, de telle sorte qu'il y arrive après,

• sélectionner, selon l'information à transmettre, d'absorber ou non le premier photon dans l'une de deux paires de polarisations complémentaires lorsqu'il atteint le premier récepteur, grâce à un sélecteur optique dirigeant, ou non, ledit photon vers un instrument ou vers une pluralité d'instruments,

• dans le cas où la sélection conduit à ne pas absorber le photon dans une polarisation prédéfinie, piéger ledit premier photon dans un dispositif de protection permettant d'éviter son absorption au moins tant que le deuxième photon n'a pas atteint le deuxième récepteur,

• au deuxième récepteur, dupliquer le deuxième photon en un flux de photons démultipliés grâce à un dispositif d'amplification, chaque photon démultiplié ayant conservé l'état quantique du deuxième photon,

• mesurer l'état quantique moyen du flux de photons démultipliés et déterminer selon cette mesure si le premier photon a été absorbé au premier récepteur, et/ou avec quel instrument, afin d'en déduire l'information transmise par le premier récepteur.

De préférence, la polarisation de la paire de photons intriqués est indéterminée dans la ou les polarisations de la paire de polarisations complémentaires dans laquelle ou lesquelles les instruments du premier récepteur les absorbent.

La paire de photons intriqués atteint par exemple les récepteurs avec une polarisation intriquée linéaire, l'une des deux polarisations complémentaires d'absorption étant circulaire, le deuxième récepteur étant agencé pour distinguer si la polarisation moyenne du flux de photons démultipliés est circulaire ou linéaire, et déterminer selon cette distinction si le premier photon a été mesuré ou non.

En variante, la paire de photons intriqués atteint les récepteurs avec une polarisation intriquée circulaire, l'état quantique d'absorption des photons étant une polarisation linéaire, le deuxième récepteur étant agencé pour distinguer si la polarisation moyenne du flux de photons démultipliés est circulaire ou linéaire, et déterminer selon cette distinction si le premier photon a été mesuré ou non.

En variante, la paire de photons intriqués atteint les récepteurs avec une polarisation linéaire verticale ou horizontale, l'état quantique mesuré au premier récepteur étant une polarisation linéaire à 45° ou -45° de la verticale ou de l'horizontale, le deuxième récepteur étant agencé pour distinguer si la polarisation linéaire moyenne du flux de photons démultipliés (P20) est à 45 ou -45°, ou bien la verticale ou l'horizontale, et déterminer selon cette distinction si le premier photon a été mesuré ou non.

## Transmission d'information

Le système selon l'invention et le procédé de communication quantique décrit plus haut permettent de transmettre entre le premier et le deuxième récepteur des informations soit de type binaire, sous forme de bits, soit des valeurs discrètes ou continues.

De préférence, plusieurs paires de photons intriqués sont générées successivement par l'émetteur, chaque paire de photons permettant la transmission d'une information, par exemple de type binaire, du premier récepteur au deuxième récepteur.

On peut par exemple choisir d'absorber le premier photon au premier récepteur pour transmettre un bit 1 et le réfléchir pour transmettre un bit 0. La mesure au deuxième récepteur de l'état quantique moyen du flux de photons démultipliés permet alors de déterminer si un bit 1 ou un bit 0 est transmis depuis le premier récepteur de manière quasi-instantanée.

Plusieurs procédés peuvent être mis en œuvre afin de sécuriser la communication et d'éviter des erreurs de transmission, dues par exemple à des doubles paires de photons émises simultanément.

Par exemple, durant des intervalles de temps préalablement établis grâce aux horloges décrites plus haut, seul le premier photon atteignant un récepteur est de préférence considéré, les photons suivants étant ignorés.

Comme décrit plus haut, les photons peuvent être comptés lorsqu'ils arrivent à un détecteur de polarisation. Si le comptage révèle l'arrivée de plus d'un photon durant un intervalle de temps prédéfini, le bit n'est pas transmis durant cet intervalle, et est par exemple transmis dans l'intervalle de temps suivant ou, de préférence, le même bit est retransmis à nouveau.

Au deuxième récepteur, le comptage des photons arrivant dans l'intervalle de temps où ils sont attendus peut avantageusement permettre de créer une liste temporaire de bits non reçus.

## Communication bidirectionnelle

Pour permettre une communication bidirectionnelle, c'est-à-dire pour permettre à chacun des deux récepteurs de transmettre des informations à l'autre récepteur, on peut utiliser une pluralité d'émetteurs.

Le système selon l'invention peut notamment comporter un deuxième émetteur pouvant générer une ou plusieurs paires de photons intriqués, le deuxième émetteur étant situé plus près du deuxième récepteur que du premier récepteur.

En variante, on peut faire parcourir un chemin indirect à au moins une partie des photons de manière à en rallonger le temps de transport vers l'un des récepteurs, par exemple en faisant se réfléchir les photons sur un ou des miroirs intermédiaires, ou en les faisant traverser des milieux ayant des indices de réfraction élevés, ou encore en les transportant dans des fibres optiques de longueurs variées.

Ce parcours allongé peut par exemple alterner à cadence fixe ou variable en fonction des besoins, avec le parcours non allongé de façon à pouvoir utiliser les photons intriqués parfois pour transmettre l'information d'un point à un autre, parfois dans l'autre sens. Des commutateurs optiques en amont des récepteurs et synchronisés avec le commutateur apposé à l'émetteur pouvant envoyer les photons sur un chemin rallongé, peuvent être installés pour envoyer lesdits photons vers des récepteurs correspondant au premier type de récepteur, tel que décrit plus haut, ou au contraire au deuxième type de récepteur.

Procédé de transmission d'une clé et de vérification de la non-écoute de cette transmission.

On peut vérifier la non-écoute d'une information transmise par un flux de photons de l'émetteur au deuxième récepteur en mettant en œuvre les étapes suivantes :

- le deuxième récepteur établit une première liste des dates de réception des photons ayant véhiculé l'information ainsi que la polarisation relative désignant celle des deux polarisations complémentaires dans laquelle chaque photon a été reçu ;
- le deuxième récepteur génère un message comportant la liste collectée à l'étape précédente, crée une signature électronique de cette liste et transmet ladite liste ainsi que la signature au récepteur ;
- le premier récepteur reçoit la liste et la signature puis vérifie ladite signature ;
- le premier récepteur établit une deuxième liste constituée des éléments de la première liste dont les polarisations relatives des photons reçus par les premier et deuxième récepteurs sont égales, ou bien dont le photon intriqué n'a jamais atteint le premier récepteur, deux photons intriqués ayant des polarisations relatives différentes ;
- si le nombre d'éléments de la deuxième liste restreinte aux paires de photons intriqués dont chacun des deux photons a atteint leurs récepteurs respectifs est inférieur au produit d'un rapport prédéterminé par le décompte des éléments de la première liste restreinte aux paires de photons intriqués dont chacun des deux photons a atteint leurs récepteurs respectifs, alors l'information est déclarée avoir été transmise non écoutée.

On peut ensuite avoir les étapes suivantes :

- si l'information est déclarée avoir été transmise non écoutée, alors la deuxième liste est envoyée signée par le premier récepteur au deuxième récepteur, puis une troisième liste est créée par le premier récepteur, constituée des polarisations relatives des photons figurant dans la première liste et ne figurant pas dans la deuxième liste,
- à réception de la deuxième liste par le deuxième récepteur et après vérification de la signature, la troisième liste est recréée dans le deuxième récepteur à l'aide des première et deuxième listes, puis un message signé, confirmant la bonne réception de la deuxième liste, est envoyé par le deuxième récepteur au premier récepteur ; et
- le deuxième récepteur utilise la troisième liste comme clé partagée avec le premier récepteur, et lors de la réception par le premier récepteur du message transmis par le deuxième récepteur à l'étape précédente, le premier récepteur utilise la troisième liste comme clé partagée dans des échanges avec le deuxième récepteur.

Un filtre polarisant peut être disposé en amont du deuxième récepteur.

## Procédé de comparaison d'un premier jeu de données et d'un deuxième jeu de données

L'invention concerne également un procédé, mis en œuvre par au moins un appareil, pour comparer un premier jeu de données et un deuxième jeu de données, notamment en vue de déterminer si ces deux jeux de données sont identiques, ce procédé comportant les étapes consistant à :

a) mélanger un nombre, appelé nombre mélangeur, au premier jeu de données, à l'aide d'une fonction de mélange, afin d'obtenir des données mélangées,
b) hacher les données mélangées à l'aide d'une fonction de hachage, et
c) comparer le hachage ainsi obtenu à l'étape b) avec un troisième jeu de données supposé être le hachage du deuxième jeu de données mélangé avec le même nombre mélangeur que celui utilisé à l'étape a) et à l'aide de la même fonction de mélange.

Grâce à l'invention, et en particulier au mélange du premier jeu de données avec un nombre mélangeur avant le hachage, il devient très improbable de pouvoir créer des données semblables à ce premier jeu de données qui, après avoir été mélangées avec le même nombre mélangeur, auront le même hachage que le premier jeu de données mélangé.

De préférence, le procédé selon l'invention ne nécessite pas la présence simultanée de deux jeux de données dans l'appareil.

De préférence, le nombre mélangeur est généré aléatoirement.

Le nombre mélangeur est de préférence généré par l'appareil. En variante, le nombre mélangeur est généré par un autre appareil de confiance.

La génération du nombre mélangeur peut s'effectuer sur la base d'une paire de valeurs d'entrée qui sont des grandeurs physiques dont au moins une varie en continu, comme par exemple la température et le temps, ou d'un phénomène quantique. Par exemple, une telle génération peut être basée sur celle des deux fentes de Young qu'un photon choisit d'utiliser pour passer à travers une lame.

De préférence, l'opération de mélange de l'étape a) est effectuée par l'appareil. En variante, le mélange est effectué par un autre appareil de confiance.

La fonction de mélange combine le premier jeu de données et le nombre mélangeur. Il s'agit de préférence d'une fonction logique XOR qui additionne les bits du premier jeu de données à ceux du nombre mélangeur, un par un. Comme la taille du nombre mélangeur est généralement inférieure à la taille du premier jeu de données, il est possible d'additionner au moyen d'un XOR les bits du nombre mélangeur aux premiers ou derniers bits du premier jeu de données.

Le nombre mélangeur peut avoir la même taille que le premier jeu de données. Dans ce cas, l'addition au moyen de la fonction XOR est effectuée sur tous les bits, un par un.

Alternativement, la fonction de mélange est une fonction de suffixe consistant à ajouter le nombre mélangeur à la fin du premier jeu de données.

La fonction de mélange peut même être une fonction de cryptage utilisant le nombre mélangeur comme clé de cryptage pour crypter le premier jeu de données.

Dans un mode de réalisation, la fonction de mélange est une combinaison d'une fonction XOR, d'une fonction de suffixe consistant à ajouter le nombre mélangeur à la fin du premier jeu de données et d'une fonction de cryptage utilisant le nombre mélangeur comme clé de cryptage pour crypter le premier jeu de données.

De préférence, les données de l'étape b) sont hachées par l'appareil. En variante, le hachage est effectué par un autre appareil de confiance.

De préférence, la fonction de hachage est choisie parmi SHA1, SHA2, SHA256 et MD5 et la fonction de Jenkins.

## Premier procédé de vérification de l'intégrité d'un message

Une première variante du procédé selon l'invention est un procédé permettant de vérifier au moyen de l'appareil l'intégrité d'un message provenant d'un expéditeur, le procédé comportant les étapes consistant à :

    i. recevoir, au moyen de l'appareil, le message et un identifiant du message, ledit message formant le premier jeu de données,
    ii. générer le nombre mélangeur,
    iii. mettre en œuvre les étapes a) et b), lors desquelles le message est mélangé avec le nombre mélangeur puis haché,
    iv. crypter facultativement le nombre mélangeur,
    v. envoyer, au moyen de l'appareil, l'identifiant du message et le nombre mélangeur facultativement crypté à l'expéditeur du message,
    vi. recevoir, au moyen de l'appareil, le troisième jeu de données cryptées, de préférence avec l'identifiant du message, en provenance de l'expéditeur,
    vii. décrypter le troisième jeu de données, et
    viii. mettre en œuvre l'étape c), l'intégrité du message étant assurée si le troisième jeu de données décrypté à l'étape vii et le hachage obtenu à l'étape b) sont identiques.

Par "intégrité" du message, il faut entendre sa non-altération, par exemple par un tiers malveillant qui l'aurait intercepté pendant sa transmission.

L'identifiant du message peut être une séquence de caractères alphanumériques et/ou de signes pouvant être convertis en un mot numérique par le biais, entre autres, d'un code ASCII.

L'identifiant du message peut contenir l'identifiant de l'expéditeur et un numéro d'ordre du message.

L'authentification de l'expéditeur est notamment assurée par l'opération de décryptage faite à l'étape vii.

Le décryptage peut être effectué au moyen d'une clé de cryptage tenue secrète entre l'appareil et l'expéditeur.

De préférence, le nombre mélangeur est tenu secret et on utilise une clé renouvelable ayant la taille du hachage (troisième jeu de données), notamment avec un XOR comme fonction de cryptage.

Une autre solution consiste à garder secret le nombre mélangeur et à utiliser une clé symétrique non renouvelée avec une fonction de cryptage symétrique.

Alternativement, le nombre mélangeur est tenu secret et on utilise une paire de clés asymétriques non renouvelées avec une fonction de cryptage asymétrique.

Alternativement, le nombre mélangeur est tenu secret et on utilise une clé symétrique non renouvelée avec une fonction de cryptage symétrique.

Alternativement, le nombre mélangeur est une clé renouvelable et on utilise une autre clé renouvelable ayant la taille du hachage (troisième jeu de données), notamment avec un XOR comme fonction de cryptage.

Alternativement, le nombre mélangeur est une clé renouvelable et on utilise une clé non renouvelable ayant la taille du hachage (troisième jeu de données), notamment avec un XOR comme fonction de cryptage.

Alternativement, le nombre mélangeur est une clé renouvelable et on utilise une clé symétrique non renouvelée avec une fonction de cryptage symétrique.

Alternativement, le nombre mélangeur est une clé renouvelable et on utilise une clé asymétrique non renouvelée avec une fonction de cryptage asymétrique.

De préférence, l'identifiant du nombre mélangeur est échangé entre l'expéditeur et l'appareil, qui peuvent chacun retrouver le nombre mélangeur correspondant dans une liste mémorisée de nombres mélangeurs.

Dans un autre exemple de réalisation, le nombre mélangeur est généré aléatoirement après chaque utilisation. Ce nombre mélangeur peut être crypté par une clé à usage unique. Le nombre mélangeur peut également être crypté par une fonction symétrique ou asymétrique.

Cette première variante de l'invention permet d'assurer à la fois l'intégrité du message reçu et l'identité de l'expéditeur du message.

Les étapes relatives à l'envoi et à la réception des données peuvent être réalisées en utilisant un même protocole de communication ou des protocoles de communication différents. Par exemple, les données reçues à l'étape i sont reçues par Wi-Fi, les données envoyées à l'étape v sont envoyées par 4G et les données reçues à l'étape vi sont reçues par WiMAX.

A l'étape i, l'appareil peut également recevoir un identifiant de l'expéditeur. Cet identifiant est utile si l'appareil est susceptible de recevoir des messages en provenance de divers expéditeurs, un tel identifiant lui permettant de choisir les clés de cryptage à utiliser pour crypter ou décrypter les informations échangées avec l'expéditeur lors des opérations de cryptage et de décryptage décrites dans cette première variante de l'invention.

De préférence, le procédé selon cette première variante comporte, entre les étapes v et vi, les étapes consistant à :

- recevoir, par l'expéditeur, l'identifiant du message et le nombre mélangeur facultativement crypté,
- décrypter facultativement le nombre mélangeur,
- identifier, à l'aide de l'identifiant du message, le message envoyé à l'appareil,
- mélanger le message avec le nombre mélangeur facultativement décrypté à l'aide de la fonction de mélange,
- hacher les données résultant de l'étape précédente à l'aide de la fonction de hachage,
- crypter le hachage résultant de l'étape précédente, et
- envoyer à l'appareil le hachage crypté, de préférence avec l'identifiant du message.

Le cryptage facultatif du nombre mélangeur à l'étape iv est de préférence effectué par l'appareil.

Le cryptage facultatif du nombre mélangeur permet d'éviter que ce nombre ne soit intercepté et modifié par un tiers malveillant.

De préférence, le cryptage facultatif du nombre mélangeur est effectué à l'aide d'une clé à usage unique de taille au moins égale à celle du nombre. La clé étant à usage unique, une nouvelle clé est utilisée chaque fois qu'un nombre mélangeur est envoyé.

Le cryptage peut également être effectué à l'aide d'une clé symétrique. La clé de cryptage symétrique est tenue secrète entre l'expéditeur et l'appareil et est de préférence renouvelée après un certain nombre de transmissions.

Alternativement, le cryptage facultatif du nombre mélangeur est asymétrique, et est effectué soit à l'aide d'une clé publique de l'expéditeur connue de l'appareil, de façon à permettre le décryptage par l'expéditeur à l'aide de sa clé privée associée, soit à l'aide d'une clé privée de l'appareil dont la clé publique est connue de l'expéditeur.

Ainsi, on empêche un tiers de connaître ou de modifier le nombre mélangeur.

De préférence, le décryptage de l'étape vii est effectué par l'appareil.

Le décryptage de l'étape vii peut être effectué à l'aide d'une clé symétrique, si le cryptage de l'étape iv est effectué à l'aide d'une clé à usage unique.

Alternativement, le décryptage de l'étape vii est effectué à l'aide d'une clé à usage unique si le cryptage de l'étape iv est effectué à l'aide d'une clé symétrique.

Le décryptage de l'étape vii peut également être effectué par d'autres procédés, par exemple à l'aide d'une clé publique connue de l'appareil, associée à une clé privée de l'expéditeur ayant servi au cryptage du hachage reçu à l'étape vi. L'appareil est ainsi en mesure de certifier l'identité de l'expéditeur.

Le nombre mélangeur peut avoir la même taille que la clé symétrique qui sert au cryptage, si une telle clé symétrique est utilisée, et également la même taille que le hachage.

De préférence, les clés de cryptage privées, symétriques et à usage unique et les nombres mélangeurs sont indétectables et inobservables par des dispositifs tiers, afin d'éviter qu'une écoute des données envoyées par l'expéditeur ou l'appareil ne permette de générer et de transmettre des deuxièmes jeux de données frauduleux qui feraient reconnaître de manière erronée l'intégrité des messages reçus par l'appareil mais transmis par un expéditeur autre que celui supposé légitimement détenir lesdites clés.

Si la clé de cryptage X du nombre mélangeur x est connue, alors le hachage du message mélangé peut être connu, car il suffit de décrypter le cryptage de x et de calculer le mélange du message avant de hacher ce dernier. On peut alors également deviner la clé Y cryptant le hachage ou savoir qu'elle appartient à un petit univers, le hachage du message mixte et son cryptage avec Y étant tous deux connus ou observables. La clé de cryptage Y est donc une fonction F de la clé de cryptage X, ou bien la clé de cryptage Y appartient à un univers qui dépend de la clé de cryptage X. L'observation d'une pluralité de transmissions fait apparaître une pluralité de fonctions F, et les valeurs des clés X et Y se situent à l'intersection de ces fonctions. Il est préférable d'éviter cette situation. Il est donc recommandé soit d'utiliser, pour la clé X ou la clé Y, des valeurs qui changent au cours des transmissions, soit d'utiliser des fonctions de cryptage telles que, pour chaque observation d'échanges du triplet "message, nombre crypté, hachage crypté", l'univers des clés Y pour chaque X possible soit grand ; pour ainsi rendre grand l'univers résultant de l'intersection de ces univers déductibles à chaque observation. Il n'est pas recommandé de prendre, pour la clé Y, le nombre mélangeur x généré aléatoirement. Plus précisément, si l'on utilise le nombre mélangeur x comme clé de cryptage Y, ou bien si l'on calcule la clé Y en fonction du nombre mélangeur x à l'aide d'une formule définie, connaissant la valeur cryptée C du nombre mélangeur x crypté avec la clé X, le nombre mélangeur x, et donc Y, devient une autre fonction G de la clé X ; et les clés X et Y se trouveraient alors à l'intersection de la fonction F et de cette nouvelle fonction G. De préférence, on renouvelle la clé X ou la clé Y après chaque échange.

L'appareil peut en outre comporter un compteur de tentatives de vérification consécutives ayant échoué, qui déclenche son blocage lorsqu'un nombre défini est atteint, l'appareil pouvant être débloqué pendant le renouvellement de la clé de cryptage utilisée pour crypter le nombre mélangeur ou la clé de cryptage utilisée pour crypter le hachage.

Alternativement, l'appareil peut imposer un nombre prédéterminé de tentatives de vérification successives infructueuses de messages arrivant ou envoyés par un même expéditeur, nombre prédéterminé après lequel, et après une période fixée, l'appareil place les messages reçus ou le message envoyé par le même expéditeur dans une file d'attente ou, de préférence, les ignore, avant d'essayer à nouveau soit de décrypter les messages placés dans la file d'attente, soit de reprendre le décryptage des messages qui continuent d'arriver après l'expiration de la période fixée. Cette approche est avantageusement mise en œuvre par un dispositif renvoyant à l'expéditeur des messages placés dans une file d'attente ou ignorés, un message de réponse pour l'informer du traitement de son message. Par exemple, trois messages reçus consécutivement d'un expéditeur qui ne peut être vérifié peuvent amener le dispositif à rejeter les messages envoyés par ce même expéditeur pendant une minute, après avoir informé ledit expéditeur que ses messages étaient ignorés pendant ce temps.

**Deuxième procédé de vérification de l'intégrité d'un message**

Une deuxième variante du procédé selon l'invention est un procédé permettant de vérifier au moyen de l'appareil l'intégrité d'un message provenant d'un expéditeur, le procédé comportant les étapes consistant à :

i. recevoir, au moyen de l'appareil, le message, le troisième jeu de données crypté et le nombre mélangeur crypté,

ii. décrypter le nombre mélangeur et le troisième jeu de données, et

iii. mettre en œuvre les étapes a) à c), l'intégrité du message étant assurée si le hachage obtenu à l'étape b) et le troisième jeu de données décrypté à l'étape ii) sont identiques.

Le décryptage peut être effectué au moyen d'une clé de cryptage tenue secrète entre l'appareil et l'expéditeur.

De préférence, le nombre mélangeur est tenu secret et on utilise une clé renouvelable ayant la taille du hachage (troisième jeu de données), notamment avec un XOR comme fonction de cryptage.

Alternativement, le nombre mélangeur est tenu secret et on utilise une clé symétrique non renouvelée avec une fonction de cryptage symétrique.

Alternativement, le nombre mélangeur est tenu secret et on utilise une paire de clés asymétriques non renouvelées avec une fonction de cryptage asymétrique.

Alternativement, le nombre mélangeur est tenu secret et on utilise une clé symétrique non renouvelée avec une fonction de cryptage symétrique.

Alternativement, le nombre mélangeur est une clé renouvelable et on utilise une autre clé renouvelable ayant la taille du hachage (troisième jeu de données), notamment avec un XOR comme fonction de cryptage.

Alternativement, le nombre mélangeur est une clé renouvelable et on utilise une clé non renouvelable ayant la taille du hachage (troisième jeu de données), notamment avec un XOR comme fonction de cryptage.

Alternativement, le nombre mélangeur est une clé renouvelable et on utilise une clé symétrique non renouvelée avec une fonction de cryptage symétrique.

Alternativement, le nombre mélangeur est une clé renouvelable et on utilise une clé asymétrique non renouvelée avec une fonction de cryptage asymétrique.

De préférence, l'identifiant du nombre mélangeur est échangé entre l'expéditeur et l'appareil, qui peuvent chacun retrouver le nombre mélangeur correspondant dans une liste mémorisée de nombres mélangeurs.

Dans un autre exemple de réalisation, le nombre mélangeur est généré aléatoirement après chaque utilisation. Ce nombre mélangeur peut être crypté par une clé à usage unique. Alternativement, le nombre mélangeur est crypté par une fonction symétrique ou asymétrique. De préférence, le procédé selon cette deuxième variante de l'invention comporte, avant l'étape i, les étapes consistant à :

- générer, par l'expéditeur, le nombre mélangeur,
- mélanger le nombre mélangeur avec le message, à l'aide de la fonction de mélange,
- hacher les données résultant de l'étape précédente à l'aide de la fonction de hachage,
- crypter le hachage résultant de l'étape précédente et la formation du troisième jeu de données,
- crypter le nombre mélangeur, et
- envoyer à l'appareil le message, le troisième jeu de données crypté et le nombre mélangeur crypté.

Ces étapes sont effectuées par l'expéditeur authentique et permettent de détecter l'altération du message par un tiers non autorisé.

Le décryptage à l'étape ii du nombre mélangeur et du troisième jeu de données est de préférence effectué par l'appareil.

De préférence, le cryptage du nombre mélangeur est effectué à l'aide d'une clé à usage unique, et le cryptage du troisième jeu de données est effectué à l'aide d'une clé symétrique, la clé symétrique étant de préférence renouvelée occasionnellement.

Alternativement, le cryptage du nombre mélangeur est effectué à l'aide d'une clé symétrique, et le cryptage du troisième jeu de données est effectué à l'aide d'une clé à usage unique, la clé symétrique étant de préférence renouvelée occasionnellement.

Le cryptage du nombre mélangeur et le cryptage du troisième jeu de données peuvent également être du même type, ou de types différents, ces types de cryptage pouvant utiliser des clés symétriques ou des clés asymétriques.

Si une paire de clés asymétriques est utilisée pour le cryptage du nombre mélangeur, la clé privée de cette paire est de préférence conservée par l'appareil, la clé publique correspondante étant alors connue de l'expéditeur.

Le cryptage du troisième jeu de données peut être effectué à l'aide d'une clé privée conservée par l'expéditeur, la clé publique correspondante étant alors connue de l'appareil.

Ainsi, en décryptant le nombre mélangeur et le troisième jeu de données, l'appareil est en mesure de certifier l'identité de l'expéditeur.

Le cryptage du nombre mélangeur et celui du troisième jeu de données peuvent être effectués à l'aide de la même fonction de cryptage, notamment lorsque le cryptage du nombre mélangeur est asymétrique.

Alternativement, le cryptage du nombre mélangeur et celui du troisième jeu de données sont effectués par deux fonctions de cryptage différentes.

De préférence, les types de fonctions de cryptage à utiliser font partie de la configuration de l'expéditeur et de l'appareil, avant l'établissement de la communication entre ces deux derniers.

### Troisième procédé de vérification de l'intégrité d'un message

Une troisième variante du procédé selon l'invention est un procédé dans lequel le premier jeu de données est présent dans l'appareil et le deuxième jeu de données est présent dans un deuxième appareil, le procédé comportant les étapes consistant à :

> i. mettre en œuvre les étapes a) et b),
> ii. crypter le nombre mélangeur,
> iii. envoyer, au moyen de l'appareil au deuxième appareil, le nombre mélangeur crypté,
> iv. recevoir, au moyen de l'appareil, un hachage crypté du deuxième jeu de données,
> v. décrypter le hachage crypté, et
> vi. mettre en œuvre l'étape c).

Le décryptage peut être effectué au moyen d'une clé de cryptage tenue secrète entre l'appareil et l'expéditeur.

De préférence, le nombre mélangeur est tenu secret et on utilise une clé renouvelable ayant la taille du hachage, notamment avec un XOR comme fonction de cryptage.

Alternativement, le nombre mélangeur est tenu secret et on utilise une clé symétrique non renouvelée avec une fonction de cryptage symétrique.

Alternativement, le nombre mélangeur est tenu secret et on utilise une paire de clés asymétriques non renouvelées avec une fonction de cryptage asymétrique.

Alternativement, le nombre mélangeur est tenu secret et on utilise une clé symétrique non renouvelée avec une fonction de cryptage symétrique.

Alternativement, le nombre mélangeur est une clé renouvelable et on utilise une autre clé renouvelable ayant la taille du hachage, notamment avec un XOR comme fonction de cryptage.

Alternativement, le nombre mélangeur est une clé renouvelable et on utilise une clé non renouvelable ayant la taille du hachage, notamment avec un XOR comme fonction de cryptage.

Alternativement, le nombre mélangeur est une clé renouvelable et on utilise une clé symétrique non renouvelée avec une fonction de cryptage symétrique.

Alternativement, le nombre mélangeur est une clé renouvelable et on utilise une clé asymétrique non renouvelée avec une fonction de cryptage asymétrique.

De préférence, l'identifiant du nombre mélangeur est échangé entre l'expéditeur et l'appareil, qui peuvent chacun retrouver le nombre mélangeur correspondant dans une liste mémorisée de nombres mélangeurs.

Dans un autre exemple de réalisation, le nombre mélangeur est généré aléatoirement après chaque utilisation. Ce nombre mélangeur peut être crypté par une clé à usage unique. Le nombre mélangeur peut également être crypté par une fonction symétrique ou asymétrique.

De préférence, le procédé selon cette troisième variante de l'invention comporte, entre les étapes iii et iv, les étapes consistant à :

> - recevoir, au moyen du deuxième appareil, le nombre mélangeur crypté,
> - décrypter le nombre mélangeur,
> - créer une copie modifiée du deuxième jeu de données en utilisant le nombre mélangeur et la fonction de mélange,
> - hacher la copie modifiée du deuxième jeu de données à l'aide de la fonction de hachage,
> - crypter le hachage résultant de l'étape précédente et former le troisième jeu de données, et
> - envoyer, au moyen du deuxième appareil à l'appareil, le hachage crypté du deuxième jeu de données.

Le cryptage du nombre mélangeur à l'étape ii et le décryptage du hachage crypté à l'étape v sont de préférence effectués par l'appareil.

De préférence, le cryptage du nombre mélangeur est effectué à l'aide d'une clé de cryptage symétrique partagée avec le deuxième appareil.

Le cryptage du hachage peut être effectué à l'aide d'une clé à usage unique et le cryptage du nombre mélangeur peut être effectué à l'aide d'une clé symétrique renouvelée occasionnellement.

Alternativement, le cryptage du nombre mélangeur est effectué à l'aide d'une clé à usage unique et le cryptage du hachage est effectué à l'aide d'une clé symétrique renouvelée occasionnellement.

Le cryptage du nombre mélangeur et le cryptage du hachage peuvent également être du même type, ou de types différents, ces types de cryptage pouvant utiliser des clés symétriques, notamment des clés à usage unique, ou des clés asymétriques.

## Procédé de génération de clés quantiques partagées

On peut utiliser l'invention dans des procédés de communication quantique, notamment dans la Distribution de Clés Quantiques E91, où l'on utilise une paire de photons intriqués pour générer un secret partagé entre deux récepteurs de photons.

Un autre aspect de l'invention concerne un procédé de génération de clé quantique partagée utilisant un système de communication quantique, le système comportant :

- un émetteur de photons intriqués, configuré pour générer au moins une paire de photons intriqués comportant un premier photon émis sur un premier chemin de propagation, et simultanément un deuxième photon émis sur un deuxième chemin de propagation différent du premier chemin de propagation ;

- un premier récepteur disposé sur le premier chemin de propagation, comportant une première base de mesure de polarisation configurée pour mesurer un état de polarisation d'un photon reçu par le premier récepteur ; et

- un deuxième récepteur disposé sur le deuxième chemin de propagation, comportant une deuxième base de mesure de polarisation configurée pour mesurer un état de polarisation d'un photon reçu par le deuxième récepteur, les horloges des deux récepteurs étant synchronisées de telle sorte que deux photons d'une même paire de photons arrivant aux récepteurs arrivent en même temps selon les horloges des récepteurs atteints ;

dans lequel le premier récepteur établit une première liste comportant les dates de réception et une deuxième liste comportant ces dates de réception et les états de polarisation des photons reçus par le premier récepteur, et le deuxième récepteur établit une troisième liste comportant les dates de réception et une quatrième liste comportant ces dates de réception et les états de polarisation complémentaires des photons reçus par le deuxième récepteur ;

dans lequel la première liste et/ou la troisième liste sont échangées entre le premier récepteur et le deuxième récepteur et sont de préférence signées électroniquement ;

dans lequel, lors de la réception de la troisième et/ou de la première liste, respectivement, le premier récepteur et/ou le deuxième récepteur établit une cinquième liste comportant les dates auxquelles les deux photons des mêmes paires ont été reçus par les deux récepteurs, étant donné que certains photons peuvent avoir été perdus pendant la transmission entre l'émetteur et l'un des deux récepteurs ou les deux ;

dans lequel, si un seul des deux récepteurs établit la cinquième liste, ladite cinquième liste est transmise, de préférence signée électroniquement, à l'autre récepteur, de telle sorte que le premier récepteur et le deuxième récepteur établissent respectivement une sixième liste et une septième liste d'états de polarisation des photons tels que reçus par le premier récepteur, la sixième liste étant dérivée de la deuxième liste et de la cinquième liste, la septième liste étant dérivée de la quatrième liste et de la cinquième liste, chaque état de polarisation sur la sixième liste d'un photon reçu à un temps marqué sur la cinquième liste étant le même état de polarisation que celui du photon correspondant reçu en même temps et marqué sur la deuxième liste, chaque état de polarisation sur la septième liste d'un photon reçu à un temps marqué sur la cinquième liste étant l'état de polarisation complémentaire du photon correspondant reçu en même temps et marqué sur la quatrième liste ;

dans lequel les signatures respectives de la sixième liste et de la septième liste sont échangées entre les premier et deuxième récepteurs, selon le procédé de l'invention, de préférence avec un nombre mélangeur renouvelé chaque fois et une clé à usage unique renouvelée utilisée pour le cryptage du hachage ;

dans lequel lesdites sixième et septième listes peuvent être utilisées en tant que liste partagée de bits aléatoires. De cette liste partagée, on peut par exemple extraire des clés à usage unique ou des listes d'angles de rotation aléatoires des bases de mesure de polarisation.

Un message signé peut être échangé entre les deux récepteurs avant d'utiliser les sixième et septième listes en tant que clés à usage unique.

Les bases de mesure de polarisation peuvent être amenées à tourner aléatoirement et simultanément d'un même angle tenu secret entre les deux récepteurs.

Les sixième et septième listes peuvent être utilisées en tant que listes d'angles de rotation aléatoires des bases de mesure de polarisation.

Les photons sont de préférence envoyés dans une polarisation fixée qui n'est pas la polarisation des photons pouvant être mesurés par les récepteurs, les photons pouvant par exemple être envoyés en polarisation circulaire, tout en étant détectés dans des états de polarisation linéaire orthogonale, ou envoyés en polarisation linéaire dans une direction qui n'est pas la direction de la polarisation dans laquelle ils peuvent être détectés, de préférence fixée à 45° de la direction de polarisation linéaire dans laquelle les polarisations des photons sont détectées par les récepteurs.

La direction de l'angle de polarisation auquel les polarisations sont détectées par les récepteurs peut être modifiée périodiquement et aléatoirement du même angle sur les deux récepteurs, la modification étant de préférence une modification de 0° ou de 45° et, de préférence, l'angle de polarisation linéaire à l'émetteur étant modifié du même angle si l'émetteur émet effectivement les photons polarisés linéairement. Le changement peut par exemple se produire toutes les millisecondes. Cela permet d'éviter qu'un dispositif espion envoie des paires de photons aux deux récepteurs dans des polarisations connues qui peuvent être détectées par les récepteurs, l'un des photons étant dans la polarisation complémentaire de l'autre et arrivant en même temps aux récepteurs selon les horloges "synchronisées", car la direction dans laquelle les photons peuvent être détectés par les récepteurs peut ne pas être connue par le dispositif espion.

On peut modifier l'angle de la polarisation, par exemple grâce à un circuit de dérivation destiné aux photons en amont des récepteurs, un premier commutateur pouvant dévier le photon incident vers un dispositif de rotation de polarisation des photons et un deuxième commutateur permettant d'envoyer le photon sortant dudit dispositif de rotation de polarisation vers ledit récepteur, de telle sorte que, dans un premier mode, les photons contournent le dispositif de rotation de polarisation, tandis que dans un autre mode, les photons traversent le dispositif de rotation de polarisation avant de pénétrer dans les récepteurs. Le dispositif de rotation des photons peut être constitué par exemple d'un matériau chiral tel que des nanoparticules de CdSe de 1,4 à 2,4 $\eta$m (source : inorganic Nanostructures with Strong Chiroptical Activity Anastasia Visheratina & Nicholas A. Kotov* Université du Michigan), ou tel qu'un dispositif constitué d'un premier prisme biréfringent séparant la lumière en deux faisceaux de lumière polarisée linéairement qui traversent chacun deux lames quart d'onde formant un angle entre elles, de telle sorte que la lumière quitte la deuxième lame quart d'onde polarisée linéairement selon un certain angle par rapport à la direction de polarisation à laquelle elle atteint la première lame quart d'onde, les deux faisceaux de lumière polarisée linéairement quittant les deuxièmes lames quart d'onde en étant réunis en un seul faisceau par passage à travers un deuxième prisme biréfringent.

On peut fixer les changements d'angle conformément à des clés à usage unique partagées entre les deux récepteurs et, si nécessaire, l'expéditeur. Si le changement d'angle n'est appliqué qu'aux deux récepteurs, par exemple si l'expéditeur envoie les photons dans un état de polarisation circulaire tandis que les lecteurs lisent les photons dans un état de polarisation linéaire, la clé à usage unique peut être renouvelée au moyen de clés générées par le processus de génération de Clés Quantiques partagées décrit ici.

Par "état de polarisation complémentaire d'un photon donné", on entend l'état de polarisation dans lequel devrait se trouver le photon intriqué audit photon donné.

En outre, le chemin des photons est de préférence protégé physiquement contre l'insertion d'un dispositif espion dans une première zone, dans sa partie où les photons se propagent sans être intriqués. Par exemple, si le chemin du photon est plus long d'une longueur mesurée entre l'émetteur de photons et le deuxième récepteur de photons qu'entre l'émetteur et le premier récepteur de photons, le chemin suivi par le photon entre l'émetteur et le deuxième récepteur est commandé physiquement au moins à proximité du deuxième récepteur pour ladite longueur mesurée.

On peut par exemple mesurer physiquement ladite longueur, notamment si les photons se propagent dans des fibres optiques. De même, et notamment lors d'une propagation en espace libre, on peut par exemple effectuer la mesure en ayant placé des horloges réellement synchronisées sur les deux récepteurs (par opposition aux horloges synchronisées décrites plus haut), et en ayant vérifié au moment de cette mesure qu'aucun dispositif espion n'a été inséré entre l'émetteur et les récepteurs.

Ici encore, le chemin du photon est de préférence protégé physiquement dans une deuxième zone située en amont de la première zone, si elle existe, ou en amont du détecteur, si la première zone n'existe pas, contre l'insertion d'un dispositif espion. Cette deuxième zone est configurée de façon à ce que le photon s'y propage pendant un temps supérieur à l'incertitude du temps d'arrivée auquel les photons sont détectés aux deux récepteurs.

Si un détecteur et émetteur de photons espion est introduit en amont du premier détecteur, ce détecteur espion détectera les photons et leur polarisation avant de réémettre des photons de même polarisation vers le deuxième détecteur. Cependant, ce photon réémis devra passer à travers la première zone et la deuxième zone, arrivant ainsi à un instant différent de celui où il serait arrivé si aucun dispositif espion n'avait interféré, et cette différence de temps étant perceptible par le deuxième récepteur.

Un émetteur espion peut envoyer au premier récepteur légitime un premier photon intriqué à un deuxième photon et détecter l'état de polarisation du premier photon intriqué en vérifiant la polarisation du deuxième photon. Cependant, pour transmettre cet état de polarisation au deuxième émetteur, il devra envoyer un photon polarisé dans l'état approprié, mais ce photon devra d'abord se propager vers la deuxième zone protégée, puis parcourir la zone protégée, cela demandant plus de temps et, par conséquent, arrivera à un instant différent de celui où le photon espion initial a été détecté par le premier récepteur.

En revanche, si un dispositif espion envoie au deuxième récepteur un premier photon intriqué à un deuxième photon et détecte son état de polarisation, il pourrait alors envoyer au premier récepteur un photon ayant la même polarisation ; cependant, ce photon arrivera après que le deuxième récepteur aura reçu son photon détecté, donc à un instant, selon les horloges "synchronisées", différent de l'instant où l'autre photon est arrivé au deuxième récepteur.

Les tailles des première et troisième listes sont de préférence choisies avec un coefficient de tolérance tel que les sixième et septième listes aient une chance raisonnable, par exemple au moins 50% de chance d'être égales, si rien n'a interféré lors du processus de transmission des photons intriqués. Par exemple, si les photons intriqués sont lus dans des états correspondants sur les deux récepteurs dans 99,9% des cas, c'est-à-dire si la lecture de leur état de polarisation est correcte dans 99,9% des cas, les sixième et septième listes peuvent avoir une longueur de 500 bits et les première et deuxième listes peuvent comporter 5000 temps de réception successifs si 90% des photons intriqués sont perdus entre l'émetteur de photons et les récepteurs, chaque récepteur de photons, quel que soit le récepteur, n'ayant que 10% de chance que son photon intriqué ait été reçu par l'autre récepteur.

## Quatrième procédé de vérification de l'intégrité d'un message

Une quatrième variante du procédé selon l'invention est un procédé permettant de vérifier qu'un jeu de données présent dans l'appareil n'a pas été modifié entre deux instants d1 et d2, ce jeu de données constituant, au temps d1, le premier jeu de données et, au temps d2, le deuxième jeu de données, le procédé comportant les étapes consistant à :

    i. mettre en œuvre les étapes a) et b),
    ii. enregistrer de manière sécurisée, au moyen de l'appareil, le nombre mélangeur et le hachage obtenu à l'étape b),
    iii. créer une copie modifiée du deuxième jeu de données en utilisant le nombre mélangeur et la fonction de mélange,
    iv. hacher la copie modifiée à l'aide de la fonction de hachage pour former le troisième jeu de données, et
    v. mettre en œuvre l'étape c).

Avantageusement, le procédé selon cette quatrième variante ne nécessite pas de conserver le jeu de données de manière sécurisée.

## Produit de programme d'ordinateur

L'invention a encore pour objet un produit de programme d'ordinateur contenant des instructions lisibles par un processeur d'un appareil pour mettre en œuvre le procédé selon l'invention, selon l'une quelconque des variantes définies ci-dessus.

## Brève description des dessins

L'invention pourra être mieux comprise à la lecture de la description détaillée qui va suivre, d'exemples de mise en œuvre non limitatifs de celle-ci, et à l'examen des dessins annexés, sur lesquels :

    [Fig 1A] représente de manière partielle et schématique un système de communication quantique selon l'invention,

    [Fig 1B] représente de manière partielle et schématique un autre système de communication quantique selon l'invention,

    [Fig 2A] représente de manière partielle et schématique un photon polarisé linéairement,

    [Fig 2B] représente de manière partielle et schématique un photon polarisé circulairement,

    [Fig 3] la figure 3 représente de manière schématique des détails de transmission des photons de l'émetteur aux récepteurs,

    [Fig 4A] représente de manière partielle et schématique un exemple de sélecteur optique selon l'invention,

    [Fig 4B] représente de manière partielle et schématique une variante du sélecteur de la figure 4A,

    [Fig 4C] représente de manière partielle et schématique un autre exemple de sélecteur optique selon l'invention,

    [Fig 5A] [Fig 5B] la figure 5A et la figure 5B représentent de manière schématique un exemple de modificateur de direction de polarisation comportant des lames quart d'onde,

    [Fig 5C] la figure 5C représente de manière schématique un autre exemple de modificateur de direction de polarisation comportant un matériau chiral,

    [Fig 6] la figure 6 représente de manière schématique un exemple de modificateur de phase de polarisation,

    [Fig 7] représente de manière partielle et schématique un exemple d'instrument d'absorption d'un photon polarisé linéairement,

[Fig 8] représente de manière partielle et schématique un autre exemple d'instrument d'absorption d'un photon polarisé linéairement,

[Fig 9] représente de manière partielle et schématique un exemple de récepteur du deuxième photon comportant un amplificateur à fibre dopée,

[Fig 10A] représente de manière partielle et schématique un exemple d'instrument de mesure du deuxième récepteur comportant une succession de lames semi-réfléchissantes,

[Fig 10B] représente de manière partielle et schématique un exemple d'interféromètre de Young utilisé pour l'instrument de mesure du deuxième récepteur,

[Fig 11A] est un schéma fonctionnel illustrant de manière partielle un exemple de fonctionnement d'un système de communication quantique pour transmettre un bit 0,

[Fig 11B] est un schéma fonctionnel illustrant de manière partielle un exemple de fonctionnement d'un système de communication quantique pour transmettre un bit 1,

[Fig 12] est un schéma fonctionnel illustrant de manière partielle un exemple de fonctionnement d'un système de communication quantique pour transmettre une série de valeurs discrètes,

[Fig 13] est un schéma fonctionnel illustrant de manière partielle un exemple de procédé d'horodatage de l'arrivée d'un photon dans un récepteur,

[Fig 14] illustre de manière partielle et schématique la possibilité de placer un dispositif "anti-bruit" devant l'amplificateur,

[Fig 15] représente de manière partielle et schématique la possibilité d'utiliser le système selon l'invention pour établir une communication bidirectionnelle entre deux endroits,

[Fig 16] la figure 16 illustre une variante de mise en œuvre d'un système de communication quantique selon l'invention,

[Figure 17] la figure 17 illustre schématiquement une protection physique du système de communication quantique selon l'invention,

[Fig 18] la figure 18 illustre schématiquement une protection optique des photons intriqués du système de communication quantique selon l'invention,

[Fig 19] la figure 19 illustre schématiquement un exemple de procédé de calcul d'un hachage d'un ensemble de données.

## Description détaillée

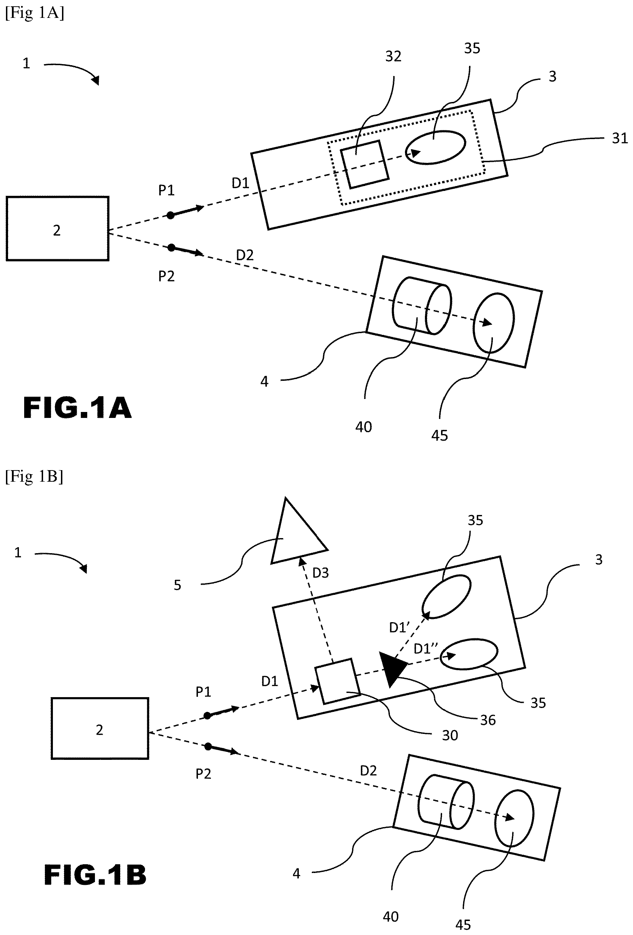

On a illustré à la figure 1A un système de communication quantique 1 selon l'invention. Le système comporte un émetteur 2 émettant une paire de photons intriqués (P1, P2), le premier photon P1 se propageant sur un chemin de propagation D1 et le deuxième photon D2 se propageant sur un chemin de propagation D2 différent du chemin D1. Les photons P1 et P2 sont émis simultanément.
De par la nature de la lumière et la dualité onde-corpuscule du photon, les termes "onde", "photon" et "particule" sont utilisés indifféremment dans la suite pour désigner le produit émis par l'émetteur 2.
Les termes "instrument de mesure" et "instrument d'absorption" sont utilisés indifféremment pour désigner un instrument absorbant un photon selon une certaine polarisation.
Le système 1 comporte un premier récepteur 3, situé sur le chemin de propagation D1 du premier photon P1, et un deuxième récepteur 4, situé sur le chemin de propagation D2 du deuxième photon P2.
Le récepteur 3 est plus proche de l'émetteur 2 que le récepteur 4, de manière à ce que le photon P1 l'atteigne avant que le photon P2 n'atteigne le récepteur 4. Le photon P2 atteint par exemple le récepteur 4 après un temps de parcours supplémentaire $t_{tra}$ correspondant à un trajet de parcours supplémentaire Ltra.
Dans l'exemple considéré, le récepteur 3 comporte un absorbeur complexe 31 comportant un modificateur de polarisation 32 et un instrument d'absorption 35.
L'absorbeur complexe 31 est configuré pour absorber le photon dans un état de polarisation sélectionné parmi plusieurs paires de polarisations complémentaires différentes, de préférence au moins trois paires.
Le modificateur de polarisation 31 est configuré pour transmettre le photon P1 selon la paire sélectionnée de polarisations complémentaires et l'instrument d'absorption 35 permet de déterminer dans lequel des deux états de la paire est le photon P1. Avant de pénétrer dans l'instrument d'absorption 35, l'état de polarisation du photon P1 est une superposition des deux états de la paire sélectionnée, pondérée par certaines probabilités, par exemple de manière équiprobable.
On a illustré à la figure 1B un autre exemple de système de communication quantique 1 selon l'invention. Dans cet exemple, le récepteur 3 comporte deux instruments de mesure 35 agencés pour mesurer l'état quantique du premier photon P1, et un sélecteur optique 30 disposé en amont des instruments de mesure 35 et configuré pour envoyer le premier photon P1 soit vers un prisme biréfringent 36 qui conduit le photon, selon la direction linéaire de sa polarisation, sur des chemins D1' ou D1" puis vers l'un ou l'autre des instruments de mesure 35, soit l'empêche d'être mesuré, par exemple en le réfléchissant sur un chemin de propagation D3 différent du chemin D1.

La direction D3 est notamment choisie de façon à ce que le photon P1 ne soit pas absorbé avant que son photon intriqué ne soit démultiplié au deuxième récepteur 4.

Le système 1 comporte de préférence, comme illustré, un dispositif 5 de protection de l'état quantique d'un photon disposé à proximité du récepteur 3, notamment sur le chemin de propagation D3 dans l'exemple considéré.

Ce dispositif permet par exemple de "piéger" le photon P1 dans le cas où il est réfléchi par le sélecteur optique 30 sur le chemin D3, afin par exemple d'éviter qu'il ne soit mesuré ou absorbé au moins jusqu'à ce que le deuxième photon P2 ait atteint le deuxième récepteur 4. Un détecteur de photon 5D (non représenté) peut être placé à l'extrémité du dispositif 5 pour détecter les photons qui y ont été capturés, après que leurs photons intriqués aient atteint le deuxième récepteur.

Le deuxième récepteur 4 comporte un amplificateur optique 40 permettant de démultiplier le deuxième photon P2 en conservant sa polarisation et un instrument de mesure 45 permettant de mesurer la polarisation moyenne des photons démultipliés.

La transmission des photons P1 et P2 peut se faire de diverses façons, et dans divers milieux. Les photons se propagent par exemple dans une fibre optique ou un guide d'ondes, ou encore librement dans l'espace, l'espace étant vide ou rempli de gaz.

Les photons peuvent traverser plusieurs milieux, présentant des indices de réfraction différents. On peut par exemple insérer des lames antireflets entre deux milieux traversés, le cas échéant, afin d'éviter des phénomènes optiques non désirés, notamment une réflexion de Fresnel des ondes émises par l'émetteur 2.

L'émetteur 2 comporte par exemple une ou des lentilles sélectionnées de taille suffisante pour que les photons atteignent leur récepteur respectif avec une faible diffraction, par exemple permettant qu'au moins 99,99% de l'onde émise atteigne le récepteur.

L'émetteur 2 peut de plus comporter un système, notamment un dispositif électronique, permettant d'ajuster les directions initiales dans lesquelles les photons P1 et P2 sont respectivement émis.

Cet ajustement peut par exemple tenir compte des différents indices de réfraction des milieux traversés, et de la modification de la trajectoire des photons qui peut en résulter, par exemple pour un photon émis depuis l'espace qui entre dans l'atmosphère.

La longueur d'onde de l'onde émise est par exemple sélectionnée selon le ou les milieux à traverser ; on utilisera par exemple de préférence des photons dans le domaine de l'infrarouge quand ceux-ci doivent transiter à travers l'atmosphère ou l'air.

L'émetteur 2 génère par exemple des paires de photons intriqués grâce au procédé d'abaissement de fréquence paramétrique spontanée (SPDC). L'émetteur 2 est par exemple configuré pour émettre en moyenne moins d'une paire par unité de temps, par exemple une paire par nanoseconde, ce qui correspond à une fréquence de transmission de photons de 1 GHz.

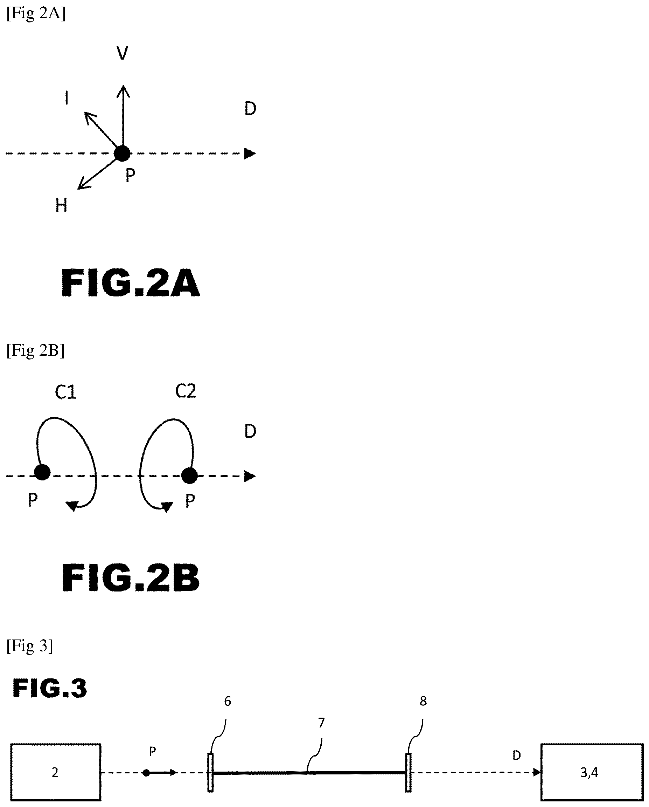

Lorsqu'ils sont émis, les photons P sont par exemple polarisés linéairement, c'est-à-dire que l'onde électromagnétique correspondante a un champ électrique dont la direction est perpendiculaire à sa direction de propagation D. Le cas échéant, la polarisation des photons peut être verticale V ou horizontale H, comme illustré à la figure 2A.

L'état quantique correspondant à la polarisation des photons est parfois indéterminé tant qu'il n'a pas été mesuré ou absorbé. Avant d'être mesuré, l'état quantique du photon est donc parfois considéré comme la superposition des états possibles, à savoir, dans l'exemple considéré, comme la superposition d'une polarisation à un angle de 45° et d'une polarisation à un angle de -45°.

Dans la variante illustrée à la figure 2B, les photons P, lorsqu'ils sont émis, sont polarisés circulairement, c'est-à-dire que la direction du champ électrique correspondant change selon un mouvement de rotation, alors que sa norme reste constante.

Le cas échéant, la polarisation des photons est définie par le sens de rotation du champ électrique, soit un sens horaire C1, soit anti-horaire C2. Avant d'être mesurés, les photons polarisés linéairement sont dans un état quantique indéterminé, considéré comme la superposition de deux états de polarisation circulaires de sens de rotation opposées.

Dans certains cas, on peut introduire sur les chemins de propagation des photons, entre l'émetteur 2 et les récepteurs 3 et/ou 4, deux lames quart d'onde 6 et 8, comme illustré à la figure 3.

La lame 6, selon son orientation, convertit par exemple la polarisation linéaire d'un photon en polarisation circulaire en avançant ou en retardant les ondes électromagnétiques se propageant selon un axe perpendiculaire à l'axe ordinaire du cristal avec un champ électrique perpendiculaire à ce même axe par rapport à l'onde ayant un champ électrique parallèle audit axe ordinaire.

Les photons émergeant de la lame 6 sont par exemple transmis par une fibre optique 7 vers une autre lame quart d'onde qui convertit les champs polarisés circulairement en champs polarisés linéairement, avant de se propager vers les récepteurs 3 ou 4.

Cette conversion de la polarisation des photons émis permet notamment de ne pas avoir à prendre en considération au niveau des récepteurs la direction de la polarisation des photons émis par l'émetteur.

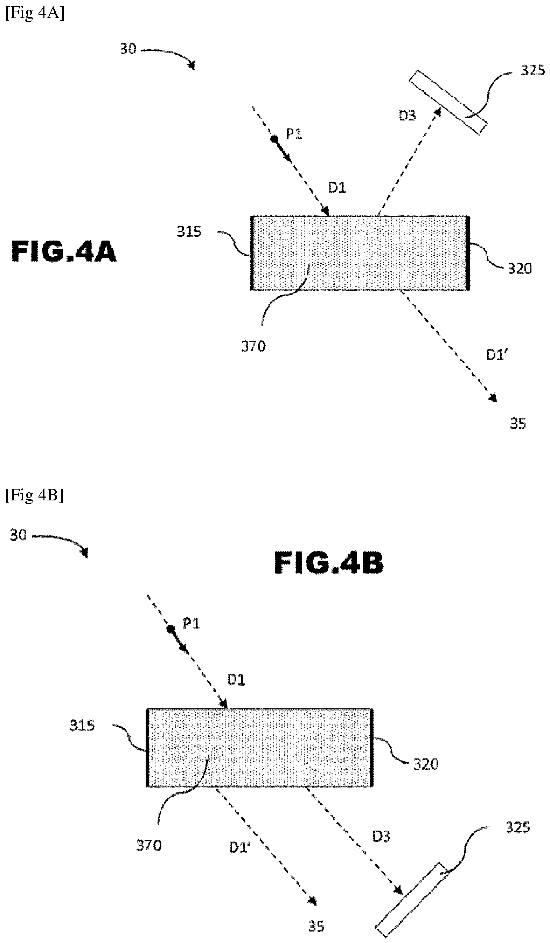

Le sélecteur optique 30 peut être réalisé de diverses façons, dont certains exemples sont illustrés aux figures 4A à 4D.

Le sélecteur optique 30 comporte par exemple un miroir commandé à cristaux liquides tel qu'illustré à la figure 4A, comportant une lame 370 enfermant des cristaux liquides. On place par exemple des électrodes 315 et 320 sur des côtés opposés de la lame 370 afin de soumettre les cristaux liquides à un champ électrique, permettant d'en commander l'indice de réfraction $n_C$.

Selon l'indice de réfraction $n_C$, le photon incident P1 peut être réfléchi sur un chemin de propagation D3, ou bien il peut traverser la lame 370 et être transmis sur un chemin de propagation D1', qui peut être identique ou différent du chemin D1, vers l'instrument de mesure 35.

Dans une variante illustrée à la figure 4B, le photon P1 traverse la lame de cristaux liquide 370 et ressort selon D3 ou D1', les directions D1, D1' et D3 étant, dans l'exemple considéré, parallèles.

Un miroir 325, notamment un miroir de Bragg, peut être placé sur l'axe de propagation D3 afin de réfléchir le photon dans une autre direction, par exemple vers le dispositif de protection 5.

Des lames antireflet peuvent avantageusement être placées sur chacune des faces de la lame 370 et ajustées selon les angles d'entrée et de sortie du photon quand celui-ci la traverse.

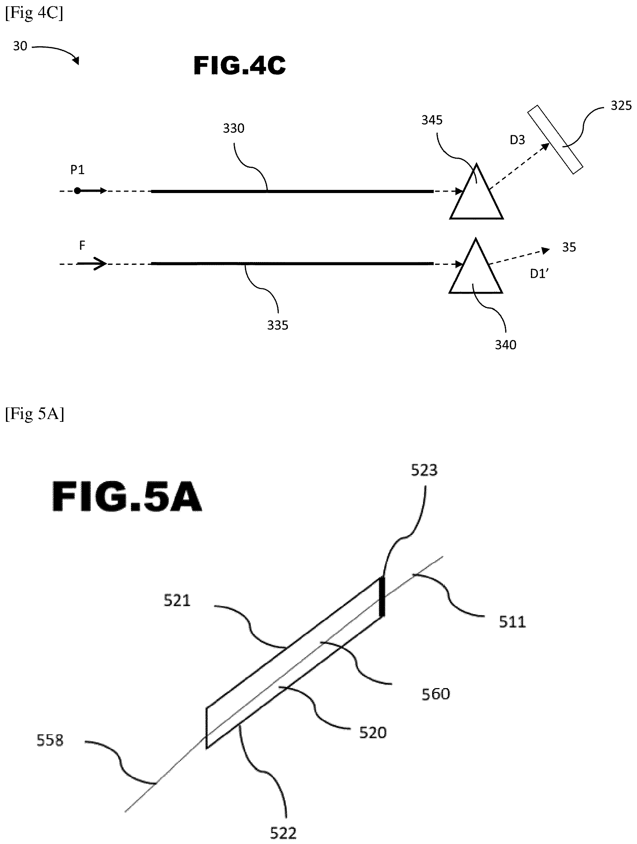

Dans la variante illustrée à la figure 4C, le sélecteur optique 30 est un miroir commandé par fibres non linéaires. Il comporte deux fibres optiques 330 et 335. La fibre 335 est par exemple formée d'un matériau non linéaire.

Le premier photon P1, à son arrivée au premier récepteur, entre dans la fibre 330. On peut choisir d'éclairer simultanément la fibre 335 avec un signal lumineux F, aussi appelé "signal de commande".

Le signal F est une onde lumineuse de forte intensité, par exemple émise par un laser, et de longueur d'onde différente de celle du photon P1.

Si la fibre 335 est éclairée par le signal F, le photon P1 reste dans la fibre 330 avant, par exemple, de traverser en sortie de fibre un prisme 345 disposé sur un chemin de propagation D3. Similairement à ce qui a été décrit plus haut, un miroir 325, notamment un miroir de Bragg, peut être placé sur l'axe de propagation D3 afin de réfléchir le photon dans une direction souhaitée, par exemple vers le dispositif de protection 5 ou, directement de retour dans la fibre 330.

Si la fibre 335 n'est pas éclairée par le signal F, le photon P1 est transmis de la fibre 330 à la fibre 335. Le photon P1 ressort de la fibre 335 et traverse par exemple un prisme 340 avant d'être transmis par exemple vers l'instrument de mesure 35. Le prisme 340 est de préférence constitué d'un matériau dispersif permettant de faire ressortir la lumière d'éclairement par un endroit différent et dans une direction différente de celle du photon. Un miroir de Bragg (non représenté) ne renvoyant que ladite lumière d'éclairement et laissant passer le photon peut être placé entre la fibre 335 et le prisme 340, par exemple pour réfléchir ladite lumière d'éclairement dans une autre direction que vers le prisme 340 ou même dans la fibre.

Des lames antireflet (non représentées) peuvent être placées en entrée et sortie des prismes 340 et 345 et ajustées à la longueur d'onde du photon P1.

On va maintenant décrire diverses façons de réaliser le modificateur de polarisation 32 du système de la figure 1B.

Le modificateur de polarisation 32 comporte de préférence un modificateur de direction de polarisation 32a disposé en amont d'un modificateur de phase 32b.

Dans un premier exemple de réalisation de modification de la direction de polarisation, le modificateur de direction de polarisation 32a comporte un empilement de lames 560, notamment des lames quart d'onde, orientées différemment les unes par rapport aux autres, comme illustré à la figure 5A, de telle sorte qu'une onde circulaire 558 pénétrant dans l'une de ces lames quart d'onde ressorte en une onde 511 polarisée linéairement selon une direction associée à ladite lame.

Ces lames peuvent être conçues pour fonctionner avec des ondes 558 les pénétrant selon une direction parallèle à la bissectrice de leurs arrêtes 521 et 522. Ces lames sont de préférence composées de cristaux biréfringents uniaxes tels que par exemple du rutile. Ce cristal biréfringent peut composer toute leur masse ou bien être concentré sur une tranche par exemple sur l'une des arrêtes 523 traversées par l'onde 558, comme illustré à la figure 5A.

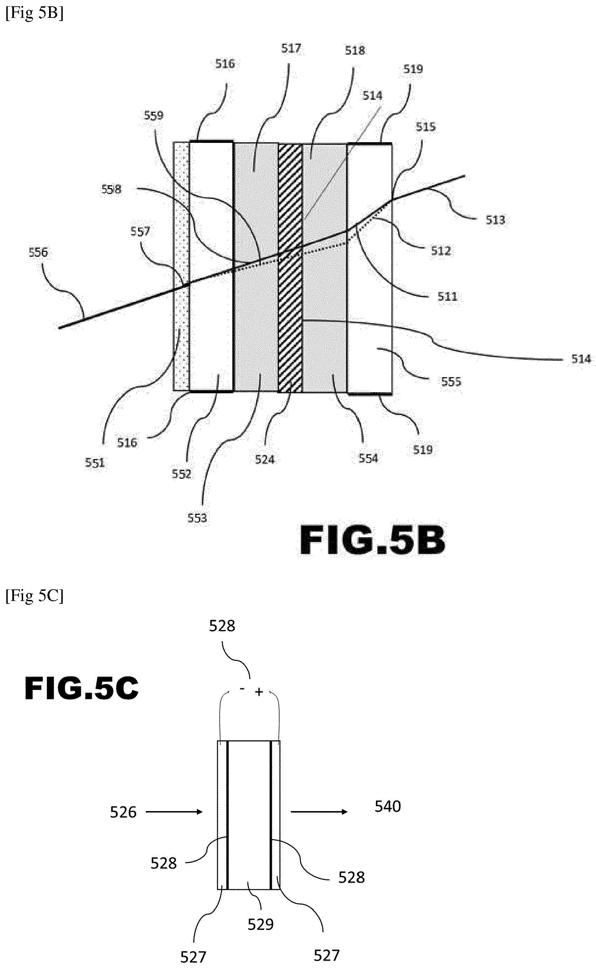

Ces lames peuvent être juxtaposées les unes aux autres pour former une structure 524, comme illustré à la figure 5B, de telle sorte que les ondes sortantes 511 ou 512 aient une polarisation linéaire dont la direction du champ électrique dépend du lieu de pénétration, dans l'assemblage 524, de deux ondes 558 ou 559 polarisées circulairement et de direction parallèle à la bissectrice des arrêtes 521 et 522.

Ainsi, une onde 556 de direction et de polarisation linéaire déterminées pénétrant dans la lame quart d'onde 551 la traverse selon la direction 557 pour y devenir de polarisation circulaire avant de pénétrer dans un cristal 552 dont l'indice de réfraction est ajustable, par exemple sous l'effet d'un champ électrique généré par des électrodes 516, puis de préférence pénètre dans un autre cristal 553 dont l'indice de réfraction est aussi ajustable, par exemple sous l'effet d'un champ électrique généré par des électrodes 517 générant un champ électrique perpendiculaire au champ généré par les électrodes 516.

Deux ondes 558 et 559 polarisées circulairement ressortent alors du cristal 553 et pénètrent dans l'assemblage 524 en des endroits différents selon la sélection de l'indice de réfraction imposée au cristal 553. La direction du rayon lumineux étant différente selon ces endroits, la direction des arrêtes 520 et 521 est de préférence différente pour chaque élément 560 de l'assemblage 524.

Sur le schéma illustré à la figure 5B, les ondes 511 et 512 constituent donc deux possibilités pour le rayon lumineux de traverser l'assemblage 524. Ces ondes sortent de l'assemblage 524 polarisées linéairement selon des directions différentes et ayant une même direction de propagation mais en des endroits différents de la bordure 514 de l'assemblage 524. Elles pénètrent dans un autre cristal 554 dont l'indice de réfraction est ajustable électriquement par des électrodes 518 puis, de préférence, encore un autre cristal 555 dont l'indice de réfraction est aussi ajustable par des électrodes 519 créant un champ électrique perpendiculaire au champ créé par les électrodes 518, et dont les tensions sont ajustées en fonction de l'indice de réfraction sélectionné pour les cristaux 552 et 553, de telle sorte que les ondes lumineuses ressortent toujours du cristal 555 sous forme d'une onde 513 de même direction au même endroit 515.

Les cristaux 552, 553, 554 et 555 sont par exemple des cristaux liquides E7 de Merck aux bornes desquels les électrodes appliquent par exemple des tensions comprises entre 0 et 5000V si la distance entre les électrodes de chacune des paires est de 5 mm, permettant de faire varier leurs indices de réfraction entre 1,5 et 1,67. Les électrodes sont de préférence recouvertes d'un film diélectrique. Ces indices de réfraction modifiés par les champs électriques pouvant être différents selon la direction relative du champ électrique de la lumière et selon la direction du champ électrique, l'application de tensions électriques perpendiculaires successives permet de modifier l'indice de réfraction pour chacune des deux composantes de ladite lumière, celle-ci étant la superposition des ondes dont le champ électrique est perpendiculaire à la figure 5B et des ondes dont le champ électrique est perpendiculaire à la direction de propagation et dans le plan de la figure.

Dans un deuxième exemple de réalisation (non représenté) de modification de la direction de polarisation, l'onde polarisée linéairement selon une direction déterminée pénètre dans une première lame quart d'onde transformant sa polarisation en polarisation circulaire, puis une deuxième lame quart d'onde transformant cette polarisation circulaire en une polarisation linéaire selon une direction ajustable dépendant de l'orientation de cette deuxième lame quart d'onde. L'orientation de la deuxième lame quart d'onde est obtenue par exemple par asservissement mécanique à un capteur, ou à un dispositif commandé électriquement permettant sa rotation, par exemple en frottant sur un arbre mis en mouvement par un matériau piézo-électrique ou par un dispositif à moteur électrique, par exemple à courant continu.

Dans un troisième exemple illustré à la figure 5C, on utilise des cristaux liquides pour commander la rotation du champ électrique linéaire des photons incidents 526 polarisés linéairement selon une même direction de polarisation, qui commencent par exemple par traverser, de préférence perpendiculairement, l'une de deux électrodes transparentes 527 de 0,2 μm enrobée sur l'une de ses faces 528 d'un matériau orientant les particules de cristaux liquides 529 adjacentes à ladite face 527 dans la direction de la polarisation des photons incidents 526, puis traversent le cristal liquide 529 sur 2 μm avant de traverser la deuxième électrode transparente 527 dont la face 528, de préférence parallèle à la première électrode, est aussi enrobée d'un matériau permettant d'aligner les cristaux liquides mais dans une diction perpendiculaire à la direction imposée par l'enrobage de la première électrode. La direction des cristaux liquides entre les deux électrodes est ainsi graduellement modifiée de 0° à par exemple 60° par rapport à leur orientation initiale. L'application d'une tension électrique comprise par exemple entre 0 et 1 V réoriente graduellement les cristaux liquides pour leur imposer une direction dans l'axe de la direction de propagation des photons, réduisant ainsi graduellement l'écart d'indice de réfraction des cristaux liquides entre les deux polarisations perpendiculaires au déplacement des photons et le pouvoir rotatif du dispositif. Ce dispositif permet donc de sélectionner continûment la direction de sortie de la polarisation du photon incident entre 0 et 60°.

Des dispositifs tels que celui illustré à la figure 5B sont avantageusement utilisés dans un dispositif semblable à celui décrit plus haut et illustré à la figure 5A, par exemple placé entre les lames 524 et 554, chacun de par exemple 4 éléments 560 permettant de placer la polarisation linéaire d'un photon incident dans l'une de quatre directions précises, par exemple -90°, -45°,0° et +45°, puis chacun des dispositifs décrits à la figure 5B placés à la suite, et de préférence alignés avec la direction de propagation des photons sortant des dispositifs 560 qui les précèdent, permettant d'ajouter à cette rotation une rotation de n'importe quel angle par exemple compris entre 0 et 45°.

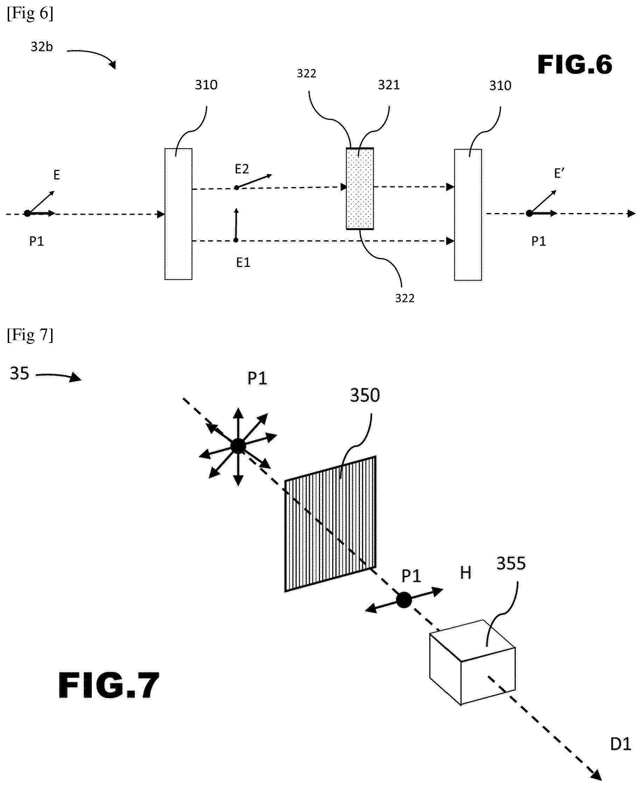

On a illustré à la figure 6 un modificateur de phase de polarisation 32b selon l'invention. Le modificateur de phase 32b comporte une première lame ou prisme biréfringent 370 agencé pour diviser le photon incident P1 de champ de polarisation E en deux ondes électromagnétiques de polarisation linéaire $E_1$ et $E_2$ sur deux axes différents $x_1$ et $x_2$.

On dispose sur le deuxième axe $x_2$ une lame à retard 321 d'indice de réfraction variable, par exemple comportant une cellule de Pockels telle que du niobate de lithium, commandée par des électrodes 322 ou un matériau non linéaire, de façon à faire acquérir à l'onde $E_2$ orientée selon le deuxième axe $x_2$ un déphasage prédéterminé par rapport à l'onde $E_1$ orientée selon le premier axe $x_1$.

Une autre lame biréfringente 370, par exemple constituée de paratellurite, est disposée à la sortie du modificateur de phase 32b, permettant de réunir selon un même axe x les deux ondes dont les champs de polarisation E1 et E2 sont perpendiculaires en une onde ou photon P1 de champ E' ayant acquis un déphasage par rapport au champ E. Alternativement, pour profiter de la modification différente de l'indice de réfraction du cristal selon la direction du champ électrique de la lumière par rapport à la direction du champ électrique modificateur de l'indice de réfraction, une simple cellule de Pockels 321 peut être utilisée avec les électrodes 322 mais sans les lames 370.

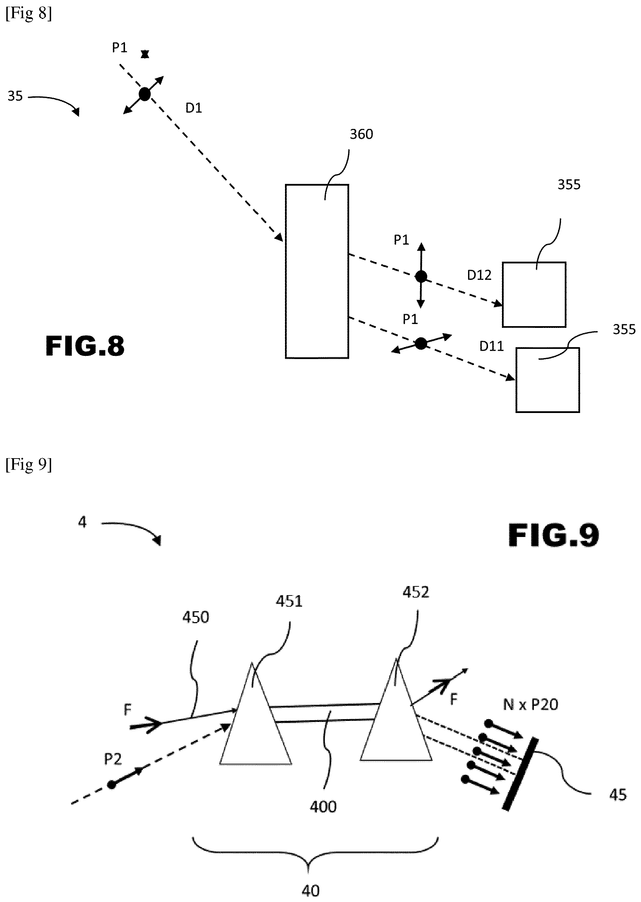

Les instruments de mesure 35 du premier récepteur 3 peuvent être de types variés et comporter divers éléments. Ces derniers dépendent notamment de la nature de la polarisation du photon P1 lors qu'il est émis par l'émetteur 2. Certains exemples sont illustrés aux figures 7 et 8 et décrites ci-après.

Dans l'exemple illustré à la figure 7, l'instrument de mesure 35 comporte un filtre polarisant 350 disposé sur le chemin de propagation D1 du photon P1 et un détecteur de photons 355 disposé sur le même chemin de propagation, en aval du filtre 350.

Le filtre polarisant 350 ne laisse passer que les photons présentant une certaine polarisation linéaire et absorbe ceux dont la polarisation leur est perpendiculaire. Il permet donc de sélectionner les photons ayant une polarisation linéaire d'une certaine direction.

Dans l'exemple considéré, le filtre polarisant 350 est une grille formée de fils, par exemple métalliques, verticaux. Il ne laisse passer que les photons présentant une polarisation linéaire horizontale H.

Dans une variante illustrée à la figure 8, l'instrument de mesure 35 comporte une plaque anisotrope 360, par exemple une lame biréfringente, un prisme biréfringent ou deux prismes biréfringents accolés entre eux. La plaque est par exemple en béta borate de baryum ($BaB_2O_4$, BBO).

Le photon P1 dont l'état quantique doit être mesuré atteint la plaque 360 sur un chemin de propagation incident D1, et est transmis sur l'un de deux chemins de propagation D11 ou D12, selon par exemple que sa polarisation est dans le plan de lame 360 (c'est-à dire, perpendiculaire au plan de la figure 8), ou normale au plan de la lame 360.

L'instrument de mesure 35 comporte en outre deux détecteurs 355, chacun placé sur un chemin de propagation D11 ou D12 du photon P1.

Dans cet exemple et contrairement au filtre polarisant, tous les photons peuvent être détectés par les détecteurs 355, quelle que soit leur polarisation.

Dans certains modes de réalisation, une lame quart d'onde est placée en amont de la lame anisotrope 360 afin de convertir une polarisation circulaire d'un photon en polarisation linéaire, et ainsi détecter le sens de la rotation d'un photon polarisé circulairement.

Le deuxième récepteur 4 peut comporter différents types d'amplificateur optique 40 et d'instrument de mesure 45.

On utilise par exemple un amplificateur à fibre dopée tel qu'illustré à la figure 9.

Dans cet exemple, l'amplificateur 40 comporte une fibre 400, notamment une fibre en matériau non linéaire, dans laquelle le deuxième photon P2 est introduit après avoir traversé un prisme dichroïque 451 lorsqu'il atteint le récepteur 4.

Une onde électromagnétique de commande F servant à apporter l'énergie et démultiplier le photon P2 est introduite par une fibre 450 dans le même prisme dichroïque 451 en un point et avec une direction tels qu'elle ressort de la fibre 400 tout comme le photon P2, le photon P2 et l'onde de commande F ayant des longueurs d'onde différentes.

L'onde de commande F est de préférence de forte intensité lumineuse et de préférence de longueur d'onde plus faible que celle du photon P2.

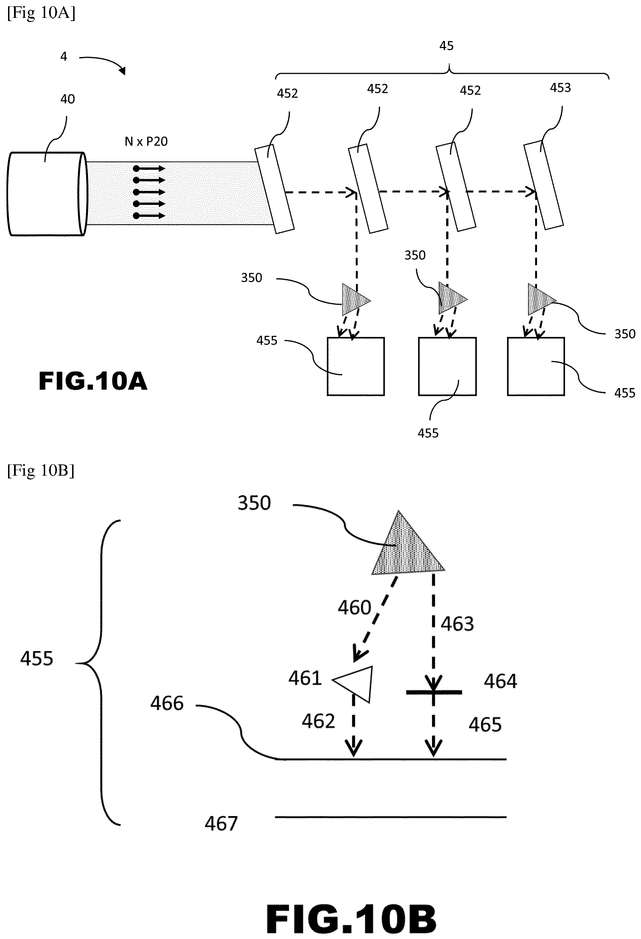

Lors de son passage dans la fibre 400 et sous l'effet du flux lumineux F, le photon P2 est démultiplié en N photons P20, puis ces N photons et le flux F traversent un deuxième prisme dichroïque 452 dont ils ressortent dans des directions différentes. Les N photons sont alors avantageusement dirigés vers un instrument de mesure 45, permettant de déterminer la polarisation du flux lumineux et dont des exemples de réalisation sont donnés aux figure 10A et 10B.

On peut déduire des mesures de l'instrument de mesure 45 l'information transmise par le premier récepteur, car l'amplification du photon P2 par le dispositif 40 conserve sa polarisation.

En particulier, si le photon P2 est le photon intriqué d'un photon P1 absorbé dans l'une de deux polarisations complémentaires connues du premier récepteur, les N photons démultipliés P20 sont mesurés avec une polarisation qui peut être déduite de la polarisation d'absorption du photon P1 à l'aide de la matrice de Jones calculée lors d'un étalonnage tel que décrit plus haut.

L'instrument de mesure 45 peut comporter une succession de lames semi-réfléchissantes 452 et un miroir 453, comme illustré à la figure 10A. Les lames 452 et le miroir 453 dirigent les photons démultipliés P20, qui forment un flux lumineux, par exemple vers des prismes en matériaux biréfringents 350 ayant de préférence une intensité égale. Les filtres 350 partagent le flux lumineux en deux flux lumineux polarisés orthogonalement, pour que les détecteurs 455 puissent soit déterminer l'intensité dudit flux selon chacune des directions orthogonales, soit déterminer le déphasage entre les deux composantes orthogonales du flux, par le biais par exemple d'un interféromètre de Michelson ou d'un interféromètre à fentes de Young.

Les interféromètres sont de préférence agencés de façon à ce que les chemins lumineux des deux composantes orthogonales soient identiques, le flux lumineux provenant de la démultiplication d'un seul photon étant très bref. L'utilisation d'une pluralité de paires de directions orthogonales, par exemple décalées de 45° l'une de l'autre, permet avantageusement de mesurer plusieurs fois la polarisation c'est-à-dire la direction de la polarisation ainsi que le déphasage entre les deux directions, permettant ainsi une plus grande précision de la mesure.

La figure 10B représente un exemple d'un tel interféromètre à fentes de Young. Deux ondes 460 et 463 sont issues du prisme 350. L'onde 460 passe par exemple à travers un prisme 461 redressant sa direction de propagation pour qu'elle devienne en 462 parallèle à l'onde 463. L'onde 463 passe par exemple à travers une lame demi-onde permettant d'aligner le champ électrique de ladite onde 465 avec celui de l'onde 462. Les ondes 462 et 465 traversent alors deux trous perforés dans un écran 466 avant d'interférer l'une avec l'autre pour former des franges sur un écran 467 observé par une caméra ou bien doté de capteurs photosensibles permettant de déterminer la position sur ledit écran 467 de la frange la plus lumineuse.

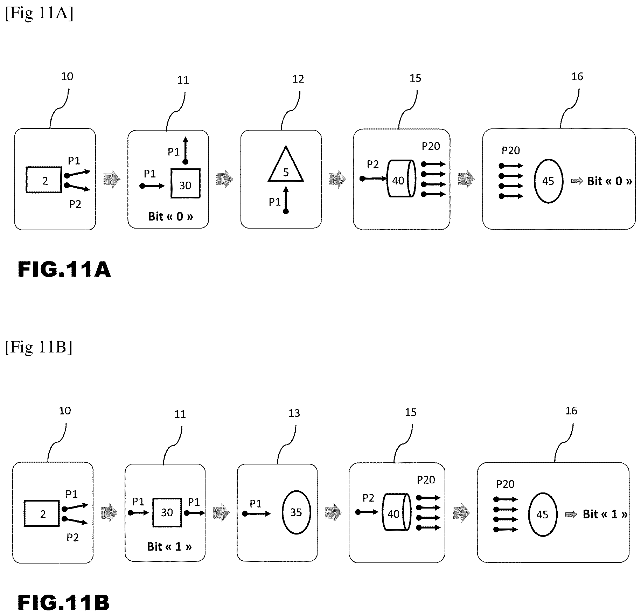

On peut transmettre des informations, notamment des informations de type binaire, entre les récepteurs 3 et 4 d'un système 1 tel que celui décrit à la figure 1B, en suivant par exemple les étapes illustrées aux figures 11A et 11B.

Le protocole de correspondance entre les informations à transmettre, par exemple, entre envoyer un bit "0" ou un bit "1", et la mesure, ou non, du premier photon P1, est déterminée avant le début de la transmission.

A titre d'exemple, on effectue ci-dessous une sélection consistant à ne pas mesurer le premier photon P1 pour transmettre un "0", et de le mesurer pour transmettre un "1". Bien entendu, le choix inverse, ou toute autre correspondance adaptée, serait aussi valide.

A l'étape 10, deux photons intriqués P1 et P2 sont émis simultanément depuis un émetteur 2 vers des récepteurs 3 et 4, respectivement, le récepteur 3 étant placé plus près de l'émetteur 2 que le récepteur 4, comme décrit plus haut.

Les photons émis P1 et P2 présentent un état quantique indéterminé dans une paire prédéterminée de polarisations complémentaires, par exemple une polarisation à 45° s'ils sont polarisés linéairement (les polarisations complémentaires étant 0° et 90).

A l'étape 11, le photon P1 atteint le sélecteur optique 30 du récepteur 3.

Si un bit "0" doit être transmis, le photon P1 est par exemple réfléchi par le sélecteur optique, sur un chemin perpendiculaire dans l'exemple illustré à la figure 11A (mais tout autre chemin est possible), de manière à ne pas pouvoir atteindre l'instrument de mesure 35. Le photon P1 peut notamment être piégé à l'étape 12 dans un dispositif de protection de son état quantique 5, afin d'éviter son absorption, au moins tant que le deuxième photon P2 n'a pas atteint le deuxième récepteur 4.

Le photon P1 conserve par exemple sa polarisation à 45°.

Si un bit "1" doit être transmis, le photon P1 traverse par exemple le sélecteur optique 30 pour se diriger vers l'instrument de mesure 35, comme illustré à la figure 11B.

L'état quantique du photon P1 est ensuite mesuré par l'instrument de mesure 35, à l'étape 13.

Le photon P1 a maintenant un état quantique déterminé, par exemple une polarisation verticale (90°), ou une polarisation horizontale (0°). Instantanément, la mesure effectuée à l'étape 13 projette le photon intriqué P2 dans un état déterminé.

A l'étape 15, quelle que soit l'information à transmettre, le photon P2 atteint l'amplificateur optique 40 du deuxième récepteur 4, où il y est dupliqué en un flux de photons démultipliés P20, chaque photon P20 ayant conservé la polarisation du photon P2.

A l'étape 16, la polarisation du flux de photons P20 est mesurée par un instrument de mesure 45.

Si, en moyenne, un résultat intermédiaire est obtenu, par exemple une polarisation à 45°, on en déduit que le premier photon P1 n'a pas été mesuré, et un bit "0" est reçu.

Si un état quantique correspondant à une mesure dans le premier récepteur 3 est obtenu, par exemple une polarisation verticale (90°) ou horizontale (0°), on en déduit que le premier photon P1 a été mesuré, et un bit "1" est reçu.

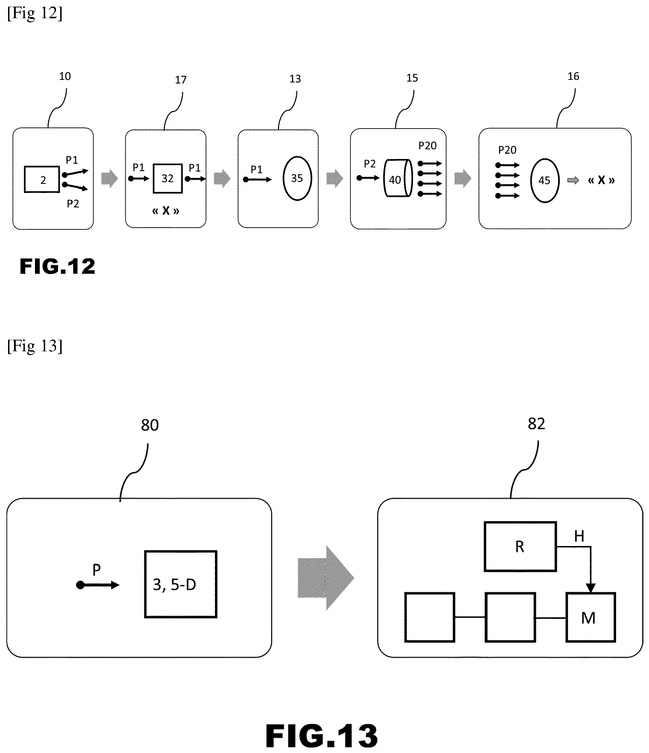

On peut encore transmettre des séries de valeurs discrètes entre les récepteurs 3 et 4 d'un système 1 tel que celui décrit à la figure 1A, en suivant par exemple les étapes illustrées à la figure 12.

A l'étape 10, deux photons intriqués P1 et P2 sont émis simultanément depuis un émetteur 2 vers des récepteurs 3 et 4, respectivement, par exemple avec une polarisation linéaire.

A l'étape 17, le photon P1 atteint le modificateur de polarisation 32, qui convertit la polarisation linéaire du photon P1 en une paire sélectionnée de polarisations complémentaires, la paire ayant été sélectionnée selon le formalisme de Jones et correspondant à une valeur discrète à transmettre.

A l'étape 13, le photon P1 est absorbé par l'instrument 35 dans l'un des deux états complémentaires de la paire sélectionnée, projetant par la même occasion le photon intriqué P2 dans son état complémentaire.

Les étapes suivantes 15 et 17 sont similaires à celles décrites plus haut ; la polarisation du photon P2 est mesurée par amplification puis absorption, et la valeur discrète transmise est déduite.

L'invention n'est pas limitée à la mesure d'une polarisation linéaire des photons. D'autres types d'état quantique peuvent être mesurés et/ou d'autres moyens de mesure peuvent être utilisés, notamment des mesures dans d'autres bases observables.

Les photons P1 et P2 sont par exemple émis avec une polarisation intriquée circulaire, et l'instrument de mesure 35 projette, en mesurant une polarisation linéaire, le photon P1 et par intrication le photon P2, dans une base de polarisation linéaire.

En variante, les photons P1 et P2 sont émis avec une polarisation intriquée linéaire, et l'instrument de mesure 35 projette, en mesurant une polarisation circulaire, le photon P1 et par intrication le photon P2, selon cette base observable.

Dans un autre exemple, les photons P1 et P2 sont émis avec une polarisation linéaire intriquée à la verticale ou à l'horizontale et l'instrument de mesure 35 mesure une polarisation linéaire à 45° ou -45° de la verticale ou de l'horizontale.

Dans une variante, le récepteur 3 comporte deux instruments de mesure 35, l'un mesurant une polarisation linéaire, l'autre mesurant une polarisation circulaire. Le sélecteur optique envoie par exemple le photon P1 vers le premier instrument de mesure si un bit "1" doit être transmis, vers le deuxième instrument de mesure si un bit "2" doit être transmis, et l'empêche d'être mesuré si un bit "0" doit être transmis.

Dans chacun des exemples ci-dessus, l'instrument de mesure 45 du deuxième récepteur 4 peut être configuré pour détecter si le premier photon P1 a été mesuré, ou non, et, le cas échéant, avec quelle polarisation il a été mesuré au premier récepteur.

Des gyroscopes peuvent en outre être utilisés à l'émetteur 2 et aux récepteurs 3 et 4 pour déterminer la direction de polarisation des photons P1 et P2, si ceux-ci sont émis et transportés vers les récepteurs avec une polarisation linéaire.

Comme mentionné plus haut, les récepteurs 3 et 4 ainsi que le dispositif 5 peuvent être munis de dispositifs destinés à compter les photons lors de leur absorption, et facultativement après leur attente de l'absorption de leur photon intriqué, qui peut s'accompagner d'un horodatage de leur arrivée, comme illustré à la figure 13. Cela peut permettre par exemple de commander la correspondance entre les paires de photons intriqués et les bits transmis.

Chaque photon déclenche par exemple le processus d'horodatage en arrivant au récepteur à l'étape 80, notamment en atteignant l'un des instruments de mesure 35 ou 5D. Suite à cet événement déclencheur, le récepteur 3 recopie par exemple à l'étape 82 le temps courant H sur l'horloge dudit récepteur, par exemple inscrite dans un registre R, sur un registre de mémoire libre M, de préférence après avoir soustrait du temps d'arrivée au détecteur 5D le temps de transit du photon dans le dispositif d'attente 5.

Un dispositif similaire (non représenté) peut être agencé au deuxième récepteur 4.

De préférence, les horloges permettant l'horodatage qui vient d'être décrit sont synchronisées pour les deux récepteurs 3 et 4, ce qui permet facultativement de définir des intervalles de temps de traitement des photons communs aux deux récepteurs, et de traiter les doubles paires "multiples" de photons émis par l'émetteur 2.

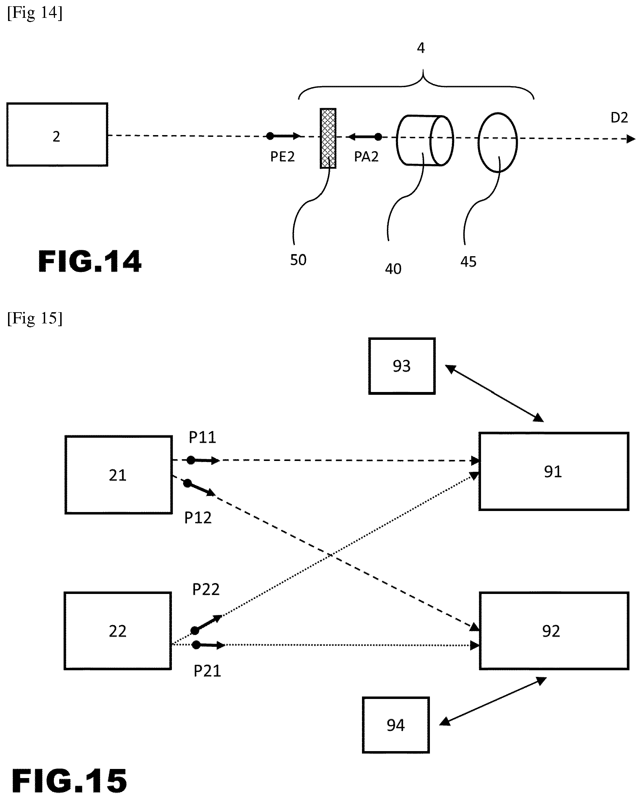

Le deuxième récepteur 4 peut par ailleurs comporter un commutateur 50 placé devant l'amplificateur optique 40, et est configuré pour absorber ou réfléchir le ou les photons éventuels non désirés PE2 qui atteignent le récepteur 4 après le photon P2 au cours d'un même intervalle de temps de traitement, comme représenté à la figure 14.

Le commutateur 50 peut de plus absorber d'éventuels photons PA2 émis par l'amplificateur 40 vers l'émetteur 2 lors de l'amplification du signal, ou lors de la désexcitation de molécules ou atomes du milieu amplificateur.

Le commutateur 50 est par exemple commandé par un mécanisme électronique (non représenté) lui-même commandé par les instruments de mesure 45 quand ceux-ci ou l'un d'eux détecte des photons.

Dans certains modes de réalisation, le système selon l'invention peut comporter plusieurs émetteurs disposés différemment relativement aux récepteurs, afin notamment d'établir une communication bidirectionnelle.

Dans l'exemple illustré à la figure 15, le système 1 comporte deux émetteurs 21 et 22, émettant chacun des paires de photons intriqués vers deux récepteurs 91 et 92.

L'émetteur 21 est plus proche du récepteur 91 que du récepteur 92, et l'émetteur 22 est plus proche du récepteur 92 que du récepteur 91. Cette disposition permet aux récepteurs 91 et 92 de communiquer de manière bidirectionnelle ; le photon P11 émis par l'émetteur 21 arrive en premier au récepteur 91, qui peut alors agir comme premier récepteur 3, c'est-à-dire transmettre une information vers le récepteur 92 qui reçoit son photon intriqué P12 et agit comme deuxième récepteur 4.

Inversement, le photon P21 émis par l'émetteur 22 arrive en premier au récepteur 92, qui cette fois permet de transmettre une information vers le récepteur 91 qui reçoit le photon intriqué P22. Le mécanisme de transmission d'informations, notamment binaires, est par exemple similaire à ce qui a été décrit plus haut, aux figures 11 et 12.

Des dispositifs de réflexion 93 et 94 peuvent être disposés à proximité des récepteurs 91 et 92, respectivement, afin de réfléchir les photons éventuellement réfléchis par les récepteurs 91 et 92.

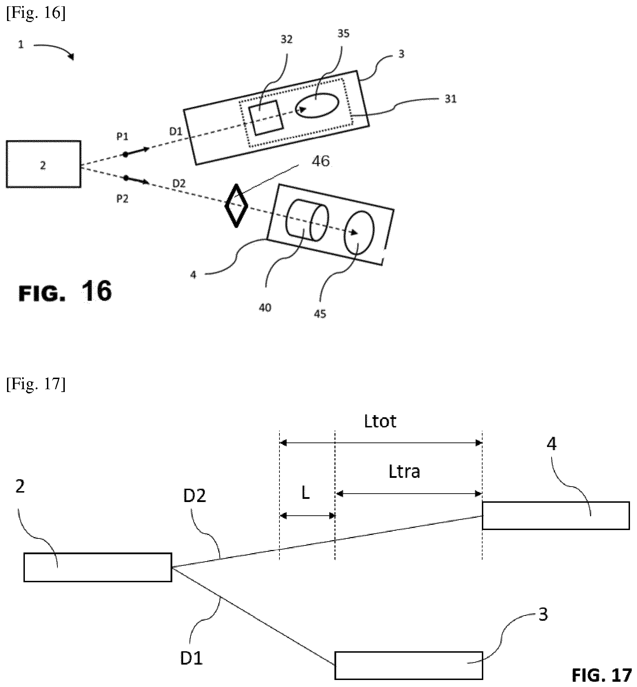

On va maintenant décrire en référence à la figure 16 une variante de mise en œuvre de l'invention, destinée à vérifier une non-écoute d'une information transmise par l'émetteur 2 et le cas échéant, à générer une clé partagée pour l'échange d'informations entre les récepteurs 3 et 4, à partir du transfert d'information que l'on sait ne pas avoir été écouté.

Le système de la figure 16 a été modifié par l'ajout d'au moins un filtre polarisant 46 en entrée du récepteur 4, ce filtre ayant une direction de polarisation qui correspond à celle attendue pour les photons ayant voyagé depuis l'émetteur jusqu'au récepteur 4. Le filtre polarisant 46 est ainsi disposé en amont du changement de polarisation des photons initié par le récepteur 3 émettant l'information à destination du récepteur 4.

Le filtre 46 empêche un récepteur frauduleux de remplacer le récepteur 4 authentique, d'observer la polarisation exacte du photon intriqué après démultiplication dudit photon, puis d'émettre à destination du récepteur 4 authentique un photon frauduleux, en replacement du photon authentique, pour être forcément observé par le récepteur 4 dans la même polarisation relative que le photon authentique, car d'une part, si ledit photon n'est pas intriqué à un autre photon, sa polarisation ne changera pas après avoir traversé le filtre 46 et aura donc la polarisation imposée par le filtre 46 et non pas celle du photon authentique, et d'autre part, si le photon frauduleux est intriqué à un autre photon dit deuxième photon frauduleux, il n'est pas possible d'imposer la polarisation relative de ces photons frauduleux ni par ailleurs de détruire ou arrêter ledit photon frauduleux après qu'il a traversé le filtre 46, si la vérification de la polarisation relative de son photon intriqué est alors vérifiée comme inadéquate, par un appareil tiers.

Il est donc extrêmement improbable que la totalité ou certains des photons d'un groupe de photons intriqués observés par les deux récepteurs 3 et 4 aient été observés ailleurs, si leurs polarisations relatives sont toujours différentes.

On peut vérifier statistiquement l'égalité de l'état quantique des photons utilisés pour la transmission des informations arrivant à chacun des deux récepteurs 3 et 4 et en déduire que la probabilité pour que certains des photons aient été observés est faible, en appliquant la méthode suivante :

Lors de la réception des photons par chacun des récepteurs 3 et 4, les récepteurs notent le temps de réception ainsi que la polarisation exacte des photons par l'utilisation de détecteurs de photons, et non seulement à quelle paire de polarisations complémentaires ils appartiennent. Les temps et polarisations des photons détectés trop proches les uns des autres pour avoir leur polarisation ou leur temps d'arrivée mesuré indépendamment ne sont cependant, de préférence, pas notés et les deux récepteurs 3 et 4 possèdent de préférence, des horloges synchronisées.

Après qu'un nombre déterminé de photons porteurs d'une information I ont été reçus, le deuxième récepteur 4 génère un message comportant le temps précis de détection et la polarisation pour chacun des photons dont ces attributs ont été notés et ayant été retenus comme transmettant une information et donc appartenant à un groupe de NSP photons ou plus ayant une polarisation donnée ou bien la polarisation complémentaire de cette polarisation ; NSP est défini plus haut comme le nombre seuil prédéterminé de photons reçus dans une polarisation donnée ou sa polarisation complémentaire permettant d'identifier la réception d'information.

Ce message est signé, de préférence à l'aide de la technique de hachage aléatoire décrite dans la demande US 20210165914 A1, par le récepteur 4, puis est envoyé au récepteur 3 avec ladite signature, de préférence en mettant en œuvre un moyen de transmission quantique tel que décrit plus haut, puis la signature du message reçu est vérifiée, ainsi que la correspondance des polarisations relatives des photons reçus par les deux récepteurs pour les paires de photons dont les deux photons ont atteint les récepteurs. Cette information I peut être déclarée ne pas avoir été écoutée lors de sa transmission entre les deux récepteurs si la vérification de la signature faire apparaître celle-ci comme authentique et que la proportion de polarisations ne correspondant pas est inférieure à un seuil donné, par exemple 1% si 450 paires de polarisations différentes sont utilisées, ou un multiple tel que 2 de la probabilité pour que deux paires de photons intriqués différentes soient émises à des temps indiscernables par les récepteurs.

De plus, une polarisation relative dans chacune des paires de polarisations des photons ayant été retenus pour avoir transmis l'information I, si cette polarisation relative a été vérifiée comme étant différente pour chacun des photons arrivés à chacun des récepteurs, peut être utilisée pour former une suite de bits formant une clé générée aléatoirement et connue uniquement de chacun des récepteurs ; le récepteur 3 ayant effectué la vérification de concomitance des polarisations relatives enverra à l'autre récepteur 4 un message signé, de préférence par la technique du hachage aléatoire, formé de la liste des dates de réception des photons dont les polarisations relatives ne correspondaient pas ou dont le photon intriqué n'a jamais été reçu par le récepteur 3.

Ainsi, dans un exemple, les étapes suivantes sont mises en œuvre.

Etape 1

Le récepteur 4 reçoit, en provenance de l'émetteur 2, un flux de photons véhiculant une information et établit une première liste des dates de réception des photons ayant servi à déterminer cette information ainsi que la polarisation relative désignant celle des deux polarisations complémentaires dans laquelle le photon a été reçu.

Etape 2

Le récepteur 4 forme un message constitué de la liste des informations collectées à l'étape précédente, crée une signature électronique de cette liste et transmet ladite liste ainsi que la signature au récepteur 3.

Etape 3

Le récepteur 3 reçoit la liste et la signature puis vérifie ladite signature.

Etape 4

Le récepteur 3 établit une deuxième liste constituée des éléments de la première liste dont les polarisations relatives des photons reçus par les récepteurs 3 et 4 sont les mêmes ou dont le photon intriqué n'a jamais atteint le récepteur 3, ledit récepteur 3 ayant stocké dans un registre la polarisation relative de chaque photon ayant servi à la transmission d'information ainsi que sa date de réception. Connaissant la différence de temps de trajet des photons intriqués entre l'émetteur 2 et chacun des deux récepteurs 3 et 4, c'est-à-dire le temps de trajet, le récepteur 3 peut déterminer, pour chaque photon de la première liste, la polarisation relative du photon qu'il a reçu à la date de réception du photon par le récepteur 4, à laquelle a été soustrait le temps de trajet. Cette deuxième liste est de préférence constituée de deux parties distinctes, une première de ces parties contenant des photons dont le photon intriqué n'a jamais atteint le premier récepteur 3 et une deuxième de ces parties contenant des photons dont les deux photons intriqués ont atteint leurs récepteurs respectifs mais avec des polarisations relatives égales.

Etape 5

Si le nombre d'éléments de la deuxième liste limitée aux paires de photons intriqués dont chacun des deux photons a atteint son récepteur respectif est inférieur au produit d'un rapport prédéterminé par le décompte des éléments de la première liste limitée aux paires de photons intriqués dont chacun des deux photons a atteint son récepteur respectif, alors l'information est déclarée avoir été transmise non écoutée.

Etape 6

Si l'information est déclarée avoir été transmise non écoutée, alors la deuxième liste est envoyée signée par le récepteur 3 au récepteur 4, puis une troisième liste est créée par le récepteur 3, constituée des polarisations relatives des photons figurant dans la première liste et ne figurant pas dans la deuxième liste, c'est-à-dire concernant les photons pour lesquels les polarisations relatives ont été observées différentes.

Dans le cas contraire, c'est-à-dire si le produit précité est supérieur audit seuil, un message indiquant que la transmission est susceptible d'avoir été écoutée est envoyé par le récepteur 3 au récepteur 4.

Etape 7

A réception de la deuxième liste par le récepteur 4 et après vérification de la signature, la troisième liste est recréée dans le récepteur 4 à l'aide des première et deuxième listes, puis un message signé, confirmant la bonne réception de la deuxième liste, est envoyé par le récepteur 4 au récepteur 3.

Etape 8

Le récepteur 4 peut utiliser la troisième liste comme clé partagée avec le récepteur 3, et dès réception par le récepteur 3 du message transmis à l'étape 7, le récepteur 3 peut utiliser la troisième liste comme clé partagée avec le récepteur 4.

Dans un autre exemple, le procédé suivant peut être mis en œuvre pour vérifier qu'un message d'information I n'a pas été écouté.

Le premier récepteur 3 peut établir une première liste comportant les dates de réception au premier récepteur et une deuxième liste comportant ces dates de réception et les états de polarisation des photons absorbés par le premier récepteur 3, et le deuxième récepteur 4 peut établir une troisième liste comportant les dates de réception au deuxième récepteur 4 et une quatrième liste comportant ces dates de réception et les états de polarisation des photons reçus par le deuxième récepteur.

La première liste et/ou la troisième liste peuvent être échangées entre le premier récepteur 3 et le deuxième récepteur 4 et sont de préférence signées électroniquement.

A réception de la troisième et/ou de la première liste, respectivement, le premier récepteur 3 et/ou le deuxième récepteur 4 peuvent établir une cinquième liste comportant les dates auxquelles les deux photons des mêmes paires ont été reçus au premier récepteur 3, étant donné que certains photons peuvent avoir été perdus pendant la transmission entre l'émetteur et l'un des deux récepteurs ou les deux.

Si un seul des deux récepteurs établit la cinquième liste, ladite cinquième liste peut être transmise, de préférence signée électroniquement, à l'autre récepteur, de telle sorte que le premier récepteur 3 et le deuxième récepteur 4 puissent établir respectivement une sixième liste et une septième liste d'états de polarisation des photons tels que reçus par le premier récepteur, la sixième liste étant dérivée de la deuxième liste et de la cinquième liste, la septième liste étant dérivée de la quatrième liste et de la cinquième liste, chaque état de polarisation relatif, sur la sixième liste, d'un photon reçu au premier récepteur à un temps marqué sur la cinquième liste étant le même état de polarisation relatif que celui du photon correspondant reçu en même temps et marqué sur la deuxième liste, chaque état de polarisation relatif sur la septième liste d'un photon intriqué à un photon reçu au deuxième récepteur à un temps marqué sur la cinquième liste étant l'état de polarisation relatif complémentaire du photon correspondant reçu après le temps de parcours supplémentaire $t_{tra}$ et marqué sur la quatrième liste.

Les signatures respectives de la sixième liste et de la septième liste peuvent alors être échangées entre les premier et deuxième récepteurs selon le procédé correspondant à la troisième variante du procédé de vérification de l'intégrité d'un message, le premier récepteur 3 étant le premier appareil, la sixième liste étant le premier jeu de données, le deuxième récepteur 4 étant le deuxième appareil et la septième liste étant le deuxième jeu de données.

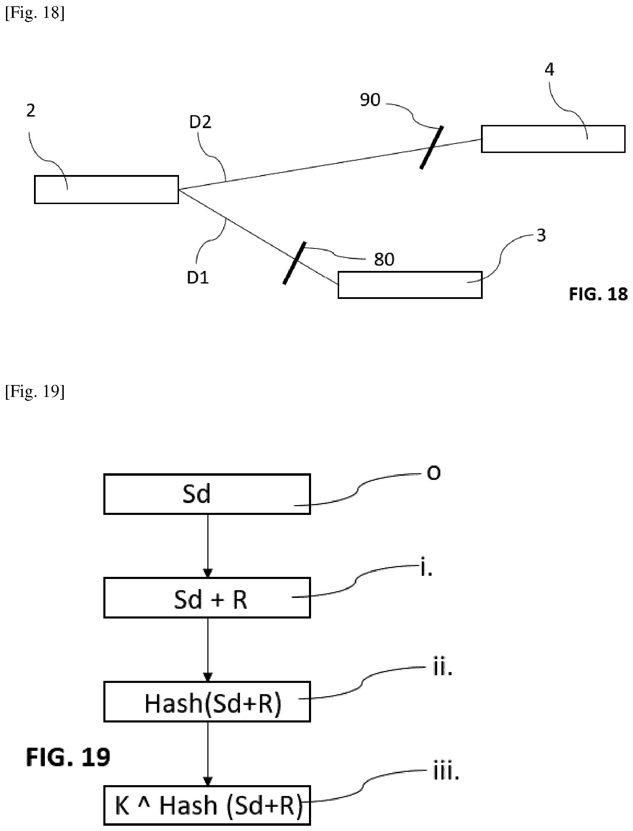

La figure 19 illustre un exemple de procédé de création de signatures électroniques d'un jeu de données Sd. A l'étape o, un jeu de données, par exemple composé des bits des polarisations relatives des photons intriqués P1 ou P2 reçus aux récepteurs 3 ou 4, est créé. A l'étape i., un nombre secret R est concaténé au jeu de données pour former un jeu de données modifié. A l'étape ii., un hachage du jeu de données modifié est calculé. Et à l'étape iii., le hachage est crypté au moyen d'une clé à usage unique K, par exemple par une opération XOR.

La comparaison des hachages desdites listes doit conduire à des hachages identiques pour garantir qu'aucune liste n'a été modifiée par une attaque de type "homme du milieu" et qu'aucun photon n'a été perdu dans le canal de transmission.

Après que ces signatures ont été reçues et vérifiées, un message signé peut être échangé entre les deux récepteurs et lesdites sixième et septième listes peuvent être utilisées en tant que liste partagée de bits aléatoires dont on peut par exemple extraire des clés à usage unique ou des listes d'angles de rotation aléatoires des bases de mesure de polarisation.

Dans un autre exemple, illustré à la figure 17, une protection physique du deuxième chemin de propagation D2 est utilisée pour une portion Ltot du deuxième chemin de propagation D2 se terminant au deuxième récepteur 4, où les photons P2 se propagent depuis l'émetteur 2 après que leurs photons intriqués P1 ont été reçus par le premier récepteur 3. La portion Ltot correspond à la somme d'une portion L plus petite de la portion Ltot et du chemin de parcours supplémentaire Ltra.

La portion Ltot est suffisamment longue pour que la différence t entre le temps de parcours $t_{tot}$ d'un photon P2 dans ladite portion Ltot et le temps de parcours $t_{tra}$ du photon P2 sur le chemin de parcours supplémentaire Ltra puisse être détectée et mesurée par une horloge du deuxième récepteur 4 et que cette détection permette au deuxième récepteur 4 de marquer tout message entrant comme étant potentiellement écouté par un tiers.

Cela permet d'éviter qu'un dispositif de piratage placé dans cette portion non protégée du chemin de propagation puisse effectuer une écoute et retransmettre les photons qui s'y propagent alors qu'ils ne sont plus intriqués.

Dans un autre exemple, illustré sur la figure 18, deux rotateurs de polarisation 80 et 90 sont placés en amont des deux récepteurs de photons 3 et 4, respectivement, les deux rotateurs de photons modifiant la direction de polarisation des photons de manière synchrone et aléatoire, par exemple de 45° ou de 0°, par exemple tous les photons ou un photon sur deux, de telle sorte qu'un émetteur de photons espion ne puisse pas connaître les directions de polarisation mesurées par les récepteurs 3 et 4. Les deux récepteurs 3 et 4 peuvent partager une liste de bits aléatoires où 0 représente une rotation de 0° et 1 une rotation de 45°.

Cela permet d'éviter qu'un nombre secret connu soit généré par un pirate informatique remplaçant l'émetteur de photons intriqués par un émetteur de photons envoyant des paires de photons non intriqués représentant un message qui est également amené à être envoyé par le premier récepteur.

## Revendications

1. Procédé de transmission d'un message M par communication quantique d'un premier récepteur (3) à un deuxième récepteur (4) avec détection d'écoute, le procédé de transmission et de détection comportant les étapes consistant à :

(A) générer une série de $N_p$ paires de photons intriqués (P1 ; P2) à partir d'un émetteur (2), le premier photon (P1) de chaque paire étant émis vers le premier récepteur (3) sur un premier chemin de propagation (D1) et le deuxième photon (P2) de la paire étant émis simultanément vers le deuxième récepteur (4) sur un deuxième chemin de propagation (D2), les premier et deuxième photons (P1 ; P2) étant intriqués, le deuxième récepteur (4) étant situé sur le chemin de propagation du deuxième photon (P2) plus loin de l'émetteur (2) que le premier récepteur (3), de telle sorte que le deuxième photon (P2) arrive au deuxième récepteur (4) après un temps de parcours supplémentaire $t_{tra}$,
(B) convertir le message M en une série de $N_i$ informations I à transmettre dans une première base de numération prédéterminée,
(C) au premier récepteur (3), pour chaque information I :

(a) pour chaque photon intriqué (P1), modifier l'état de polarisation du premier photon (P1) lorsqu'il atteint le premier récepteur (3) en un état de polarisation dépendant de l'information I à transmettre, l'état de polarisation étant sélectionné parmi au moins deux paires différentes de polarisations d'absorption complémentaires, et
(b) à l'aide d'un instrument d'absorption (31), absorber le premier photon (P1) dans l'une des deux polarisations complémentaires de la paire sélectionnée,

(D) au deuxième récepteur (4) :

(a) dupliquer chaque photon reçu (P2) en un flux de photons démultipliés grâce à un dispositif d'amplification (40), la lumière qui est créée ayant conservé l'état de polarisation du photon,
(b) mesurer, pour chaque photon dupliqué, l'état de polarisation moyen du flux lumineux, et
(c) déterminer selon cette mesure l'état de polarisation du premier photon intriqué (P1) reçu par le premier récepteur (3), afin d'en déduire l'information I ayant pu être transmise par le premier récepteur (3),

(d) ajouter un élément comportant le temps de réception du deuxième photon intriqué et l'état de polarisation déterminé du premier photon intriqué qui peut avoir transmis l'information I, à une liste de déduction, la liste de déduction étant une liste comportant les temps de réception des deuxièmes photons intriqués et les états de polarisation déterminés des premiers photons intriqués qui peuvent avoir transmis l'information I,

(E) mettre en œuvre un procédé de détection d'écoute,
(F) déduire de la liste de déduction le message M transmis,

le procédé de détection d'écoute mis en œuvre à l'étape (E) comportant un procédé de génération de clé quantique partagée comportant les étapes suivantes :

(G) le premier récepteur (3) établit une première liste comportant les dates de réception au premier récepteur (3) et une deuxième liste comportant ces dates de réception et les états de polarisation relatifs des photons (P1) absorbés par le premier récepteur (3), et le deuxième récepteur (4) établit une troisième liste comportant les dates de réception au deuxième récepteur (4) et une quatrième liste comportant ces dates de réception et les états de polarisation relatifs des photons (P2) reçus par le deuxième récepteur (4),

(H) la première liste et/ou la troisième liste étant échangées entre le premier récepteur (3) et le deuxième récepteur (4),

(I) à réception de la troisième liste et/ou de la première liste, respectivement, le premier récepteur (3) et/ou le deuxième récepteur (4) établissent une cinquième liste comportant les dates auxquelles les premiers photons (P1) ont été reçus au premier récepteur (3), pour les paires pour lesquelles les deux photons intriqués (P1 ; P2) ont été reçus aux deux récepteurs (3 ; 4), étant donné que certains photons peuvent avoir été perdus lors de la transmission entre l'émetteur (2) et l'un des deux récepteurs ou les deux (3 ; 4),

(J) si un seul des deux récepteurs (3 ; 4) établit la cinquième liste, ladite cinquième liste étant transmise, de préférence signée électroniquement, à l'autre récepteur (4 ; 3), alors le premier récepteur (3) et le deuxième récepteur (4) établissent respectivement une sixième liste et une septième liste d'états de polarisation relatifs des photons (P1) tels que reçus par le premier récepteur (3), la sixième liste étant dérivée de la deuxième liste et de la cinquième liste, la septième liste étant dérivée de la quatrième liste et de la cinquième liste, chaque état de polarisation relatif, sur la sixième liste, d'un photon (P1) reçu au premier récepteur (3) à un temps marqué sur la cinquième liste étant le même état de polarisation relatif que celui du photon correspondant (P1) reçu en même temps et marqué sur la deuxième liste, chaque état de polarisation relatif, sur la septième liste, d'un photon (P1) intriqué à un photon (P2) reçu au deuxième récepteur (4) à un temps marqué sur la cinquième liste étant l'état de polarisation relatif complémentaire de l'état de polarisation du photon correspondant (P2) reçu au deuxième récepteur (4) après le temps de parcours supplémentaire $t_{tra}$ et marqué sur la quatrième liste,

(K) les signatures respectives de la sixième liste et de la septième liste étant échangées entre les premier et deuxième récepteurs (3 ; 4) pour être comparées selon un procédé de comparaison,
(L) si les signatures de la sixième liste et de la septième liste sont identiques, la liste de déduction de l'information I est considérée comme étant non écoutée.

2. Procédé selon la revendication 1, la polarisation relative d'un photon (P1 ; P2) étant la polarisation du photon (P1 ; P2), ou un bit affecté à toutes les polarisations possibles que peuvent prendre les deuxièmes photons intriqués (P2) après que le premier photon (P1) a atteint le premier récepteur (3), où 1 est ledit bit affecté d'un photon intriqué à un photon auquel un 0 a été affecté.

3. Procédé selon la revendication 1 ou 2, dans lequel le procédé de comparaison à l'étape (K) comporte les étapes consistant à :

i. mélanger, au premier récepteur (3), un premier nombre secret, partagé ou à partager avec le deuxième récepteur (4), appelé nombre mélangeur, avec la sixième liste, à l'aide d'une fonction de mélange, afin d'obtenir une première donnée mélangée,
ii. hacher, au premier récepteur (3), la première donnée mélangée à l'aide d'une fonction de hachage,
iii. crypter, au premier récepteur (3), le hachage de la première donnée mélangée avec un deuxième nombre secret partagé ou à partager avec le deuxième récepteur (4),
iv. envoyer, au premier récepteur (3), au deuxième récepteur (4), le hachage crypté de la première donnée mélangée avec le deuxième nombre secret,

v. recevoir, au deuxième récepteur (4), les données envoyées par le premier récepteur (3) à l'étape iv,

vi. décrypter, au deuxième récepteur (4), les données reçues,

vii. mélanger, au deuxième récepteur (4), le premier nombre secret à la septième liste, à l'aide d'une fonction de mélange, afin d'obtenir une deuxième donnée mélangée,

viii. hacher, au deuxième récepteur, la deuxième donnée mélangée à l'aide d'une fonction de hachage,

ix. comparer, au deuxième récepteur, le hachage de la deuxième donnée mélangée aux données reçues décryptées.

4. Procédé selon la revendication précédente, le premier nombre secret étant tenu secret et réutilisé ou changé périodiquement, par exemple à chaque fois ou chaque jour, et/ou le deuxième nombre secret étant tenu secret et réutilisé ou changé périodiquement, par exemple à chaque fois ou chaque jour, et/ou, le premier nombre secret étant une première clé renouvelable, renouvelée après chaque utilisation, et/ou le deuxième nombre secret étant une deuxième clé renouvelable, renouvelée après chaque utilisation.

5. Procédé selon l'une des revendications 3 et 4, les récepteurs (3 ; 4) partageant les nombres secrets avant que l'étape (K) ait lieu ou après que l'étape (K) ait eu lieu et avant leur utilisation, notamment les récepteurs (3 ; 4) partageant le nombre secret en se l'envoyant l'un à l'autre crypté au moyen d'une clé à usage unique, et/ou un identifiant de nombre mélangeur pouvant être échangé entre le premier récepteur (3) et le deuxième récepteur (4), qui sont chacun capables de retrouver le nombre mélangeur correspondant dans une liste mémorisée de nombres mélangeurs, et/ou la fonction de mélange étant une fonction logique XOR, ou une fonction de suffixe, consistant à ajouter le nombre mélangeur à la fin de la sixième liste, ou une fonction de cryptage utilisant le nombre mélangeur comme clé de cryptage pour crypter la sixième liste, ou

la fonction de mélange étant une combinaison d'une fonction XOR, d'une fonction de suffixe consistant à ajouter le nombre mélangeur à la fin du premier jeu de données et d'une fonction de cryptage utilisant le nombre mélangeur comme clé de cryptage pour crypter le premier jeu de données, la fonction de cryptage étant par exemple une fonction XOR, en particulier le message M transmis étant utilisé comme clé de cryptage si la liste de déduction a été considérée comme n'ayant pas été écoutée, et/ou

les clés de cryptage générées au cours du procédé de transmission et de détection et/ou constituées du message M, étant utilisées si la liste de déduction a été considérée comme n'ayant pas été écoutée, en tant que premier et/ou deuxième nombres secrets.

6. Procédé selon l'une quelconque des revendications 3 à 5, un message signé étant échangé après l'étape ix. entre les deux récepteurs (3 ; 4) avant que les sixième et septième listes ne soient utilisées comme clés à usage unique, et/ou la liste de déduction étant considérée comme n'ayant pas été écoutée si les deux données comparées à l'étape ix. sont égales.

7. Procédé selon l'une quelconque des revendications précédentes, les listes établies à l'étape (G) étant établies pour la transmission d'une seule information I ou établies en utilisant des photons (P1) transmis pour la transmission d'une série d'informations I multiples, et/ou

le deuxième chemin de propagation (D2) étant protégé physiquement contre l'écoute, au moins pour une portion (Ltot) du deuxième chemin de propagation (D2) se terminant au deuxième récepteur (4), où les photons (P2) se propagent depuis l'émetteur (2) après que leurs photons intriqués (P1) ont été reçus par le premier récepteur (3), la portion (Ltot) étant de préférence suffisamment longue pour que la différence $t$ entre le temps de parcours $t_{tot}$ d'un photon (P2) dans ladite portion (Ltot) et le temps de parcours ($t_{tra}$) du photon (P2) à l'état non intriqué vers le deuxième récepteur (4) puisse être détectée par le deuxième récepteur (4) et que cette détection permette au deuxième récepteur (4) de marquer tout message entrant comme étant potentiellement écouté par un tiers, et/ou deux rotateurs de polarisation (80 ; 90) étant placés avant les deux récepteurs de photons (3 ; 4), respectivement, les deux rotateurs de photons modifiant la direction de polarisation des photons de manière synchrone et aléatoire de 45° ou 0° afin qu'un émetteur de photons espion ne puisse pas connaître les directions de polarisation mesurées par les récepteurs (3 ; 4).

8. Procédé selon l'une quelconque des revendications précédentes, la sixième liste et la septième liste étant constituées de bits, et pouvant être utilisées en tant que liste partagée de bits aléatoires, et/ou

le premier récepteur (3) codant la même information I sur de nombreux photons entrants successifs (P1), étant donné que certains de leurs photons intriqués (P2) peuvent être perdus avant d'atteindre le deuxième récepteur (4), et/ou le premier récepteur (3) réservant une information $I_0$ à utiliser pour séparer l'envoi de deux autres informations I quelconques, notamment si ces deux autres informations I sont identiques, représentant par exemple une même lettre, et/ou

l'étape (F), consistant à déduire de la liste de déduction le message M transmis, étant réalisée par le premier récepteur (3) ayant codé une lettre de séparation entre deux lettres successives égales quelconques du message M, en tenant compte du temps de parcours $t_{tra}$ et de la cinquième liste, en retirant de la liste de déduction les polarisations de photons pour lesquels le premier photon intriqué n'a jamais atteint le premier récepteur, afin de créer une liste de déduction approuvée, et le deuxième récepteur (4) déduisant de la liste de déduction approuvée le message M ayant été transmis, ou le deuxième récepteur (4) comptant en tant qu'information reçue toute information successivement enregistrée sur la liste de déduction plus d'un nombre prédéfini de fois au sein d'un nombre prédéterminé d'informations I reçues successivement, et/ou

le message M étant considéré comme n'ayant pas été écouté si la liste de déduction a été considérée comme n'ayant pas été écoutée.

9. Procédé selon l'une quelconque des revendications précédentes, la paire de polarisations d'absorption complémentaires étant choisie parmi au moins trois paires différentes de polarisations d'absorption complémentaires, notamment parmi au moins 210 paires distinctes de polarisations d'absorption complémentaires, et/ou une pluralité de paires de photons intriqués (P1 ; P2) étant générées successivement par l'émetteur (2), chaque paire de photons permettant de transmettre une information I du premier récepteur (3) au deuxième récepteur (4).

10. Système de communication quantique (1) mettant en œuvre le procédé selon l'une quelconque des revendications précédentes, comportant :

    • un émetteur (2) de photons intriqués (P1 ; P2), comportant une source configurée pour générer au moins une paire de photons intriqués comportant un premier photon (P1) émis sur un premier chemin de propagation (D1), et simultanément un deuxième photon (P2) émis sur un deuxième chemin de propagation (D2) différent du premier chemin de propagation (D1),
    • un premier récepteur (3) disposé sur le premier chemin de propagation (D1), comportant un absorbeur complexe (31) configuré pour absorber le photon (P1) dans un état de polarisation sélectionné parmi les états d'au moins deux paires différentes d'états de polarisation complémentaires,
    • un deuxième récepteur (4) disposé sur le deuxième chemin de propagation (D2) de façon à être atteint par le deuxième photon (P2) après que le premier photon (P1) a atteint le premier récepteur (3), ledit deuxième récepteur comportant :

        - un amplificateur optique (40) permettant de démultiplier le deuxième photon (P2) tout en conservant sa polarisation, et
        - disposé en aval de l'amplificateur (40), un instrument de mesure (45) permettant de mesurer la polarisation moyenne des photons démultipliés,

    de préférence, l'absorbeur complexe (31) étant configuré pour absorber le photon (P1) dans un état de polarisation prédéterminé sélectionné parmi les états d'au moins trois paires différentes de polarisations complémentaires, l'absorbeur complexe (31) comportant notamment :

        - au moins un instrument (35) permettant d'absorber le photon dans l'un ou l'autre de deux états de polarisation complémentaires,
        - un modificateur de polarisation (32) qui est disposé en amont dudit instrument (35) et est configuré pour convertir la polarisation du premier photon (P1) en la polarisation sélectionnée selon laquelle ledit instrument (35) absorbe les photons.

11. Système selon la revendication précédente, le modificateur de polarisation (32) comportant un modificateur de direction de polarisation (32a) disposé en amont d'un modificateur de phase de polarisation (32b),
    en particulier le modificateur de direction de polarisation (32a) comportant deux lames quart d'onde disposées l'une après l'autre sur le chemin de propagation (D1) du premier photon (P1), l'orientation de l'une au moins des deux lames étant variable, ou le modificateur de direction de polarisation (32a) comportant une lame ou un prisme en matériau chiral ou rotatif induisant une rotation de la polarisation d'un angle dépendant de l'endroit par lequel l'onde pénètre dans ledit matériau chiral ou rotatif.

12. Système selon la revendication précédente, le modificateur de phase de polarisation (32b) comportant une première lame ou un premier prisme biréfringent divisant le faisceau en deux ondes électromagnétiques de polarisation linéaire, l'une selon un premier axe et l'autre selon un deuxième axe, et une lame à retard d'indice de réfraction variable disposée sur le deuxième axe.

**13.** Système selon l'une quelconque des revendications 10 à 12, ledit au moins un instrument (35) comportant au moins un filtre permettant d'envoyer le premier photon vers l'un ou l'autre de deux détecteurs de photons selon l'état de polarisation du premier photon.

**14.** Système selon l'une quelconque des revendications 10 à 13, l'instrument de mesure (45) du deuxième récepteur (4) comportant au moins un détecteur de photons (455) agencé pour mesurer la polarisation de la lumière issue de la multiplication du deuxième photon (P2), et/ou l'instrument de mesure (45) du deuxième récepteur (4) comportant une succession de lames semi-réfléchissantes (452) disposées en aval de l'amplificateur optique (40), lesdites lames (452) dirigeant le flux de photons démultipliés avec une égale intensité vers un premier instrument de mesure de phase, celui-ci étant un instrument de mesure de polarisation agencé pour mesurer l'intensité du flux selon deux axes perpendiculaires, un deuxième instrument de mesure de phase mesurant le déphasage de la lumière entre ces deux mêmes axes, et un troisième instrument de mesure de phase mesurant le déphasage de la lumière entre la bissectrice des mêmes axes et un axe perpendiculaire à cette bissectrice, la première lame semi-réfléchissante déviant par exemple un tiers du flux lumineux vers le premier instrument de mesure de phase, la deuxième lame semi-réfléchissante déviant par exemple la moitié de son flux lumineux entrant vers le deuxième instrument de mesure de phase et la moitié restante de son flux lumineux entrant vers le troisième instrument de mesure de phase.

**15.** Système selon l'une quelconque des revendications 10 à 14, l'amplificateur optique (40) étant un amplificateur à fibre dopée, et/ou

l'émetteur (2) étant configuré pour générer successivement une pluralité de paires de photons intriqués (P1 ; P2), et/ou
l'émetteur (2) et chacun des récepteurs (3 ; 4) comportant une horloge, les horloges de l'émetteur (2) et des récepteurs (3 ; 4) étant synchronisées entre elles, et/ou
le deuxième récepteur (4) comportant un commutateur (50) disposé devant l'amplificateur optique (40) et configuré pour absorber ou réfléchir le ou les photons subséquents à un premier photon atteignant ledit deuxième récepteur (4) dans un intervalle de temps prédéterminé, et/ou
comportant un deuxième émetteur capable de générer une ou plusieurs paires de photons intriqués, le deuxième émetteur étant situé plus près du deuxième récepteur (4) que du premier récepteur (3).

**Patentansprüche**

**1.** Verfahren zur Übertragung einer Nachricht M durch Quantenkommunikation von einem ersten Empfänger (3) an einen zweiten Empfänger (4) mit Abhörerkennung, wobei das Verfahren zur Übertragung und Erkennung die Schritte umfasst, die darin bestehen:

(A) eine Serie aus $N_p$ Paaren verschränkter Photonen (P1; P2) ausgehend von einem Sender (2) zu erzeugen, wobei das erste Photon (P1) jedes Paars zu dem ersten Empfänger (3) über einen ersten Ausbreitungspfad (D1) gesendet wird und wobei das zweite Photon (P2) des Paars gleichzeitig zu dem zweiten Empfänger (4) über einen zweiten Ausbreitungspfad (D2) gesendet wird, wobei das erste und das zweite Photon (P1; P2) verschränkt sind, wobei der zweite Empfänger (4) auf dem Ausbreitungspfad des zweiten Photons (P2) weiter von dem Sender (2) entfernt als der erste Empfänger (3) gelegen ist, so dass das zweite Photon (P2) an dem zweiten Empfänger (4) nach einer zusätzlichen Laufzeit $t_{tra}$ eintrifft,
(B) die Nachricht M in eine Serie von $N_i$ Informationen I umzuwandeln, die in einer vorbestimmten ersten Zahlenbasis zu übertragen sind,
(C) an dem ersten Empfänger (3), für jede Information I:

(a) für jedes verschränkte Photon (P1) den Polarisationszustand des ersten Photons (P1), wenn es den ersten Empfänger (3) erreicht, in einen Polarisationszustand zu ändern, der von der zu übertragenden Information I abhängt, wobei der Polarisationszustand unter mindestens zwei unterschiedlichen Paaren mit komplementären Absorptionspolarisationen ausgewählt ist, und
(b) mithilfe eines Absorptionsinstruments (31) das erste Photon (P1) in der einen der beiden komplementären Polarisationen des ausgewählten Paars zu absorbieren,

(D) an dem zweiten Empfänger (4):

(a) jedes empfangene Photon (P2) dank einer Verstärkungsvorrichtung (40) zu einem Strom verstärkter Photonen zu duplizieren, wobei das Licht, das geschaffen wird, den Polarisationszustand des Photons beibehalten hat,

(b) für jedes duplizierte Photon den durchschnittlichen Polarisationszustand des Lichtstroms zu messen, und

(c) gemäß dieser Messung den Polarisationszustand des ersten verschränkten Photons (P1), das von dem ersten Empfänger (3) empfangen wird, zu ermitteln, um daraus die Information I abzuleiten, die von dem ersten Empfänger (3) übertragen werden konnte,

(d) ein Element, das die Empfangszeit des zweiten verschränkten Photons und den ermittelten Polarisationszustand des ersten verschränkten Photons, das die Information I übertragen haben kann, umfasst, zu einer Ableitungsliste hinzuzufügen, wobei die Ableitungsliste eine Liste ist, welche die Empfangszeiten der zweiten verschränkten Photonen und die ermittelten Polarisationszustände der ersten verschränkten Photonen, welche die Information I übertragen haben können, umfasst,

(E) ein Verfahren zur Abhörerkennung durchzuführen,

(F) aus der Ableitungsliste die übertragene Nachricht M abzuleiten,

wobei das im Schritt (E) durchgeführte Verfahren zur Abhörerkennung ein Verfahren zur Erzeugung eines geteilten Quantenschlüssels umfasst, das die folgenden Schritte umfasst:

(G) der erste Empfänger (3) erstellt eine erste Liste, welche die Empfangszeitpunkte an dem ersten Empfänger (3) umfasst, und eine zweite Liste, die diese Empfangszeitpunkte und die jeweiligen Polarisationszustände der von dem ersten Empfänger (3) absorbierten Photonen (P1) umfasst, und der zweite Empfänger (4) erstellt eine dritte Liste, welche die Empfangszeitpunkte an dem zweiten Empfänger (4) umfasst, und eine vierte Liste, welche diese Empfangszeitpunkte und die jeweiligen Polarisationszustände der von dem zweiten Empfänger (4) empfangenen Photonen (P2) umfasst,

(H) wobei die erste Liste und/oder die dritte Liste zwischen dem ersten Empfänger (3) und dem zweiten Empfänger (4) ausgetauscht werden,

(I) beim Empfangen der dritten Liste und/oder der ersten Liste erstellt bzw. erstellen der erste Empfänger (3) und/oder der zweite Empfänger (4) eine fünfte Liste, welche die Zeitpunkte umfasst, zu denen die ersten Photonen (P1) an dem ersten Empfänger (3) empfangen worden sind, für die Paare, bei denen die beiden verschränkten Photonen (P1; P2) an den beiden Empfängern (3; 4) empfangen worden sind, wobei bestimmte Photonen bei der Übertragung zwischen dem Sender (2) und einem der beiden Empfänger oder beiden (3; 4) verloren gegangen sein können,

(J) wenn ein einziger der beiden Empfänger (3; 4) die fünfte Liste erstellt, wobei die fünfte Liste, bevorzugt elektronisch signiert, an den anderen Empfänger (4; 3) übertragen wird, dann erstellen der erste Empfänger (3) und der zweite Empfänger (4) eine sechste Liste beziehungsweise eine siebte Liste mit jeweiligen Polarisationszuständen der Photonen (P1) so, wie sie von dem ersten Empfänger (3) empfangen wurden, wobei die sechste Liste von der zweiten Liste und von der fünften Liste abgeleitet wird, wobei die siebte Liste von der vierten Liste und von der fünften Liste abgeleitet wird, wobei jeder jeweilige Polarisationszustand, in der sechsten Liste, eines Photons (P1), das an dem ersten Empfänger (3) zu einer in der fünften Liste markierten Zeit empfangen wurde, denselben jeweiligen Polarisationszustand wie das zur selben Zeit empfangene und in der zweiten Liste markierte entsprechende Photon (P1) hat, wobei jeder jeweilige Polarisationszustand, in der siebten Liste, eines Photons (P1), das mit einem Photon (P2) verschränkt ist, das an dem zweiten Empfänger (4) zu einer in der fünften Liste markierten Zeit empfangen wurde, der jeweilige Polarisationszustand ist, der zu dem Polarisationszustand des entsprechenden Photons (P2) komplementär ist, das an dem zweiten Empfänger (4) nach der zusätzlichen Laufzeit $t_{tra}$ empfangen wurde und in der vierten Liste markiert ist,

(K) wobei die jeweiligen Signaturen der sechsten Liste und der siebten Liste zwischen dem ersten und dem zweiten Empfänger (3; 4) ausgetauscht werden, um gemäß einem Vergleichsverfahren verglichen zu werden,

(L) wenn die Signaturen der sechsten Liste und der siebten Liste identisch sind, wird die Ableitungsliste der Information I als nicht abgehört betrachtet.

2. Verfahren nach Anspruch 1, wobei die jeweilige Polarisation eines Photons (P1; P2) die Polarisation des Photons (P1; P2) ist oder ein Bit, das allen möglichen Polarisationen zugewiesen ist, welche die zweiten verschränkten Photonen (P2) annehmen können, nachdem das erste Photon (P1) den ersten Empfänger (3) erreicht hat, wobei 1 das Bit ist, das einem Photon zugewiesen ist, das mit einem Photon verschränkt ist, dem eine 0 zugewiesen worden ist.

3. Verfahren nach Anspruch 1 oder 2, wobei das Vergleichsverfahren im Schritt (K) die Schritte umfasst, die darin bestehen:

    i. an dem ersten Empfänger (3) eine erste geheime Zahl, die mit dem zweiten Empfänger (4) geteilt wird oder zu teilen ist, Mischerzahl genannt, mithilfe einer Mischfunktion mit der sechsten Liste zu mischen, um ein erstes gemischtes Datum zu erhalten,

    ii. an dem ersten Empfänger (3) das erste gemischte Datum mithilfe einer Hash-Funktion zu hashen,

    iii. an dem ersten Empfänger (3) das Hashing des ersten Datums, das mit einer zweiten geheimen Zahl gemischt ist, die mit dem zweiten Empfänger (4) geteilt wird oder zu teilen ist, zu verschlüsseln,

    iv. an dem ersten Empfänger (3) das verschlüsselte Hashing des mit der zweiten geheimen Zahl gemischten ersten Datums an den zweiten Empfänger (4) zu senden,

    v. an dem zweiten Empfänger (4) die von dem ersten Empfänger (3) im Schritt iv gesendeten Daten zu empfangen,

    vi. an dem zweiten Empfänger (4) die empfangenen Daten zu entschlüsseln,

    vii. an dem zweiten Empfänger (4) mithilfe einer Mischfunktion die erste geheime Zahl mit der siebten Liste zu mischen, um ein zweites gemischtes Datum zu erhalten,

    viii. an dem zweiten Empfänger mithilfe einer Hash-Funktion das zweite gemischte Datum zu hashen,

    ix. an dem zweiten Empfänger das Hashing des zweiten gemischten Datums mit den entschlüsselten empfangenen Daten zu vergleichen.

4. Verfahren nach dem vorhergehenden Anspruch, wobei die erste geheime Zahl geheim gehalten wird und regelmäßig wiederverwendet oder geändert wird, zum Beispiel jedes Mal oder jeden Tag, und/oder wobei die zweite geheime Zahl geheim gehalten wird und regelmäßig wiederverwendet oder geändert wird, zum Beispiel jedes Mal oder jeden Tag, und/oder wobei die erste geheime Zahl ein erster erneuerbarer Schlüssel ist, der nach jeder Verwendung erneuert wird, und/oder wobei die zweite geheime Zahl ein zweiter erneuerbarer Schlüssel ist, der nach jeder Verwendung erneuert wird.

5. Verfahren nach einem der Ansprüche 3 und 4, wobei die Empfänger (3; 4) die geheimen Zahlen, bevor der Schritt (K) stattfindet oder nachdem der Schritt (K) stattgefunden hat, und vor ihrer Verwendung teilen, wobei die Empfänger (3; 4) die geheime Zahl insbesondere teilen, indem sie sie einander mittels eines Einmalschlüssels verschlüsselt senden, und/oder wobei eine Mischerzahl-Kennung zwischen dem ersten Empfänger (3) und dem zweiten Empfänger (4) ausgetauscht werden kann, von denen jeder in der Lage ist, die entsprechende Mischerzahl in einer gespeicherten Liste mit Mischerzahlen wiederzufinden, und/oder

    wobei die Mischfunktion eine logische XOR-Funktion ist oder eine Suffix-Funktion, die darin besteht, die Mischerzahl am Ende der sechsten Liste hinzuzufügen, oder eine Verschlüsselungsfunktion, welche die Mischerzahl als Verschlüsselungsschlüssel verwendet, um die sechste Liste zu verschlüsseln, oder

    wobei die Mischfunktion eine Kombination aus einer XOR-Funktion, aus einer Suffixfunktion, die darin besteht, die Mischerzahl am Ende des ersten Datensatzes hinzuzufügen, und aus einer Verschlüsselungsfunktion, welche die Mischerzahl als Verschlüsselungsschlüssel zum Verschlüsseln des ersten Datensatzes verwendet, ist, wobei die Verschlüsselungsfunktion zum Beispiel eine XOR-Funktion ist,

    wobei im Besonderen die übertragene Nachricht M als Verschlüsselungsschlüssel verwendet wird, wenn die Ableitungsliste als nicht abgehört betrachtet worden ist, und/oder

    wobei die Verschlüsselungsschlüssel, die während des Verfahrens zur Übertragung und Erkennung erzeugt wurden und/oder aus der Nachricht M bestehen, als erste und/oder zweite geheime Zahlen verwendet werden, wenn die Ableitungsliste als nicht abgehört betrachtet worden ist.

6. Verfahren nach einem der Ansprüche 3 bis 5, wobei eine signierte Nachricht nach dem Schritt ix. zwischen den beiden Empfängern (3; 4) ausgetauscht wird, bevor die sechste und die siebte Liste als Einmalschlüssel verwendet werden, und/oder wobei die Ableitungsliste als nicht abgehört betrachtet wird, wenn die beiden im Schritt ix. verglichenen Daten gleich sind.

7. Verfahren nach einem der vorhergehenden Ansprüche, wobei die im Schritt (G) erstellten Listen für die Übertragung einer einzigen Information I erstellt werden oder unter Verwendung der Photonen (P1) erstellt werden, die zur Übertragung einer Serie von mehrfachen Informationen I übertragen werden, und/oder wobei der zweite Ausbreitungspfad (D2) physisch gegen Abhören geschützt ist, mindestens für einen Abschnitt (Ltot) des zweiten Ausbreitungspfads (D2), der an dem zweiten Empfänger (4) endet, wobei sich die Photonen (P2) von dem Sender (2) aus ausbreiten, nachdem ihre verschränkten Photonen (P1) von dem ersten Empfänger (3) empfangen worden sind, wobei der Abschnitt (Ltot) bevorzugt so lang ist, dass die Differenz t zwischen der Laufzeit $t_{tot}$ eines Photons (P2) in dem Abschnitt (Ltot) und der Laufzeit ($t_{tra}$) des Photons (P2) im nicht verschränkten Zustand zu dem zweiten Empfänger (4) von dem zweiten Empfänger (4) erkannt werden kann und dass diese Erkennung es dem zweiten Empfänger (4) ermöglicht, jede eingehende Nachricht als potentiell von einem Dritten abgehört zu markieren, und/oder wobei zwei Polarisationsrotatoren (80; 90) vor den beiden Photonenempfängern (3; 4) platziert sind, wobei die beiden Photonenrotatoren die Polarisationsrichtung der Photonen synchron und zufällig um 45° oder 0° ändern, damit ein Sender von Spionage-Photonen die von den Empfängern (3; 4) gemessenen Polarisationsrichtungen nicht erfahren kann.

8. Verfahren nach einem der vorhergehenden Ansprüche, wobei die sechste Liste und die siebte Liste aus Bits bestehen und als geteilte Liste mit zufälligen Bits verwendet werden können, und/oder

  wobei der erste Empfänger (3) dieselbe Information I über zahlreiche aufeinander folgende eingehende Photonen (P1) codiert, da einige ihrer verschränkten Photonen (P2) verloren gehen können, bevor sie den zweiten Empfänger (4) erreichen, und/oder wobei der erste Empfänger (3) eine Information $I_0$ reserviert, die zu verwenden ist, um das Senden von zwei beliebigen anderen Informationen I zu trennen, insbesondere wenn diese beiden anderen Information I identisch sind, wobei sie beispielsweise einen selben Buchstaben repräsentieren, und/oder

  wobei der Schritt (F), der darin besteht, aus der Ableitungsliste die übertragene Nachricht M abzuleiten, von dem ersten Empfänger (3) ausgeführt wird, der einen Trennbuchstaben zwischen zwei beliebigen gleichen aufeinander folgenden Buchstaben der Nachricht M codiert hat, unter Berücksichtigung der Laufzeit $t_{tra}$ und der fünften Liste, indem aus der Ableitungsliste die Polarisationen von Photonen entfernt werden, bei denen das erste verschränkte Photon den ersten Empfänger nie erreicht hat, um eine genehmigte Ableitungsliste zu schaffen, und wobei der zweite Empfänger (4) aus der genehmigten Ableitungsliste die Nachricht M ableitet, die übertragen worden ist, oder wobei der zweite Empfänger (4) als empfangene Information jede nacheinander in der Ableitungsliste registrierte Information plus eine vorgegebene Anzahl von Malen innerhalb einer vorbestimmten Anzahl von nacheinander empfangenen Informationen I zählt, und/oder

wobei die Nachricht M als nicht abgehört betrachtet wird, wenn die Ableitungsliste als nicht abgehört betrachtet worden ist.

9. Verfahren nach einem der vorhergehenden Ansprüche, wobei das Paar mit komplementären Absorptionspolarisationen unter mindestens drei unterschiedlichen Paaren mit komplementären Absorptionspolarisationen gewählt wird, insbesondere unter mindestens 210 verschiedenen Paaren mit komplementären Absorptionspolarisationen, und/oder wobei eine Mehrzahl von Paaren verschränkter Photonen (P1; P2) nacheinander von dem Sender (2) erzeugt wird, wobei jedes Photonenpaar es ermöglicht, eine Information I von dem ersten Empfänger (3) an den zweiten Empfänger (4) zu übertragen.

10. Quantenkommunikationssystem (1), welches das Verfahren nach einem der vorhergehenden Ansprüche durchführt, umfassend:

  • einen Sender (2) verschränkter Photonen (P1; P2), umfassend eine Quelle, die dazu ausgestaltet ist, mindestens ein Paar verschränkter Photonen zu erzeugen, das ein erstes Photon (P1), das über einen ersten Ausbreitungspfad (D1) gesendet wird, und ein zweites Photon (P2), das gleichzeitig über einen zweiten Ausbreitungspfad (D2) gesendet wird, der verschieden von dem ersten Ausbreitungspfad (D1) ist, umfasst,

  • einen auf dem ersten Ausbreitungspfad (D1) angeordneten ersten Empfänger (3), der einen komplexen Absorber (31) umfasst, der dazu ausgestaltet ist, das Photon (P1) in einem Polarisationszustand zu absorbieren, der unter den Zuständen von mindestens zwei verschiedenen Paaren mit komplementären Polarisationszuständen ausgewählt ist,

  • einen zweiten Empfänger (4), der auf dem zweiten Ausbreitungspfad (D2) angeordnet ist, so dass er von dem zweiten Photon (P2) erreicht wird, nachdem das erste Photon (P1) den ersten Empfänger (3) erreicht hat, der zweite Empfänger umfassend:

    - einen optischen Verstärker (40), der es ermöglicht, das zweite Photon (P2) unter Beibehaltung seiner Polarisation zu verstärken, und

    - ein dem Verstärker (40) nachgelagert angeordnetes Messinstrument (45), das es ermöglicht, die durchschnittliche Polarisation der verstärkten Photonen zu messen, wobei der komplexe Absorber (31) bevorzugt dazu ausgestaltet ist, das Photon (P1) in einem vorbestimmten Polarisationszustand zu absorbieren, der unter den Zuständen von mindestens drei verschiedenen Paaren mit komplementären Polarisationen ausgewählt ist, wobei der komplexe Absorber (31) insbesondere umfasst:

- mindestens ein Instrument (35), das es ermöglicht, das Photon in dem einen oder dem anderen von zwei komplementären Polarisationszuständen zu absorbieren,
- einen Polarisationsmodifikator (32), der dem Instrument (35) vorgelagert angeordnet ist und dazu ausgestaltet ist, die Polarisation des ersten Photons (P1) in die ausgewählte Polarisation umzuwandeln, gemäß der das Instrument (35) die Photonen absorbiert.

11. System nach dem vorhergehenden Anspruch, wobei der Polarisationsmodifikator (32) einen Polarisationsrichtungsmodifikator (32a) umfasst, der einem Polarisationsphasenmodifikator (32b) vorgelagert angeordnet ist,
wobei im Besonderen der Polarisationsrichtungsmodifikator (32a) zwei auf dem Ausbreitungspfad (D1) des ersten Photons (P1) hintereinander angeordnete Viertelwellenplättchen umfasst, wobei die Ausrichtung mindestens eines der beiden Plättchen variabel ist, oder wobei der Polarisationsrichtungsmodifikator (32a) ein Plättchen oder ein Prisma aus chiralem oder rotierendem Material umfasst, das eine Rotation der Polarisation um einen Winkel bewirkt, der von dem Ort abhängt, an dem die Welle in das chirale oder rotierende Material eindringt.

12. System nach dem vorhergehenden Anspruch, wobei der Polarisationsphasenmodifikator (32b) ein erstes Plättchen oder ein erstes doppeltbrechendes Prisma umfasst, welches den Strahl in zwei elektromagnetische Wellen mit linearer Polarisation teilt, die eine entlang einer ersten Achse und die andere entlang einer zweiten Achse, und ein Verzögerungsplättchen mit variablem Brechungsindex, das auf der zweiten Achse angeordnet ist.

13. System nach einem der Ansprüche 10 bis 12, wobei das mindestens eine Instrument (35) mindestens ein Filter umfasst, das es ermöglicht, das erste Photon je nach dem Polarisationszustand des ersten Photons zu dem einen oder dem anderen der beiden Photonendetektoren zu leiten.

14. System nach einem der Ansprüche 10 bis 13, wobei das Messinstrument (45) des zweiten Empfängers (4) mindestens einen Photonendetektor (455) umfasst, der dazu eingerichtet ist, die Polarisation des aus der Vervielfachung des zweiten Photons (P2) hervorgegangenen Lichts zu messen, und/oder wobei das Messinstrument (45) des zweiten Empfängers (4) eine Folge von halbreflektierenden Plättchen (452) umfasst, die dem optischen Verstärker (40) nachgelagert angeordnet sind, wobei die Plättchen (452) den Strom verstärkter Photonen mit einer gleichen Intensität zu einem ersten Phasenmessinstrument führen, wobei dieses ein Polarisationsmessinstrument ist, das dazu eingerichtet ist, die Intensität des Stroms entlang von zwei senkrechten Achsen zu messen, wobei ein zweites Phasenmessinstrument die Phasenverschiebung des Lichts zwischen eben diesen beiden Achsen misst, und wobei ein drittes Phasenmessinstrument die Phasenverschiebung des Lichts zwischen der Winkelhalbierenden derselben Achsen und einer zu dieser Winkelhalbierenden senkrechten Achse misst, wobei das erste halbreflektierende Plättchen zum Beispiel ein Drittel des Lichtstroms zu dem ersten Phasenmessinstrument umleitet, wobei das zweite halbreflektierende Plättchen zum Beispiel die Hälfte seines eintretenden Lichtstroms zu dem zweiten Phasenmessinstrument umleitet und die verbleibende Hälfte seines eintretenden Lichtstroms zu dem dritten Phasenmessinstrument umleitet.

15. System nach einem der Ansprüche 10 bis 14, wobei der optische Verstärker (40) ein Verstärker mit dotierter Faser ist, und/oder

wobei der Sender (2) dazu ausgestaltet ist, nacheinander eine Mehrzahl von Paaren verschränkter Photonen (P1; P2) zu erzeugen, und/oder
wobei der Sender (2) und jeder der Empfänger (3; 4) einen Taktgeber umfassen, wobei die Taktgeber des Senders (2) und der Empfänger (3; 4) untereinander synchronisiert sind, und/oder
wobei der zweite Empfänger (4) einen Umschalter (50) umfasst, der vor dem optischen Verstärker (40) angeordnet ist und dazu ausgestaltet ist, das oder die Photonen, die auf ein erstes Photon, das den zweiten Empfänger (4) erreicht, in einem vorbestimmten Zeitintervall folgen, zu absorbieren oder zu reflektieren, und/oder
wobei es einen zweiten Sender umfasst, der in der Lage ist, ein oder mehrere Paare verschränkter Photonen zu erzeugen, wobei der zweite Sender näher bei dem zweiten Empfänger (4) als bei dem ersten Empfänger (3) gelegen ist.

**Claims**

1. Method of transmitting a message M by quantum communication from a first receiver (3) to a second receiver (4) with eavesdropping detection, the transmission and detection method comprising the steps of:

(A) generating a series of $N_p$ pairs of entangled photons (P1; P2) from an emitter (2), the first photon (P1) of each pair being emitted toward the first receiver (3) on a first propagation path (D1) and the second photon (P2) of the pair being emitted simultaneously toward the second receiver (4) on a second propagation path (D2), the first and second photons (P1; P2) being entangled, the second receiver (4) being located on the propagation path of the second photon (P2) further away from the emitter (2) than the first receiver (3), such that the second photon (P2) arrives at the second receiver (4) after an additional travel time $t_{tra}$,

(B) converting the message M into a series of $N_i$ pieces of information I to be transmitted in a first predetermined numbering base,

(C) at the first receiver (3), for each piece of information I:

> (a) for each entangled photon (P1), modifying the polarization state of the first photon (P1) when it reaches the first receiver (3) into a polarization state dependent on the information I to be transmitted, the polarization state being selected from among at least two different pairs of complementary absorption polarizations, and
>
> (b) by using an absorption instrument (31), absorbing the first photon (P1) in one of the two complementary polarizations of the selected pair,

(D) at the second receiver (4):

> (a) duplicating each received photon (P2) to form a flux of multiplied photons by using an amplification device (40), the light that is created having preserved the polarization state of the photon,
>
> (b) measuring, for each photon duplicated, the average polarization state of the light flux, and
>
> (c) determining according to this measurement the polarization state of the first entangled photon (P1) received by the first receiver (3), in order to deduce therefrom the information I that may have been transmitted by the first receiver (3),
>
> (d) adding an element comprising the reception time of the second entangled photon and the determined polarization state of the first entangled photon, which may have transmitted the information I, to a deduction list, the deduction list being a list comprising the reception times of the second entangled photons and the determined polarization states of the first entangled photons that may have transmitted the information I,

(E) performing an eavesdropping detection method,

(F) deducting from the deduction list the transmitted message M,

the eavesdropping detection method performed at step (E) comprising a shared quantum key generation method comprising the following steps:

(G) the first receiver (3) establishing a first list comprising the reception dates at the first receiver (3) and a second list comprising these reception dates and the relative polarization states of the photons (P1) absorbed by the first receiver (3), and the second receiver (4) establishing a third list comprising the reception dates at the second receiver (4) and a fourth list comprising these reception dates and the relative polarization states of the photons (P2) received by the second receiver (4),

(H) the first list and/or the third list being exchanged between the first receiver (3) and the second receiver (4),

(I) upon reception of the third list and/or the first list, respectively, the first receiver (3) and/or the second receiver (4) establishing a fifth list comprising the dates at which the first photons (P1) were received at the first receiver (3), for the pairs for which the two entangled photons (P1; P2) were received at both receivers (3; 4), as some photons may have been lost during the transmission between the emitter (2) and one or both receivers (3; 4),

(J) if only one of the two receivers (3; 4) establishes the fifth list, said fifth list being transmitted, preferably electronically signed, to the other receiver (4; 3), the first receiver (3) and the second receiver (4) establishing, respectively, a sixth list and a seventh list of relative polarization states of the photons (P1) as received by the first receiver (3), the sixth list being derived from the second list and the fifth list, the seventh list being derived from the fourth list and the fifth list, each relative polarization state on the sixth list of a photon (P1) received at the first receiver (3) at a time marked on the fifth list being the same relative polarization state as that of the corresponding photon (P1) received at the same time and marked on the second list, each relative polarization state on the seventh list of a photon (P1) entangled to a photon (P2) received at the second receiver (4) at a time marked on the fifth list being the complementary relative polarization state of the polarization state of the corresponding photon (P2) received at the second receiver (4) after the additional travel time $t_{tra}$ and marked on the fourth list,

(K) respective signatures of the sixth list and the seventh list being exchanged between the first and second receivers (3; 4) to be compared according to a comparison method,

(L) if the signatures of the sixth list and the seventh list are identical, the deduction list of information I is considered non-eavesdropped.

2. Method according to Claim 1, the relative polarization of a photon (P1; P2) being the polarization of the photon (P1; P2), or a bit assigned to all the possible polarizations that can be taken by the second entangled photons (P2) after the first photon (P1) has reached the first receiver (3) where 1 is said assigned bit of a photon entangled to a photon to which a 0 has been assigned.

3. Method according to Claim 1 or 2, wherein the comparison method in step (K) comprises the steps of:

   i. the first receiver (3) mixing a first secret number, shared or to be shared with the second receiver (4), called mixer number, with the sixth list, using a mixing function, in order to obtain a first mixed data,

   ii. the first receiver (3) hashing the first mixed data using a hash function,

   iii. the first receiver (3) encrypting the hashing of the first mixed data with a second secret number shared or to be shared with the second receiver (4),

   iv. the first receiver (3) sending to the second receiver (4) the encrypted hashing of the first mixed data with the second secret number,

   v. the second receiver (4) receiving the data sent by the first receiver (3) at step iv,

   vi. the second receiver (4) decrypting the received data,

   vii. the second receiver (4) mixing the first secret number with the seventh list, using a mixing function, in order to obtain a second mixed data,

   viii. the second receiver hashing the second mixed data using a hash function,

   ix. the second receiver comparing the hashing of the second mixed data with the decrypted received data.

4. Method according to the preceding claim, the first secret number being kept secret and used again or changed periodically such as each time or every day, and/or the second secret number being kept secret and used again or changed periodically such as each time or every day, and/or the first secret number being a first renewable key, renewed after each use, and/or the second secret number being a second renewable key, renewed after each use.

5. Method according to either one of Claims 3 and 4, the receivers (3; 4) sharing the secret numbers before step (K) takes place or after step (K) takes place and prior to their use, notably the receivers (3; 4) sharing the secret number by sending it to each other encrypted with a one-time key, and/or a mixer number identifier possibly being exchanged between the first receiver (3) and the second receiver (4), which are each able to find the corresponding mixer number in a memorized list of mixer numbers, and/or

   the mixing function being an XOR logic function, or a suffix function, consisting in adding the mixer number to the end of the sixth list, or an encrypting function using the mixer number as encryption key to encrypt the sixth list, or the mixing function being a combination of an XOR function, a suffix function consisting in adding the mixer number to the end of the first dataset and an encryption function using the mixer number as encryption key to encrypt the first dataset, the encrypting function being for example an XOR function,
   in particular the transmitted message M being used as an encryption key if the deduction list has been considered as not having been eavesdropped, and/or
   the encryption keys generated during the transmission and detection method and/or made of the message M being used,
   if the deduction list has been considered noneavesdropped, as first and/or second secret numbers.

6. Method according to any one of Claims 3 to 5, a signed message being exchanged after step ix. between the two receivers (3; 4) before the sixth and seventh lists are used as one-time keys, and/or the deduction list being considered as not having been eavesdropped if the two data compared at step ix. are equal.

7. Method according to any one of the preceding claims, the lists established at step (G) being established for the transmission of a single piece of information I or established using photons (P1) transmitted for the transmission of a series of multiple pieces of information I, and/or the second propagation path (D2) being physically protected against eavesdropping, at least for a portion (Ltot) of the second propagation path (D2) ending at the second receiver (4), where the photons (P2) travel from the emitter (2) after their entangled photons (P1) have been received by the first receiver (3), the portion (Ltot) being preferably long enough so that the difference t between the travel time $t_{tot}$ of a photon (P2) in said portion (Ltot) and the travel time ($t_{tra}$) of the photon (P2) in the non-entangled state toward the second receiver (4) may be detected by the second receiver (4) and that this detection enables the second receiver (4) to mark any incoming message as being potentially eavesdropped by a third party, and/or two polarization rotators (80; 90) being placed ahead of the two photon receivers (3; 4) respectively, the two photon rotators modifying the direction of polarization of the photons synchronously and randomly by 45° or 0° so that a spy photon emitter may not know the polarization directions that are being measured by the receivers (3; 4).

8. Method according to any one of the preceding claims, the sixth list and the seventh list being made of bits, and potentially being used as a shared list of random bits, and/or

   the first receiver (3) coding the same information I on many successive incoming photons (P1), as some of their entangled photons (P2) may be lost before reaching the second receiver (4), and/or the first receiver (3) reserving a piece of information $I_0$ to be used to separate the sending of any other two pieces of information I, notably if these two other pieces of information I are the same, representing for instance the same letter, and/or
   the step (F), consisting in deducting from the deduction list the transmitted message M, being carried out by the first receiver (3) having coded a separation letter between any two equal successive letters of the message M, accounting for the travel time $t_{tra}$ and the fifth list, taking out of the deduction list the polarizations of photons for which the first entangled photon never reached the first receiver, to create a cleared deduction list, and the second receiver (4) deducting from the cleared deduction list the message M that was transmitted, or the second receiver (4) counting as received information any information that is recorded successively on the deduction list more than a preset number of times within a preset number of successively received pieces of information I, and/or
   the message M being considered as not having been eavesdropped if the deduction list has been considered as non-eavesdropped.

9. Method according to any one of the preceding claims, the pair of complementary absorption polarizations being selected from among at least three different pairs of complementary absorption polarizations, notably from among at least 210 distinct pairs of complementary absorption polarizations, and/or
a plurality of pairs of entangled photons (P1; P2) being generated successively by the emitter (2), each pair of photons making it possible to transmit a piece of information I from the first receiver (3) to the second receiver (4).

10. Quantum communication system (1) implementing the method described in any one of the preceding claims, comprising:

   • an emitter (2) of entangled photons (P1; P2), comprising a source configured in order to generate at least one pair of entangled photons comprising a first photon (P1) emitted on a first propagation path (D1) and simultaneously a second photon (P2) emitted on a second propagation path (D2) different from the first propagation path (D1),
   • a first receiver (3) arranged on the first propagation path (D1), comprising a complex absorber (31) configured to absorb the photon (P1) in a polarization state selected from among the states of at least two different pairs of complementary polarization states,
   • a second receiver (4) arranged on the second propagation path (D2) so as to be reached by the second photon (P2) after the first photon (P1) has reached the first receiver (3), said second receiver comprising:

      - an optical amplifier (40) to multiply the second photon (P2) while preserving its polarization, and
      - arranged downstream of the amplifier (40), a measuring instrument (45) to measure the average polarization of the multiplied photons, the complex absorber (31) preferably being configured to absorb the photon (P1) in a predetermined polarization state selected from among the states of at least three different pairs of complementary polarizations, the complex absorber (31) notably comprising:

         - at least one instrument (35) to absorb the photon in one or the other of two complementary polarization states,
         - a polarization modifier (32) which is arranged upstream of said instrument (35) and is configured to convert the polarization of the first photon (P1) to the selected polarization along which said instrument (35) absorbs the photons.

11. System according to the preceding claim, the polarization modifier (32) comprising a polarization direction modifier (32a) arranged upstream of a polarization phase modifier (32b),
the polarization direction modifier (32a) in particular comprising two quarter-wave plates arranged one after the other on the propagation path (D1) of the first photon (P1), the orientation of at least one of the two plates being variable, or the polarization direction modifier (32a) comprising a plate or a prism made of chiral or rotating material inducing rotation of the polarization by an angle dependent on the location through which the wave enters said chiral or rotating material.

12. System according to the preceding claim, the polarization phase modifier (32b) comprising a birefringent first plate or prism splitting the beam into two electromagnetic waves with a linear polarization, one along a first axis and the other along a second axis, and a retardation plate with a variable refractive index arranged on the second axis.

13. System according to any one of Claims 10 to 12, said at least one instrument (35) comprising at least one filter to send the first photon toward one or the other of two photon detectors according to the polarization state of the first photon.

14. System according to any one of Claims 10 to 13, the measuring instrument (45) of the second receiver (4) comprising at least one photon detector (455) arranged to measure the polarization of the light originating from the multiplication of the second photon (P2) and/or the measuring instrument (45) of the second receiver (4) comprising a succession of semi-reflective plates (452) arranged downstream of the optical amplifier (40), said plates (452) directing the flux of multiplied photons with an equal intensity toward a first phase measurement instrument, this being a polarization measuring instruments arranged in order to measure the intensity of the flux along two perpendicular axes, a second phase measurement instrument measuring the phase shift of the light between these two same axes, and a third phase measurement instrument measuring the phase shift of the light between the bisector of the same axes and an axis perpendicular to that bisector, the first semi-reflective plate diverting for example a third of the light flux toward the first phase measurement instrument, the second semi-reflective plate diverting for example half of its incoming light flux toward the second phase measurement instrument and the remaining half of its incoming light flux toward the third phase measurement instrument.

15. System according to any one of Claims 10 to 14, the optical amplifier (40) being a doped-fibre amplifier, and/or

the emitter (2) being configured to successively generate a plurality of pairs of entangled photons (P1; P2), and/or
the emitter (2) and each of the receivers (3; 4) comprising a clock, the clocks of the emitter (2) and of the receivers (3; 4) being synchronized with one another, and/or
the second receiver (4) comprising a switch (50) arranged in front of the optical amplifier (40) and configured to absorb or reflect the photon or photons subsequent to a first photon reaching said second receiver (4) in a predetermined time interval, and/or
comprising a second emitter capable of generating one or more pairs of entangled photons, the second emitter being located closer to the second receiver (4) than to the first receiver (3).

[Fig 1A]

**FIG.1A**

[Fig 1B]

**FIG.1B**

[Fig 2A]

FIG.2A

[Fig 2B]

FIG.2B

[Fig 3]

FIG.3

[Fig 4A]

**FIG.4A**

[Fig 4B]

**FIG.4B**

[Fig 4C]

30

# FIG.4C

330

P1

345

D3

325

F

35

D1'

335

340

[Fig 5A]

# FIG.5A

523

521

511

560

520

558

522

[Fig 5B]

FIG.5B

[Fig 5C]

FIG.5C

[Fig 6]

32b

310    322    321    310    **FIG.6**

E    E2    E'
P1    E1    P1

322

[Fig 7]

35

P1    350

FIG.7    P1    H    355

D1

[Fig 8]

**FIG.8**

[Fig 9]

**FIG.9**

[Fig 10A]

**FIG.10A**

[Fig 10B]

**FIG.10B**

[Fig 11A]

FIG.11A

[Fig 11B]

FIG.11B

[Fig 12]

**FIG.12**

[Fig 13]

**FIG.13**

[Fig 14]

4

2

D2

PE2    PA2

**FIG.14**    50    40    45

[Fig 15]

93

P11

21    91

P12

P22

22    92

P21

94

**FIG.15**

[Fig. 16]

FIG. 16

[Fig. 17]

FIG. 17

[Fig. 18]

FIG. 18

[Fig. 19]

FIG. 19

## RÉFÉRENCES CITÉES DANS LA DESCRIPTION

**Documents brevets cités dans la description**

- CN 101547184
- US 20110246433 A
- EP 1421548 A
- KR 101003886B1
- US 20210165914 A1

**Littérature non-brevet citée dans la description**

- **SMITH**. Photon pair generation in birefringent optical fibers. *Optics Express*, 2009, vol. 17 (26)